# EUROPEAN PATENT APPLICATION

(11) **EP 4 716 291 A1**
(43) Date of publication of application: **25.03.2026**
(21) Application number: 24806533.6
(22) Date of filing: 13.05.2024
(51) Int. Cl.: H04W 28/06

(54) **INFORMATION MARKING METHOD AND COMMUNICATION DEVICE**

(30) Priority: 18.05.2023 CN 202310568178; 24.05.2023 CN 202310599383; 11.08.2023 CN 202311018797
(71) Applicant: Vivo Mobile Communication Co., Ltd., Dongguan, Guangdong 523863 (CN)
(72) Inventor: KE, Xiaowan, Dongguan, Guangdong 523863 (CN)
(74) Representative: Walaski, Jan Filip
(86) International application number: PCT/CN2024/092781
(87) International publication number: WO 2024/235181

(57) **Abstract**

Embodiments of this application provide an information marking method and a communication device. The method applied to a first communication device includes: performing, by the first communication device, a first operation; where the first operation includes at least one of the following: a first sub-operation and a second sub-operation. The first sub-operation includes: obtaining first information related to packet data unit set PDU Set information; and performing marking on a data packet with corresponding PDU Set information based on the first information related to PDU Set information. The second sub-operation includes: obtaining first information related to data burst (Data Burst) information; and based on the first information related to the Data Burst information, performing marking on a data packet with corresponding Data Burst information.

## Description

### CROSS-REFERENCE TO RELATED APPLICATIONS

This application claims priority to Chinese Patent Application No. 202310568178.5, filed on May 18th, 2023 and entitled "INFORMATION MARKING METHOD AND COMMUNICATION DEVICE", Chinese Patent Application No. 202310599383.8, filed on May 24th, 2023 and entitled "INFORMATION MARKING METHOD AND COMMUNICATION DEVICE", and Chinese Patent Application No. 202311018797.3, filed on August 11th, 2023 and entitled "INFORMATION MARKING METHOD AND COMMUNICATION DEVICE", which are incorporated herein by reference in their entirety.

### TECHNICAL FIELD

Embodiments of this application relate to the field of wireless communications technologies, and in particular, to an information marking method and a communication device.

### BACKGROUND

At present, in the protocol description (Protocol Description), all packet data unit (Packet Data Unit, PDU) set (Set) information or data burst (Data Burst) needs to be marked by default. However, in some scenarios, marked information is not required. Therefore, default marking may cause resource waste and extra bandwidth occupation. For a person skilled in the art, how to flexibly mark PDU Set information or Data Burst information, implement a marking-based function, and reduce unnecessary resource overheads is a problem that needs to be resolved in this application.

### SUMMARY

Embodiments of this application provide an information marking method and a communication device, so as to resolve the problems of information marking and a marked information-based operation.

According to a first aspect, an information marking method is provided, executed by a first communication device, where the method includes:
performing, by a first communication device, a first operation; where
the first operation includes at least one of the following:
   sending tenth information, where the tenth information is used for indicating at least one of the following: the first communication device supports or does not support a PDU Set information-based operation, and the first communication device supports or does not support PDU Set information;
   sending eleventh information, where the eleventh information is used for indicating at least one of the following: the first communication device supports or does not support a Data Burst information-based operation, and the first communication device supports or does not support Data Burst information;
   a first sub-operation;
   a second sub-operation;
   a third sub-operation; and
   a fourth sub-operation.

The first sub-operation includes:
obtaining first information related to packet data unit set PDU Set information, where the first information related to PDU Set information includes at least one of the following: information for requesting to perform a PDU Set information-related operation; and fourth information supported by a first object, where the fourth information is information used for determining PDU Set information; and
performing marking on a data packet with corresponding PDU Set information based on the first information related to PDU Set information.

The second sub-operation includes:
obtaining first information related to data burst (Data Burst) information, where the first information related to the Data Burst information includes at least one of the following: fifth information supported by the first object, information for requesting to perform a Data Burst information-related operation; and fifth information supported by the first object, where the fifth information is information for determining a Data Burst; and
based on the first information related to the Data Burst information, performing marking on a data packet with corresponding Data Burst information.

The third sub-operation includes:
obtaining third information related to PDU Set information, where the third information related to PDU Set information is used for requesting at least one of the following: not marking a data packet with PDU Set information corresponding to a PDU Set to which the data packet belongs; not applying PDU Set information; not applying a PDU Set information-based operation; and not performing a PDU Set information-related operation; and
based on the third information related to PDU Set information, performing no marking on a data packet with corresponding PDU Set information, or not performing a PDU Set information-related operation.

The fourth sub-operation includes:
obtaining third information related to Data Burst information, where the third information related to Data Burst information is used for requesting at least one of the following: not marking Data Burst information corresponding to a Data Burst to which a data packet belongs; not applying Data Burst information; not applying a Data Burst information-based operation; and not performing a Data Burst information-related operation; and
based on the third information related to Data Burst information, performing no marking on a data packet with corresponding Data Burst information, or not performing a Data Burst information-related operation;
where
the first object includes at least one of the following: a first traffic flow, a first protocol, a first application, a first packet header, and a first QoS flow.

According to a second aspect, an information marking method is provided, executed by a second communication device, where the method includes:
performing, by a second communication device, a second operation, where the second operation includes at least one of the following:
sending sixth information, where the sixth information is used for indicating at least one of the following: the second communication device supports or does not support a PDU Set information-based operation, the second communication device supports or does not support PDU Set information, and the second communication device supports or does not support a PDU Set-based operation;
sending seventh information, where the seventh information is used for indicating at least one of the following: the second communication device supports or does not support a Data Burst information-based operation, and the second communication device supports or does not support Data Burst information;
sending eighth information;
sending ninth information;
obtaining third information, where the third information includes at least one of the following: second information related to PDU Set information and second information related to Data Burst information; and
performing a second operation based on the third information, including at least one of the following:
   accepting or rejecting the second information related to PDU Set information;
   sending eighth information;
   PDU Set information-based operation;
   PDU Set-based operation;
   accepting or rejecting the second information related to Data Burst information;
   sending ninth information;
   Data Burst information-based operation; and
   Data Burst-based operation;
   where
   the eighth information is used for indicating one of the following: PDU Set information-based operation having been enabled for a first QoS flow, accepting a requirement of applying PDU Set information to the first QoS flow, accepting a requirement of applying a PDU Set information-based operation to the first QoS flow, PDU Set information-based operation having not been enabled for the first QoS flow, rejecting a requirement of applying PDU Set information to the first QoS flow, rejecting a requirement of applying a PDU Set information-based operation to the first QoS flow, accepting performing a PDU Set-based operation on the first QoS flow, rejecting performing a PDU Set-based operation on the first QoS flow, accepting the second information related to PDU Set information, and rejecting the second information related to PDU Set information; and
   the ninth information is used for indicating one of the following: Data Burst information-based operation having been enabled for the first QoS flow, accepting a requirement of applying Data Burst information to the first QoS flow, accepting a requirement of applying a Data Burst information-based operation to the first QoS flow, Data Burst information-based operation having not been enabled for the first QoS flow, rejecting a requirement of applying Data Burst information to the first QoS flow, rejecting a requirement of applying a Data Burst information-based operation to the first QoS flow, accepting performing a Data Burst-based operation on the first QoS flow, rejecting performing a Data Burst-based operation on the first QoS flow, accepting the second information related to Data Burst information, and rejecting the second information related to Data Burst information.

The second information related to PDU Set information is used for at least one of the following:
requiring applying PDU Set information;
requiring applying a PDU Set information-based operation;
performing a PDU Set-based operation; and
indicating that a second packet header of a data packet includes PDU Set information.

The second information related to Data Burst information is used for at least one of the following:
requiring applying Data Burst information;
requiring applying a Data Burst information-based operation;
Data Burst-based operation; and
indicating that the second packet header of the data packet includes Data Burst information.

According to a third aspect, an information marking method is provided, executed by a third communication device, where the method includes:
performing, by a third communication device, a third operation, where the third operation includes at least one of the following:
obtaining at least one of the following: a first requirement, a second requirement, a third requirement, a fourth requirement, a local configuration of the third communication device, fourth information supported by a first object, fifth information supported by the first object, sixth information, seventh information, eighth information, ninth information, tenth information, and eleventh information;
sending at least one of the following to a fourth communication device: the sixth information, the seventh information, the eighth information, the ninth information, the tenth information, and the eleventh information;
based on at least one of the first requirement, the third requirement, the fourth information supported by the first object, the local configuration of the third communication device, the sixth information, the eighth information, and the tenth information, determining and/or sending at least one of the following: first information related to PDU Set information, second information related to PDU Set information, third information related to PDU Set information, and fourth information supported by the first object;
based on at least one of the second requirement, the fourth requirement, the fifth information supported by the first object, the local configuration of the third communication device, the seventh information, the ninth information, and the eleventh information, determining and/or sending at least one of the following: first information related to Data Burst information, second information related to Data Burst information, third information related to Data Burst information, and the fifth information supported by the first object;
sending at least one of the following to a first communication device: the first information related to PDU Set information, the third information related to PDU Set information, the first information related to Data Burst information, the third information related to Data Burst information, the fourth information supported by the first object, and the fifth information supported by the first object; and
sending at least one of the following to a second communication device: the second information related to PDU Set information, and the second information related to Data Burst information;
where
the fourth information is information used for determining PDU Set information;
the fifth information is information used for determining Data Burst information;
the sixth information is used for indicating at least one of the following: the second communication device supports or does not support a PDU Set information-based operation, the second communication device supports or does not support PDU Set information, and the second communication device supports or does not support a PDU Set-based operation;
the seventh information is used for indicating at least one of the following: the second communication device supports or does not support a Data Burst information-based operation, and the second communication device supports or does not support Data Burst information;
the eighth information is used for indicating one of the following: PDU Set information-based operation having been enabled for a first QoS flow, accepting a requirement of applying PDU Set information to the first QoS flow, accepting a requirement of applying a PDU Set information-based operation to the first QoS flow, PDU Set information-based operation having not been enabled for the first QoS flow, rejecting a requirement of applying PDU Set information to the first QoS flow, rejecting a requirement of applying a PDU Set information-based operation to the first QoS flow, accepting performing a PDU Set-based operation on the first QoS flow, rejecting performing a PDU Set-based operation on the first QoS flow, accepting the second information related to PDU Set information, and rejecting the second information related to PDU Set information;
the ninth information is used for indicating one of the following: Data Burst information-based operation having been enabled for the first QoS flow, accepting a requirement of applying Data Burst information to the first QoS flow, accepting a requirement of applying a Data Burst information-based operation to the first QoS flow, Data Burst information-based operation having not been enabled for the first QoS flow, rejecting a requirement of applying Data Burst information to the first QoS flow, rejecting a requirement of applying a Data Burst information-based operation to the first QoS flow, accepting performing a Data Burst-based operation on the first QoS flow, rejecting performing a Data Burst-based operation on the first QoS flow, accepting the second information related to Data Burst information, and rejecting the second information related to Data Burst information;
the tenth information is used for indicating at least one of the following: the first communication device supports or does not support a PDU Set information-based operation, the first communication device supports or does not support PDU Set information, and the first communication device supports or does not support a PDU Set-based operation; and
the eleventh information is used for indicating at least one of the following: the first communication device supports or does not support a Data Burst information-based operation, the first communication device supports or does not support Data Burst information, and the first communication device supports or does not support a Data Burst-based operation; where
the first object includes at least one of the following: a first traffic flow, a first protocol, a first application, a first packet header, and a first QoS flow.

The first requirement is used to require at least one of the following:
marking a data packet with PDU Set information that is corresponding to a PDU Set to which the data packet belongs;
marking a second packet header of a data packet with PDU Set information based on information for determining the PDU Set information in a first packet header of the data packet;
applying PDU Set information;
the PDU Set-based operation; and applying a PDU Set information-based operation.

The second requirement is used to require at least one of the following:
marking a data packet with Data Burst information that is corresponding to a Data Burst to which the data packet belongs;
marking a second packet header of a data packet with a Data Burst end indicator based on information for determining the Data Burst end indicator in a first packet header of the data packet;
marking a second packet header of a data packet with Data Burst information based on information for determining the Data Burst information in a first packet header of the data packet (optionally, the Data Burst information may not include a Data Burst end indicator);
applying Data Burst information; and
applying a Data Burst information-based operation;
the third requirement is used to require at least one of the following:
   marking a data packet with PDU Set information that is corresponding to a PDU Set to which the data packet belongs;
   marking a second packet header of a data packet with PDU Set information based on information for determining the PDU Set information in a first packet header of the data packet;
   the fourth requirement is used to require at least one of the following:
      marking a data packet with Data Burst information that is corresponding to a Data Burst to which the data packet belongs; and
      marking a second packet header of a data packet with Data Burst information based on information for determining the Data Burst information in a first packet header of the data packet;
      where
      the first information related to PDU Set information is used for requesting at least one of the following:
         marking a data packet with PDU Set information that is corresponding to a PDU Set to which the data packet belongs;
         marking a second packet header of a data packet with PDU Set information based on information for determining the PDU Set information in a first packet header of the data packet;
         applying PDU Set information;
         PDU Set-based operation; and
         applying a PDU Set information-based operation.

The third information related to PDU Set information is used to request at least one of the following:
not marking a data packet with PDU Set information that is corresponding to a PDU Set to which the data packet belongs;
not applying PDU Set information; and
not applying a PDU Set information-based operation.

The second information related to PDU Set information is used for at least one of the following:
requiring applying PDU Set information;
requiring applying a PDU Set information-based operation; and
indicating that a second packet header of a data packet includes PDU Set information;
where
the first information related to Data Burst information is used for requesting at least one of the following:
   marking a data packet with Data Burst information that is corresponding to a Data Burst to which the data packet belongs;
   marking a second packet header of a data packet with a Data Burst end indicator based on information for determining the Data Burst end indicator in a first packet header of the data packet;
   applying Data Burst information; and
   applying a Data Burst information-based operation;
   where
   the third information related to Data Burst information is used for requesting at least one of the following:
      not marking a data packet with Data Burst information that is corresponding to a Data Burst to which the data packet belongs;
      not applying Data Burst information; and
      not applying a Data Burst information-based operation.

The second information related to Data Burst information is used for at least one of the following:
requiring applying Data Burst information;
requiring applying a Data Burst information-based operation; and
indicating that the second packet header of the data packet includes Data Burst information.

According to a fourth aspect, an information marking method is provided, executed by a fourth communication device, where the method includes:
performing, by a fourth communication device, a fourth operation, where the fourth operation includes at least one of the following:
obtaining at least one of the following: a first request, a second request, a local configuration of the fourth communication device, fourth information supported by a first object, fifth information supported by the first object, sixth information, seventh information, eighth information, and ninth information;
based on at least one of the first request, the fourth information supported by the first object, the local configuration of the fourth communication device, the sixth information, and the eighth information, determining and/or sending at least one of the following: a first requirement, and the fourth information supported by the first object; and
based on at least one of the second request, the fifth information supported by the first object, the local configuration of the fourth communication device, the seventh information, and the ninth information, determining and/or sending at least one of the following: a second requirement, and the fifth information supported by the first object.

The fourth information is information used for determining PDU Set information; and the fifth information is information used for determining Data Burst information;
the sixth information is used for indicating at least one of the following: a second communication device supports or does not support a PDU Set information-based operation, and the second communication device supports or does not support PDU Set information;
the seventh information is used for indicating at least one of the following: the second communication device supports or does not support a Data Burst information-based operation, and the second communication device supports or does not support Data Burst information; and
the first object includes at least one of the following: a first traffic flow, a first protocol, a first application, a first packet header, and a first QoS flow.

The first request is used to request at least one of the following:
monitoring PDU Set information corresponding to a data packet;
marking a data packet with PDU Set information that is corresponding to a PDU Set to which the data packet belongs;
marking a second packet header of a data packet with PDU Set information based on information for determining the PDU Set information in a first packet header of the data packet;
applying PDU Set information;
applying a PDU Set information-based operation; and
performing a PDU Set-based operation.

The first requirement is used to require at least one of the following:
monitoring PDU Set information corresponding to a data packet;
marking a data packet with PDU Set information that is corresponding to a PDU Set to which the data packet belongs;
marking a second packet header of a data packet with PDU Set information based on information for determining the PDU Set information in a first packet header of the data packet;
applying PDU Set information;
applying a PDU Set information-based operation; and
performing a PDU Set-based operation.

A third requirement is used to require at least one of the following:
marking a data packet with PDU Set information that is corresponding to a PDU Set to which the data packet belongs; and
marking a second packet header of a data packet with PDU Set information based on information for determining the PDU Set information in a first packet header of the data packet.

The second request is used for requesting at least one of the following:
monitoring Data burst information corresponding to a data packet;
marking a data packet with Data Burst information that is corresponding to a Data Burst to which the data packet belongs;
marking a second packet header of a data packet with a Data Burst end indicator based on information for determining the Data Burst end indicator in a first packet header of the data packet;
applying Data Burst information;
applying a Data Burst information-based operation;
performing a Data Burst-based operation; and
performing a terminal power-saving operation.

The second requirement is used to require at least one of the following:
monitoring Data burst information corresponding to a data packet;
marking a data packet with Data Burst information that is corresponding to a Data Burst to which the data packet belongs;
marking a second packet header of a data packet with a Data Burst end indicator based on information for determining the Data Burst end indicator in a first packet header of the data packet;
marking a second packet header of a data packet with Data Burst information based on information for determining the Data Burst information in a first packet header of the data packet;
applying Data Burst information;
applying a Data Burst information-based operation;
performing a Data Burst information-based operation; and
performing a terminal power-saving operation.

A fourth requirement is used to require at least one of the following:
marking a data packet with Data Burst information that is corresponding to a Data Burst to which the data packet belongs; and
marking a second packet header of a data packet with Data Burst information based on information for determining the Data Burst information in a first packet header of the data packet.

According to a fifth aspect, an information marking method is provided, executed by a fifth communication device, where the method includes:
performing, by a fifth communication device, a fifth operation, where the fifth operation includes at least one of the following:
sending at least one of the following: a first request, a second request, protocol description information, fourth information supported by a first object, and fifth information supported by the first object; where the fourth information is information used for determining PDU Set information, and the fifth information is information for determining a Data Burst;
where
the first object includes at least one of the following: a first traffic flow, a first protocol, a first application, a first packet header, and a first QoS flow.

The first request is used to request at least one of the following:
monitoring PDU Set information corresponding to a data packet;
marking a data packet with PDU Set information that is corresponding to a PDU Set to which the data packet belongs;
marking a second packet header of a data packet with PDU Set information based on information for determining the PDU Set information in a first packet header of the data packet;
applying PDU Set information;
applying a PDU Set information-based operation; and
performing a PDU Set-based operation.

The second request is used to request at least one of the following:
monitoring Data burst information corresponding to a data packet;
marking a data packet with Data Burst information that is corresponding to a Data Burst to which the data packet belongs;
marking a second packet header of a data packet with a Data Burst end indicator based on information for determining the Data Burst end indicator in a first packet header of the data packet;
applying Data Burst information;
applying a Data Burst information-based operation;
performing a Data Burst-based operation; and
performing a terminal power-saving operation.

According to a sixth aspect, an information marking apparatus is provided, applied to a first communication device, and the apparatus includes:
a processing module, configured to perform a first operation; where
the first operation includes at least one of the following:
   sending tenth information, where the tenth information is used for indicating at least one of the following: the first communication device supports or does not support a PDU Set information-based operation, and the first communication device supports or does not support PDU Set information;
   sending eleventh information, where the eleventh information is used for indicating at least one of the following: the first communication device supports or does not support a Data Burst information-based operation, and the first communication device supports or does not support Data Burst information;
   a first sub-operation;
   a second sub-operation;
   a third sub-operation; and
   a fourth sub-operation;
   where
   the first sub-operation includes:
      obtaining first information related to packet data unit set PDU Set information, where the first information related to PDU Set information includes at least one of the following: information for requesting to perform a PDU Set information-related operation; and fourth information supported by a first object, where the fourth information is information used for determining PDU Set information; and
      performing marking on a data packet with corresponding PDU Set information based on the first information related to PDU Set information.

The second sub-operation includes:
obtaining first information related to data burst (Data Burst) information, where the first information related to the Data Burst information includes at least one of the following: fifth information supported by the first object, information for requesting to perform a Data Burst information-related operation; and fifth information supported by the first object, where the fifth information is information for determining a Data Burst; and
based on the first information related to the Data Burst information, performing marking on a data packet with corresponding Data Burst information.

The third sub-operation includes:
obtaining third information related to PDU Set information, where the third information related to PDU Set information is used for requesting at least one of the following: not marking a data packet with PDU Set information corresponding to a PDU Set to which the data packet belongs; not applying PDU Set information; not applying a PDU Set information-based operation; and not performing a PDU Set information-related operation; and
based on the third information related to PDU Set information, performing no marking on a data packet with corresponding PDU Set information, or not performing a PDU Set information-related operation.

The fourth sub-operation includes:
obtaining third information related to Data Burst information, where the third information related to Data Burst information is used for requesting at least one of the following: not marking Data Burst information corresponding to a Data Burst to which a data packet belongs; not applying Data Burst information; not applying a Data Burst information-based operation; and not performing a Data Burst information-related operation; and
based on the third information related to Data Burst information, performing no marking on a data packet with corresponding Data Burst information, or not performing a Data Burst information-related operation;
where
the first object includes at least one of the following: a first traffic flow, a first protocol, a first application, a first packet header, and a first QoS flow.

According to a seventh aspect, an information marking apparatus is provided, applied to a second communication device, and the apparatus includes:
a processing module, configured to perform a second operation, where the second operation includes at least one of the following:
sending sixth information, where the sixth information is used for indicating at least one of the following: the second communication device supports or does not support a PDU Set information-based operation, the second communication device supports or does not support PDU Set information, and the second communication device supports or does not support a PDU Set-based operation;
sending seventh information, where the seventh information is used for indicating at least one of the following: the second communication device supports or does not support a Data Burst information-based operation, and the second communication device supports or does not support Data Burst information;
sending eighth information;
sending ninth information;
obtaining third information, where the third information includes at least one of the following: second information related to PDU Set information and second information related to Data Burst information; and
performing a second operation based on the third information, including at least one of the following:
   accepting or rejecting the second information related to PDU Set information;
   sending eighth information;
   PDU Set information-based operation;
   PDU Set-based operation;
   accepting or rejecting the second information related to Data Burst information;
   sending ninth information;
   Data Burst information-based operation; and
   Data Burst-based operation;
   where
   the eighth information is used for indicating one of the following: PDU Set information-based operation having been enabled for a first QoS flow, accepting a requirement of applying PDU Set information to the first QoS flow, accepting a requirement of applying a PDU Set information-based operation to the first QoS flow, PDU Set information-based operation having not been enabled for the first QoS flow, rejecting a requirement of applying PDU Set information to the first QoS flow, rejecting a requirement of applying a PDU Set information-based operation to the first QoS flow, accepting performing a PDU Set-based operation on the first QoS flow, rejecting performing a PDU Set-based operation on the first QoS flow, accepting the second information related to PDU Set information, and rejecting the second information related to PDU Set information; and
   the ninth information is used for indicating one of the following: Data Burst information-based operation having been enabled for the first QoS flow, accepting a requirement of applying Data Burst information to the first QoS flow, accepting a requirement of applying a Data Burst information-based operation to the first QoS flow, Data Burst information-based operation having not been enabled for the first QoS flow, rejecting a requirement of applying Data Burst information to the first QoS flow, rejecting a requirement of applying a Data Burst information-based operation to the first QoS flow, accepting performing a Data Burst-based operation on the first QoS flow, rejecting performing a Data Burst-based operation on the first QoS flow, accepting the second information related to Data Burst information, and rejecting the second information related to Data Burst information.

The second information related to PDU Set information is used for at least one of the following:
requiring applying PDU Set information;
requiring applying a PDU Set information-based operation;
performing a PDU Set-based operation; and
indicating that a second packet header of a data packet includes PDU Set information;
where
the second information related to Data Burst information is used for at least one of the following:
   requiring applying Data Burst information;
   requiring applying a Data Burst information-based operation;
   Data Burst-based operation; and
   indicating that the second packet header of the data packet includes Data Burst information.

According to an eighth aspect, an information marking apparatus is provided, applied to a third communication device, and the apparatus includes:
a processing module, configured to perform a third operation, where the third operation includes at least one of the following:
obtaining at least one of the following: a first requirement, a second requirement, a third requirement, a fourth requirement, a local configuration of the third communication device, fourth information supported by a first object, fifth information supported by the first object, sixth information, seventh information, eighth information, ninth information, tenth information, and eleventh information;
sending at least one of the following to a fourth communication device: the sixth information, the seventh information, the eighth information, the ninth information, the tenth information, and the eleventh information;
based on at least one of the first requirement, the third requirement, the fourth information supported by the first object, the local configuration of the third communication device, the sixth information, the eighth information, and the tenth information, determining and/or sending at least one of the following: first information related to PDU Set information, second information related to PDU Set information, third information related to PDU Set information, and fourth information supported by the first object;
based on at least one of the second requirement, the fourth requirement, the fifth information supported by the first object, the local configuration of the third communication device, the seventh information, the ninth information, and the eleventh information, determining and/or sending at least one of the following: first information related to Data Burst information, second information related to Data Burst information, third information related to Data Burst information, and the fifth information supported by the first object;
sending at least one of the following to a first communication device: the first information related to PDU Set information, the third information related to PDU Set information, the first information related to Data Burst information, the third information related to Data Burst information, the fourth information supported by the first object, and the fifth information supported by the first object; and
sending at least one of the following to a second communication device: the second information related to PDU Set information, and the second information related to Data Burst information;
where
the fourth information is information used for determining PDU Set information;
the fifth information is information used for determining Data Burst information;
the sixth information is used for indicating at least one of the following: the second communication device supports or does not support a PDU Set information-based operation, the second communication device supports or does not support PDU Set information, and the second communication device supports or does not support a PDU Set-based operation;
the seventh information is used for indicating at least one of the following: the second communication device supports or does not support a Data Burst information-based operation, and the second communication device supports or does not support Data Burst information;
the eighth information is used for indicating one of the following: PDU Set information-based operation having been enabled for a first QoS flow, accepting a requirement of applying PDU Set information to the first QoS flow, accepting a requirement of applying a PDU Set information-based operation to the first QoS flow, PDU Set information-based operation having not been enabled for the first QoS flow, rejecting a requirement of applying PDU Set information to the first QoS flow, rejecting a requirement of applying a PDU Set information-based operation to the first QoS flow, accepting performing a PDU Set-based operation on the first QoS flow, rejecting performing a PDU Set-based operation on the first QoS flow, accepting the second information related to PDU Set information, and rejecting the second information related to PDU Set information;
the ninth information is used for indicating one of the following: Data Burst information-based operation having been enabled for the first QoS flow, accepting a requirement of applying Data Burst information to the first QoS flow, accepting a requirement of applying a Data Burst information-based operation to the first QoS flow, Data Burst information-based operation having not been enabled for the first QoS flow, rejecting a requirement of applying Data Burst information to the first QoS flow, rejecting a requirement of applying a Data Burst information-based operation to the first QoS flow, accepting performing a Data Burst-based operation on the first QoS flow, rejecting performing a Data Burst-based operation on the first QoS flow, accepting the second information related to Data Burst information, and rejecting the second information related to Data Burst information;
the tenth information is used for indicating at least one of the following: the first communication device supports or does not support a PDU Set information-based operation, the first communication device supports or does not support PDU Set information, and the first communication device supports or does not support a PDU Set-based operation; and
the eleventh information is used for indicating at least one of the following: the first communication device supports or does not support a Data Burst information-based operation, the first communication device supports or does not support Data Burst information, and the first communication device supports or does not support a Data Burst-based operation.

The first object includes at least one of the following: a first traffic flow, a first protocol, a first application, a first packet header, and a first QoS flow.

The first requirement is used to require at least one of the following:
marking a data packet with PDU Set information that is corresponding to a PDU Set to which the data packet belongs;
marking a second packet header of a data packet with PDU Set information based on information for determining the PDU Set information in a first packet header of the data packet;
applying PDU Set information;
PDU Set-based operation; and
applying a PDU Set information-based operation;
where
the second requirement is used to require at least one of the following:
   marking a data packet with Data Burst information that is corresponding to a Data Burst to which the data packet belongs;
   marking a second packet header of a data packet with a Data Burst end indicator based on information for determining the Data Burst end indicator in a first packet header of the data packet;
   marking a second packet header of a data packet with Data Burst information based on information for determining the Data Burst information in a first packet header of the data packet (optionally, the Data Burst information may not include a Data Burst end indicator);
   applying Data Burst information; and
   applying a Data Burst information-based operation.

The third requirement is used to require at least one of the following:
marking a data packet with PDU Set information that is corresponding to a PDU Set to which the data packet belongs; and
marking a second packet header of a data packet with PDU Set information based on information for determining the PDU Set information in a first packet header of the data packet.

The fourth requirement is used to require at least one of the following:
marking a data packet with Data Burst information that is corresponding to a Data Burst to which the data packet belongs; and
marking a second packet header of a data packet with Data Burst information based on information for determining the Data Burst information in a first packet header of the data packet.

The first information related to PDU Set information is used for requesting at least one of the following:
marking a data packet with PDU Set information that is corresponding to a PDU Set to which the data packet belongs;
marking a second packet header of a data packet with PDU Set information based on information for determining the PDU Set information in a first packet header of the data packet;
applying PDU Set information;
PDU Set-based operation; and
applying a PDU Set information-based operation.

The third information related to PDU Set information is used to request at least one of the following:
not marking a data packet with PDU Set information that is corresponding to a PDU Set to which the data packet belongs;
not applying PDU Set information; and
not applying a PDU Set information-based operation;
where
the second information related to PDU Set information is used for at least one of the following:
   requiring applying PDU Set information;
   requiring applying a PDU Set information-based operation; and
   indicating that a second packet header of a data packet includes PDU Set information;
   where
   the first information related to Data Burst information is used for requesting at least one of the following:
      marking a data packet with Data Burst information that is corresponding to a Data Burst to which the data packet belongs;
      marking a second packet header of a data packet with a Data Burst end indicator based on information for determining the Data Burst end indicator in a first packet header of the data packet;
      applying Data Burst information; and
      applying a Data Burst information-based operation;
      where
      the third information related to Data Burst information is used for requesting at least one of the following:
         not marking a data packet with Data Burst information that is corresponding to a Data Burst to which the data packet belongs;
         not applying Data Burst information; and
         not applying a Data Burst information-based operation;
         where
         the second information related to Data Burst information is used for at least one of the following:
            requiring applying Data Burst information;
            requiring applying a Data Burst information-based operation; and
            indicating that the second packet header of the data packet includes Data Burst information.

According to a ninth aspect, an information marking apparatus is provided, applied to a fourth communication device, and the apparatus includes:
a processing module, configured to perform a fourth operation, where the fourth operation includes at least one of the following:
obtaining at least one of the following: a first request, a second request, a local configuration of the fourth communication device, fourth information supported by a first object, fifth information supported by the first object, sixth information, seventh information, eighth information, and ninth information;
based on at least one of the first request, the fourth information supported by the first object, the local configuration of the fourth communication device, the sixth information, and the eighth information, determining and/or sending at least one of the following: a first requirement, and the fourth information supported by the first object; and
based on at least one of the second request, the fifth information supported by the first object, the local configuration of the fourth communication device, the seventh information, and the ninth information, determining and/or sending at least one of the following: a second requirement, and the fifth information supported by the first object;
where
the fourth information is information used for determining PDU Set information;
the fifth information is information used for determining Data Burst information;
the sixth information is used for indicating at least one of the following: a second communication device supports or does not support a PDU Set information-based operation, and the second communication device supports or does not support PDU Set information;
the seventh information is used for indicating at least one of the following: the second communication device supports or does not support a Data Burst information-based operation, and the second communication device supports or does not support Data Burst information; and
the first object includes at least one of the following: a first traffic flow, a first protocol, a first application, a first packet header, and a first QoS flow.

The first request is used to request at least one of the following:
monitoring PDU Set information corresponding to a data packet;
marking a data packet with PDU Set information that is corresponding to a PDU Set to which the data packet belongs;
marking a second packet header of a data packet with PDU Set information based on information for determining the PDU Set information in a first packet header of the data packet;
applying PDU Set information;
applying a PDU Set information-based operation; and
performing a PDU Set-based operation;
where
the first requirement is used to require at least one of the following:
   monitoring PDU Set information corresponding to a data packet;
   marking a data packet with PDU Set information that is corresponding to a PDU Set to which the data packet belongs;
   marking a second packet header of a data packet with PDU Set information based on information for determining the PDU Set information in a first packet header of the data packet;
   applying PDU Set information;
   applying a PDU Set information-based operation; and
   performing a PDU Set-based operation.

A third requirement is used to require at least one of the following:
marking a data packet with PDU Set information that is corresponding to a PDU Set to which the data packet belongs; and
marking a second packet header of a data packet with PDU Set information based on information for determining the PDU Set information in a first packet header of the data packet;
where
the second request is used to request at least one of the following:
   monitoring Data burst information corresponding to a data packet;
   marking a data packet with Data Burst information that is corresponding to a Data Burst to which the data packet belongs;
   marking a second packet header of a data packet with a Data Burst end indicator based on information for determining the Data Burst end indicator in a first packet header of the data packet;
   applying Data Burst information;
   applying a Data Burst information-based operation;
   performing a Data Burst-based operation; and
   performing a terminal power-saving operation.

The second requirement is used to require at least one of the following:
monitoring Data burst information corresponding to a data packet;
marking a data packet with Data Burst information that is corresponding to a Data Burst to which the data packet belongs;
marking a second packet header of a data packet with a Data Burst end indicator based on information for determining the Data Burst end indicator in a first packet header of the data packet;
marking a second packet header of a data packet with Data Burst information based on information for determining the Data Burst information in a first packet header of the data packet;
applying Data Burst information;
applying a Data Burst information-based operation;
performing a Data Burst information-based operation; and
performing a terminal power-saving operation.

A fourth requirement is used to require at least one of the following:
marking a data packet with Data Burst information that is corresponding to a Data Burst to which the data packet belongs; and
marking a second packet header of a data packet with Data Burst information based on information for determining the Data Burst information in a first packet header of the data packet.

According to a tenth aspect, an information marking apparatus is provided, applied to a fifth communication device, and the apparatus includes:
a processing module, configured to perform a fifth operation, where the fifth operation includes at least one of the following:
sending at least one of the following: a first request, a second request, protocol description information, fourth information supported by a first object, and fifth information supported by the first object; where the fourth information is information used for determining PDU Set information, and the fifth information is information for determining a Data Burst;
where
the first object includes at least one of the following: a first traffic flow, a first protocol, a first application, a first packet header, and a first QoS flow.

The first request is used to request at least one of the following:
monitoring PDU Set information corresponding to a data packet;
marking a data packet with PDU Set information that is corresponding to a PDU Set to which the data packet belongs;
marking a second packet header of a data packet with PDU Set information based on information for determining the PDU Set information in a first packet header of the data packet;
applying PDU Set information;
applying a PDU Set information-based operation; and
performing a PDU Set-based operation.

The second request is used to request at least one of the following:
monitoring Data burst information corresponding to a data packet;
marking a data packet with Data Burst information that is corresponding to a Data Burst to which the data packet belongs;
marking a second packet header of a data packet with a Data Burst end indicator based on information for determining the Data Burst end indicator in a first packet header of the data packet;
applying Data Burst information;
applying a Data Burst information-based operation;
performing a Data Burst-based operation; and
performing a terminal power-saving operation.

According to an eleventh aspect, a first communication device is provided, where the first communication device includes a processor and a memory, where a program or instructions capable of running on the processor are stored in the memory, and when the program or the instructions are executed by the processor, the steps of the method according to the first aspect are implemented.

According to a twelfth aspect, a first communication device is provided, including a processor and a communication interface, where the processor is configured to perform a first operation; where
the first operation includes at least one of the following:
sending tenth information, where the tenth information is used for indicating at least one of the following: the first communication device supports or does not support a PDU Set information-based operation, and the first communication device supports or does not support PDU Set information;
sending eleventh information, where the eleventh information is used for indicating at least one of the following: the first communication device supports or does not support a Data Burst information-based operation, and the first communication device supports or does not support Data Burst information;
a first sub-operation;
a second sub-operation;
a third sub-operation; and
a fourth sub-operation;
where
the first sub-operation includes:
   obtaining first information related to packet data unit set PDU Set information, where the first information related to PDU Set information includes at least one of the following: information for requesting to perform a PDU Set information-related operation; and fourth information supported by a first object, where the fourth information is information used for determining PDU Set information; and
   performing marking on a data packet with corresponding PDU Set information based on the first information related to PDU Set information.

The second sub-operation includes:
obtaining first information related to data burst (Data Burst) information, where the first information related to the Data Burst information includes at least one of the following: fifth information supported by the first object, information for requesting to perform a Data Burst information-related operation; and fifth information supported by the first object, where the fifth information is information for determining a Data Burst; and
based on the first information related to the Data Burst information, performing marking on a data packet with corresponding Data Burst information.

The third sub-operation includes:
obtaining third information related to PDU Set information, where the third information related to PDU Set information is used for requesting at least one of the following: not marking a data packet with PDU Set information corresponding to a PDU Set to which the data packet belongs; not applying PDU Set information; not applying a PDU Set information-based operation; and not performing a PDU Set information-related operation; and
based on the third information related to PDU Set information, performing no marking on a data packet with corresponding PDU Set information, or not performing a PDU Set information-related operation.

The fourth sub-operation includes:
obtaining third information related to Data Burst information, where the third information related to Data Burst information is used for requesting at least one of the following: not marking Data Burst information corresponding to a Data Burst to which a data packet belongs; not applying Data Burst information; not applying a Data Burst information-based operation; and not performing a Data Burst information-related operation; and
based on the third information related to Data Burst information, performing no marking on a data packet with corresponding Data Burst information, or not performing a Data Burst information-related operation.

The first object includes at least one of the following: a first traffic flow, a first protocol, a first application, a first packet header, and a first QoS flow.

According to a thirteenth aspect, a second communication device is provided, where the second communication device includes a processor and a memory, where a program or instructions capable of running on the processor are stored in the memory, and when the program or the instructions are executed by the processor, the steps of the method according to the second aspect are implemented.

According to a fourteenth aspect, a second communication device is provided, including a processor and a communication interface, where the processor is configured to perform a second operation, and the second operation includes at least one of the following:
obtaining third information, where the third information includes at least one of the following: second information related to PDU Set information and second information related to Data Burst information; and
performing a second operation based on the third information, including at least one of the following:
   sending sixth information, where the sixth information is used for indicating at least one of the following: the second communication device supports or does not support a PDU Set information-based operation, the second communication device supports or does not support PDU Set information, and the second communication device supports or does not support a PDU Set-based operation;
   sending seventh information, where the seventh information is used for indicating at least one of the following: the second communication device supports or does not support a Data Burst information-based operation, and the second communication device supports or does not support Data Burst information;
   sending eighth information;
   sending ninth information;
   PDU Set information-based operation;
   PDU Set-based operation;
   accepting or rejecting the second information related to Data Burst information;
   sending ninth information;
   Data Burst information-based operation; and
   Data Burst-based operation;
   where
   the eighth information is used for indicating one of the following: PDU Set information-based operation having been enabled for a first QoS flow, accepting a requirement of applying PDU Set information to the first QoS flow, accepting a requirement of applying a PDU Set information-based operation to the first QoS flow, PDU Set information-based operation having not been enabled for the first QoS flow, rejecting a requirement of applying PDU Set information to the first QoS flow, rejecting a requirement of applying a PDU Set information-based operation to the first QoS flow, accepting performing a PDU Set-based operation on the first QoS flow, rejecting performing a PDU Set-based operation on the first QoS flow, accepting the second information related to PDU Set information, and rejecting the second information related to PDU Set information; and
   the ninth information is used for indicating one of the following: Data Burst information-based operation having been enabled for the first QoS flow, accepting a requirement of applying Data Burst information to the first QoS flow, accepting a requirement of applying a Data Burst information-based operation to the first QoS flow, Data Burst information-based operation having not been enabled for the first QoS flow, rejecting a requirement of applying Data Burst information to the first QoS flow, rejecting a requirement of applying a Data Burst information-based operation to the first QoS flow, accepting performing a Data Burst-based operation on the first QoS flow, rejecting performing a Data Burst-based operation on the first QoS flow, accepting the second information related to Data Burst information, and rejecting the second information related to Data Burst information.

The second information related to PDU Set information is used for indicating at least one of the following:
requiring applying PDU Set information;
requiring applying a PDU Set information-based operation;
performing a PDU Set-based operation; and
that a second packet header of a data packet includes PDU Set information;
where
the second information related to Data Burst information is used for indicating at least one of the following:
   requiring applying Data Burst information;
   requiring applying a Data Burst information-based operation;
   Data Burst-based operation; and
   indicating that the second packet header of the data packet includes Data Burst information.

According to a fifteenth aspect, a third communication device is provided, where the third communication device includes a processor and a memory, where a program or instructions capable of running on the processor are stored in the memory, and when the program or the instructions are executed by the processor, the steps of the method according to the second aspect are implemented.

According to a sixteenth aspect, a third communication device is provided, including a processor and a communication interface, where the processor is configured to perform a third operation, and the third operation includes at least one of the following:
obtaining at least one of the following: a first requirement, a second requirement, a third requirement, a fourth requirement, a local configuration of the third communication device, fourth information supported by a first object, fifth information supported by the first object, sixth information, seventh information, eighth information, ninth information, tenth information, and eleventh information;
sending at least one of the following to a fourth communication device: the sixth information, the seventh information, the eighth information, the ninth information, the tenth information, and the eleventh information;
based on at least one of the first requirement, the third requirement, the fourth information supported by the first object, the local configuration of the third communication device, the sixth information, the eighth information, and the tenth information, determining and/or sending at least one of the following: first information related to PDU Set information, second information related to PDU Set information, third information related to PDU Set information, and fourth information supported by the first object;
based on at least one of the second requirement, the fourth requirement, the fifth information supported by the first object, the local configuration of the third communication device, the seventh information, the ninth information, and the eleventh information, determining and/or sending at least one of the following: first information related to Data Burst information, second information related to Data Burst information, third information related to Data Burst information, and the fifth information supported by the first object;
sending at least one of the following to a first communication device: the first information related to PDU Set information, the third information related to PDU Set information, the first information related to Data Burst information, the third information related to Data Burst information, the fourth information supported by the first object, and the fifth information supported by the first object; and
sending at least one of the following to a second communication device: the second information related to PDU Set information, and the second information related to Data Burst information;
where
the fourth information is information used for determining PDU Set information;
the fifth information is information used for determining Data Burst information;
the sixth information is used for indicating at least one of the following: the second communication device supports or does not support a PDU Set information-based operation, the second communication device supports or does not support PDU Set information, and the second communication device supports or does not support a PDU Set-based operation;
the seventh information is used for indicating at least one of the following: the second communication device supports or does not support a Data Burst information-based operation, and the second communication device supports or does not support Data Burst information;
the eighth information is used for indicating one of the following: PDU Set information-based operation having been enabled for a first QoS flow, accepting a requirement of applying PDU Set information to the first QoS flow, accepting a requirement of applying a PDU Set information-based operation to the first QoS flow, PDU Set information-based operation having not been enabled for the first QoS flow, rejecting a requirement of applying PDU Set information to the first QoS flow, rejecting a requirement of applying a PDU Set information-based operation to the first QoS flow, accepting performing a PDU Set-based operation on the first QoS flow, rejecting performing a PDU Set-based operation on the first QoS flow, accepting the second information related to PDU Set information, and rejecting the second information related to PDU Set information;
the ninth information is used for indicating one of the following: Data Burst information-based operation having been enabled for the first QoS flow, accepting a requirement of applying Data Burst information to the first QoS flow, accepting a requirement of applying a Data Burst information-based operation to the first QoS flow, Data Burst information-based operation having not been enabled for the first QoS flow, rejecting a requirement of applying Data Burst information to the first QoS flow, rejecting a requirement of applying a Data Burst information-based operation to the first QoS flow, accepting performing a Data Burst-based operation on the first QoS flow, rejecting performing a Data Burst-based operation on the first QoS flow, accepting the second information related to Data Burst information, and rejecting the second information related to Data Burst information;
the tenth information is used for indicating at least one of the following: the first communication device supports or does not support a PDU Set information-based operation, the first communication device supports or does not support PDU Set information, and the first communication device supports or does not support a PDU Set-based operation; and
the eleventh information is used for indicating at least one of the following: the first communication device supports or does not support a Data Burst information-based operation, the first communication device supports or does not support Data Burst information, and the first communication device supports or does not support a Data Burst-based operation.

The first object includes at least one of the following: a first traffic flow, a first protocol, a first application, a first packet header, and a first QoS flow.

The first requirement is used to require at least one of the following:
marking a data packet with PDU Set information that is corresponding to a PDU Set to which the data packet belongs;
marking a second packet header of a data packet with PDU Set information based on information for determining the PDU Set information in a first packet header of the data packet;
applying PDU Set information;
PDU Set-based operation; and
applying a PDU Set information-based operation.

The second requirement is used to require at least one of the following:
marking a data packet with Data Burst information that is corresponding to a Data Burst to which the data packet belongs;
marking a second packet header of a data packet with a Data Burst end indicator based on information for determining the Data Burst end indicator in a first packet header of the data packet;
marking a second packet header of a data packet with Data Burst information based on information for determining the Data Burst information in a first packet header of the data packet; (optionally, the Data Burst information may not include a Data Burst end indicator)
applying Data Burst information; and
applying a Data Burst information-based operation.

The third requirement is used to require at least one of the following:
marking a data packet with PDU Set information that is corresponding to a PDU Set to which the data packet belongs; and
marking a second packet header of a data packet with PDU Set information based on information for determining the PDU Set information in a first packet header of the data packet.

The fourth requirement is used to require at least one of the following:
marking a data packet with Data Burst information that is corresponding to a Data Burst to which the data packet belongs; and
marking a second packet header of a data packet with Data Burst information based on information for determining the Data Burst information in a first packet header of the data packet.

The first information related to PDU Set information is used for requesting at least one of the following:
marking a data packet with PDU Set information that is corresponding to a PDU Set to which the data packet belongs;
marking a second packet header of a data packet with PDU Set information based on information for determining the PDU Set information in a first packet header of the data packet;
applying PDU Set information;
PDU Set-based operation; and
applying a PDU Set information-based operation.

The third information related to PDU Set information is used to request at least one of the following:
not marking a data packet with PDU Set information that is corresponding to a PDU Set to which the data packet belongs;
not applying PDU Set information; and
not applying a PDU Set information-based operation.

The second information related to PDU Set information is used for indicating at least one of the following:
applying PDU Set information;
applying a PDU Set information-based operation; and
indicating that a second packet header of a data packet includes PDU Set information;
where
the first information related to Data Burst information is used for requesting at least one of the following:
   marking a data packet with Data Burst information that is corresponding to a Data Burst to which the data packet belongs;
   marking a second packet header of a data packet with a Data Burst end indicator based on information for determining the Data Burst end indicator in a first packet header of the data packet; and
   applying Data Burst information.

The third information related to Data Burst information is used for requesting at least one of the following:
not marking a data packet with Data Burst information that is corresponding to a Data Burst to which the data packet belongs;
not applying Data Burst information; and
not applying a Data Burst information-based operation.

The second information related to Data Burst information is used for indicating at least one of the following:
applying Data Burst information;
applying a Data Burst information-based operation; and
the second packet header of the data packet includes Data Burst information.

According to a seventeenth aspect, a fourth communication device is provided, where the fourth communication device includes a processor and a memory, where a program or instructions capable of running on the processor are stored in the memory, and when the program or the instructions are executed by the processor, the steps of the method according to the second aspect are implemented.

According to an eighteenth aspect, a fourth communication device is provided, including a processor and a communication interface, where the processor is configured to perform a fourth operation, and the fourth operation includes at least one of the following:
obtaining at least one of the following: a first request, a second request, a local configuration of the fourth communication device, fourth information supported by a first object, fifth information supported by the first object, sixth information, seventh information, eighth information, and ninth information; where the fourth information is information used for determining PDU Set information, and the fifth information is information for determining Data Burst information;
based on at least one of the first request, the fourth information supported by the first object, the local configuration of the fourth communication device, the sixth information, and the eighth information, determining and/or sending at least one of the following: a first requirement, and the fourth information supported by the first object; and
based on at least one of the second request, the fifth information supported by the first object, the local configuration of the fourth communication device, the seventh information, and the ninth information, determining and/or sending at least one of the following: a second requirement, and the fifth information supported by the first object;
where
the fourth information is information used for determining PDU Set information;
the fifth information is information used for determining Data Burst information;
the sixth information is used for indicating at least one of the following: the second communication device supports or does not support a PDU Set information-based operation, and the second communication device supports or does not support PDU Set information; where the PDU Set information includes PDU Set importance;
the seventh information is used for indicating at least one of the following: the second communication device supports or does not support a Data Burst information-based operation, and the second communication device supports or does not support Data Burst information; and
the first object includes at least one of the following: a first traffic flow, a first protocol, a first application, a first packet header, and a first QoS flow.

The first request is used to request at least one of the following:
monitoring PDU Set information corresponding to a data packet;
marking a data packet with PDU Set information that is corresponding to a PDU Set to which the data packet belongs;
marking a second packet header of a data packet with PDU Set information based on information for determining the PDU Set information in a first packet header of the data packet;
applying PDU Set information;
applying a PDU Set information-based operation; and
performing a PDU Set-based operation.

The first requirement is used to require at least one of the following:
monitoring PDU Set information corresponding to a data packet;
marking a data packet with PDU Set information that is corresponding to a PDU Set to which the data packet belongs;
marking a second packet header of a data packet with PDU Set information based on information for determining the PDU Set information in a first packet header of the data packet;
applying PDU Set information;
applying a PDU Set information-based operation; and
performing a PDU Set-based operation.

A third requirement is used to require at least one of the following:
marking a data packet with PDU Set information that is corresponding to a PDU Set to which the data packet belongs; and
marking a second packet header of a data packet with PDU Set information based on information for determining the PDU Set information in a first packet header of the data packet.

The second request is used for requesting at least one of the following:
monitoring Data burst information corresponding to a data packet;
marking a data packet with Data Burst information that is corresponding to a Data Burst to which the data packet belongs;
marking a second packet header of a data packet with a Data Burst end indicator based on information for determining the Data Burst end indicator in a first packet header of the data packet;
applying Data Burst information;
applying a Data Burst information-based operation;
performing a Data Burst-based operation;
performing a terminal power-saving operation; and
marking a second packet header of a data packet with Data Burst information based on information for determining the Data Burst information in a first packet header of the data packet (optionally, the Data Burst information may not include a Data Burst end indicator).

The second requirement is used to require at least one of the following:
monitoring Data burst information corresponding to a data packet;
marking a data packet with Data Burst information that is corresponding to a Data Burst to which the data packet belongs;
marking a second packet header of a data packet with a Data Burst end indicator based on information for determining the Data Burst end indicator in a first packet header of the data packet;
applying Data Burst information;
applying a Data Burst information-based operation;
performing a Data Burst information-based operation; and
performing a terminal power-saving operation.

A fourth requirement is used to require at least one of the following:
marking a data packet with Data Burst information that is corresponding to a Data Burst to which the data packet belongs; and
marking a second packet header of a data packet with Data Burst information based on information for determining the Data Burst information in a first packet header of the data packet.

According to a nineteenth aspect, a fifth communication device is provided, where the fifth communication device includes a processor and a memory, where a program or instructions capable of running on the processor are stored in the memory, and when the program or the instructions are executed by the processor, the steps of the method according to the second aspect are implemented.

According to a twentieth aspect, a fifth communication device is provided, including a processor and a communication interface, where the processor is configured to perform a fifth operation, and the fifth operation includes at least one of the following:
sending at least one of the following: a first request, a second request, protocol description information, fourth information supported by a first object, and fifth information supported by the first object; where the fourth information is information used for determining PDU Set information, and the fifth information is information for determining a Data Burst;
where
the first object includes at least one of the following: a first traffic flow, a first protocol, a first application, a first packet header, and a first QoS flow.

The first request is used to request at least one of the following:
monitoring PDU Set information corresponding to a data packet;
marking a data packet with PDU Set information that is corresponding to a PDU Set to which the data packet belongs;
marking a second packet header of a data packet with PDU Set information based on information for determining the PDU Set information in a first packet header of the data packet;
applying PDU Set information;
applying a PDU Set information-based operation; and
performing a PDU Set-based operation.

The second request is used to request at least one of the following:
monitoring PDU Set information corresponding to a data packet;
marking a data packet with Data Burst information that is corresponding to a Data Burst to which the data packet belongs;
marking a second packet header of a data packet with a Data Burst end indicator based on information for determining the Data Burst end indicator in a first packet header of the data packet;
applying Data Burst information;
applying a Data Burst information-based operation;
performing a Data Burst-based operation; and
performing a terminal power-saving operation.

According to a twenty-first aspect, a communication system is provided, including a first communication device, a second communication device, a third communication device, a fourth communication device, and a fifth communication device, where the first communication device can be configured to execute the steps of the information marking method according to the first aspect, the second communication device can be configured to execute the steps of the information marking method according to the second aspect, the third communication device can be configured to execute the steps of the information marking method according to the third aspect, the fourth communication device can be configured to execute the steps of the information marking method according to the fourth aspect, and the fifth communication device can be configured to execute the steps of the information marking method according to the fifth aspect.

According to a twenty-second aspect, a readable storage medium is provided, where a program or instructions are stored in the readable storage medium, and when the program or the instructions are executed by a processor, the steps of the method according to the first aspect are implemented, or the steps of the method according to the second aspect are implemented, or the steps of the method according to the third aspect are implemented, or the steps of the method according to the fourth aspect are implemented, or the steps of the method according to the fifth aspect are implemented.

According to a twenty-third aspect, a chip is provided, where the chip includes a processor and a communication interface, the communication interface is coupled to the processor, and the processor is configured to run a program or instructions to implement the method according to the first aspect, or to implement the method according to the second aspect, or to implement the method according to the third aspect, or to implement the method according to the fourth aspect, or to implement the method according to the fifth aspect.

According to a twenty-fourth aspect, a computer program/program product is provided, where the computer program/program product is stored in a storage medium, and the computer program/program product is executed by at least one processor to implement the steps of the information marking method according to any one of the first aspect to the fifth aspect.

In the embodiments of this application, a data packet is marked based on obtained PDU Set information-related information and Data Burst information-related information, so as to implement marking of data packets on demand or as required. This avoids resource waste and extra bandwidth occupation, featuring greater flexibility.

### BRIEF DESCRIPTION OF DRAWINGS

Other advantages and benefits will become apparent to those of ordinary skill in the art by reading detailed description of the exemplary embodiments below. The accompanying drawings are merely intended to illustrate the purposes of the preferred implementations, and should not be construed as a limitation on this application. Throughout the accompanying drawings, the same reference numerals represent the same components. In the accompanying drawings:
FIG. 1 is a schematic architectural diagram of a wireless communication system according to an embodiment of this application;
FIG. 2 is a first schematic flowchart of an information marking method according to an embodiment of this application;
FIG. 3 is a second schematic flowchart of an information marking method according to an embodiment of this application;
FIG. 4 is a third schematic flowchart of an information marking method according to an embodiment of this application;
FIG. 5 is a fourth schematic flowchart of an information marking method according to an embodiment of this application;
FIG. 6 is a fifth schematic flowchart of an information marking method according to an embodiment of this application;
FIG. 7 is a first schematic interaction flowchart of an information marking method according to an embodiment of this application;
FIG. 8 is a second schematic interaction flowchart of an information marking method according to an embodiment of this application;
FIG. 9 is a first schematic structural diagram of an information marking apparatus according to an embodiment of this application;
FIG. 10 is a second schematic structural diagram of an information marking apparatus according to an embodiment of this application;
FIG. 11 is a third schematic structural diagram of an information marking apparatus according to an embodiment of this application;
FIG. 12 is a fourth schematic structural diagram of an information marking apparatus according to an embodiment of this application;
FIG. 13 is a fifth schematic structural diagram of an information marking apparatus according to an embodiment of this application;
FIG. 14 is a schematic structural diagram of a communication device according to an embodiment of this application;
FIG. 15 is a first schematic structural diagram of a network-side device according to an embodiment of this application; and
FIG. 16 is a second schematic structural diagram of a network-side device according to an embodiment of this application.

### DETAILED DESCRIPTION OF EMBODIMENTS

The following clearly and completely describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application without creative efforts shall fall within the protection scope of this application.

In the specification and claims of this application, the term "include" and any other variants thereof are intended to cover a non-exclusive inclusion. For example, a process, method, system, product, or device that includes a list of steps or units is not necessarily limited to those expressly listed steps or units, but may include other steps or units not expressly listed or inherent to such a process, method, product, or device.

The terms "first", "second", and the like in this application are used to distinguish between similar objects instead of describing a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, the "or" in this application means at least one of the associated objects. For example, "A or B" covers three schemes, namely, scheme 1: including A not B; scheme 2: including B not A; and scheme 3: including both A and B. The character "/" generally indicates an "or" relationship between associated objects.

The term "indication" in this application may be either a direct indication (or an explicit indication) or an indirect indication (or an implicit indication). The direct indication may be understood as: a sender explicitly notifies, in a sent indication, a receiver of content such as specific information, an operation that needs to be performed, or a request result; and the indirect indication may be understood as: the receiver determines corresponding information or performs determining according to the indication sent by the sender, and determines, based on a determining result, an operation that needs to be performed or a request result.

In the embodiments of this application, the word such as "an example" or "for example" is used to represent giving an example, an instance, or an illustration. Any embodiment or design solution described as "an example" or "for example" in the embodiments of this application shall not be interpreted to be more preferential or advantageous than other embodiments or design solutions. To be precise, the terms such as "an example" or "for example" are intended to present a related concept in a specific manner.

Technologies described in this specification are not limited to a 5th-generation mobile communication technology (5th-generation, 5G) system, a later evolved communication system, and an LTE/LTE advanced (LTE-Advanced, LTE-A) system, and may also be applied to various wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), or other systems.

The terms "system" and "network" are usually used interchangeably. The CDMA system can implement radio technologies such as CDMA2000 and Universal Terrestrial Radio Access (Universal Terrestrial Radio Access, UTRA). The UTRA includes wideband CDMA (Wideband Code Division Multiple Access, WCDMA) and other CDMA variants. The TDMA system can implement radio technologies such as the global system for mobile communication (Global System for Mobile Communication, GSM). The OFDMA system may implement radio technologies such as ultra mobile broadband (Ultra Mobile Broadband, UMB), evolved UTRA (Evolution-UTRA, E-UTRA), IEEE 802.11 (Wi-Fi), IEEE 802.16 (WiMAX), IEEE 802.20, and Flash-OFDM. The UTRA and E-UTRA are parts of the universal mobile telecommunications system (Universal Mobile Telecommunications System, UMTS). The LTE and more advanced LTE (such as LTE-A) are new UMTS releases that use the E-UTRA. UTRA, E-UTRA, UMTS, LTE, LTE-A, and GSM are described in documents from an organization named "3rd Generation Partnership Project" (3rd Generation Partnership Project, 3GPP). CDMA2000 and UMB are described in documents from an organization named "3rd Generation Partnership Project 2" (3GPP2). Techniques described in this specification may be used in the foregoing systems and radio technologies, and can also be used in other systems and radio technologies. In the following descriptions, a new radio (New Radio, NR) system is described for an illustration purpose, and NR terms are used in most of the following descriptions, although these technologies may also be applied to other systems than an NR system, for example, the 6th generation (6th Generation, 6G) communication system.

For better understanding the embodiments of this application, the following technical points are first described.

Therefore, to better implement the information marking method, the following problems still need to be resolved:
In protocol description of the prior art, all PDU Set information needs to be marked by default. In a case that marking is not required, default marking may cause resource waste and extra bandwidth occupation.

Problem 1: To support PDU Set QoS guarantee, an AF, a PCF, and an SMF may trigger (trigger) a UPF to perform PDU Set marking on data packets. Generally, the information of Protocol Description is provided to trigger PDU Set information marking on data packets. However, some marked PDU Set information may be unnecessary for executing PDU Set QoS (such as PDU Set Size), or not used for executing PDU Set QoS (such as PDU Set importance). Always marking such optional PDU Set information may cause resource waste and extra bandwidth occupation.

For example,
(1) At present, marking of PDU Set Importance does not belong to PDU Set QoS, so it is not used for the RAN to perform PDU Set QoS handling, but to implement packet discarding based on PDU Set Importance in a case of congestion. Therefore, PDU Set QoS handling and PDU Set Importance handling need to be decoupled. In a case that only PDU Set QoS is required, whether PDU Set Importance marking is required needs to be determined using another trigger mechanism, so as to trigger the UPF to execute.
(2) Whether a data packet can be marked with PDU Set Size depends on whether the 1st data packet of a media unit such as a video frame (video frame) or a video slice (video slice) includes Size or not. If not, the data packet does not need to be marked with PDU Set Size. Because the UPF needs to wait until all data packets of one media unit are collected to determine the PDU Set Size, the received data packets need to be buffered, which delays data sending.

Problem 2: If a first packet header of a first data packet (a protocol header corresponding to the Protocol Description information, such as RTP or MPEG) does not include basis information (the basis information is used to mark the first data packet with a Data Burst End Indicator based on the basis information), the network possibly cannot determine whether the data packet is a Data Burst End.

One solution is: The AF notifies the 5G network in advance of basis information that can be provided in the first packet header and that can be used for determining Data Burst information. In this way, the network can determine whether to trigger Data Burst information marking for the data packet.

The triggering process of Data Burst marking can be based on triggering by the AF, the PCF, or the SMF.

Problem 2-1: To identify the first protocol, protocol description information is also required. However, the provision of the existing protocol description information is bound to PDU Set QoS and cannot be provided separately. However, PDU Set QoS handling is independent of Data Burst information-based handling.

One solution is to enable the AF to provide protocol description information separately in a case that Data Burst information marking for the data packet is triggered.

Problem 3: PDU Set-based operations may include a PDU Set QoS operation and other PDU Set operations than the PDU Set QoS operation. The PDU Set-based operation may include, but is not limited to, at least one of the following: one or more PDU Set-based operations other than the PDU Set QoS operation (which may be simply referred to as PDU Set information-based operation), and PDU Set QoS operation. In a case that a base station accepts or supports any one of PDU Set-based operations, a PSA UPF may be required to execute PDU Set information corresponding to a marked data packet. For example, in a case that the base station rejects the PDU Set QoS operation, the base station may accept other PDU Set-based operations than the PDU Set QoS operation, and in this case, PDU Set information marking is still required. In a case that the base station rejects or does not support all PDU Set-based operations, the PSA UPF can be indicated to stop the PDU Set information-based operation. How to indicate is not yet clear.

Scenario (a): The core network requires the base station to perform a PDU Set-based operation or a PDU Set information-based operation; however, the base station rejects the PDU Set-based operation or the PDU Set information-based operation. Scenario (b): Handover occurs. A target base station may not support the PDU Set-based operation or the PDU Set information-based operation. In this case, the target base station does not support indicating any information. Alternatively, scenario (c): The target base station rejects the PDU Set-based operation or the PDU Set information-based operation. In the above scenarios, the PSA UPF continues to mark PDU Set information of data packets, resulting in resource waste. How to indicate the PSA UPF to stop marking PDU Set information of data packets is also a problem to be resolved.

The problem of Data Burst is the same as that of PDU Set. Details are not described herein again.

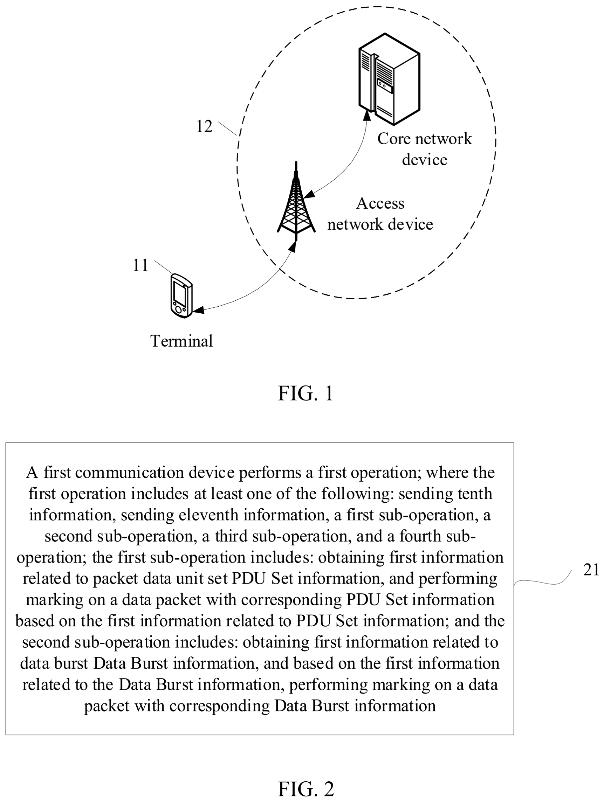

Referring to FIG. 1, FIG. 1 is a schematic architectural diagram of a wireless communication system according to an embodiment of this application.

FIG. 1 illustrates a block diagram of a wireless communication system to which the embodiments of this application are applicable. The wireless communication system includes a terminal 11 and a network-side device 12. The terminal 11 may be a terminal-side device such as a mobile phone, a tablet computer (Tablet Personal Computer), a laptop computer (Laptop Computer), a personal digital assistant (personal digital assistant, PDA), a palmtop computer, a netbook, an ultra-mobile personal computer (Ultra-mobile Personal Computer, UMPC), a mobile Internet device (Mobile Internet Device, MID), an augmented reality (Augmented Reality, AR)/virtual reality (Virtual Reality, VR) device, a robot, a wearable device (Wearable Device), flight vehicle (flight vehicle), vehicle user equipment (Vehicle User Equipment, VUE), ship equipment, pedestrian user equipment (Pedestrian User Equipment, PUE), a smart home device (a home device with wireless communication function, such as a refrigerator, a television, a washing machine, or a furniture), a game console, a personal computer (Personal Computer, PC), a teller machine, a self-service machine, or the like. The wearable device includes: a smart watch, a wrist band, smart earphones, smart glasses, smart jewelry (smart bracelet, smart wristband, smart ring, smart necklace, smart anklet, smart ankle bracelet, or the like), smart strap, smart clothing, and the like. The vehicle user equipment may alternatively be referred to as a vehicle-mounted terminal, a vehicle-mounted controller, a vehicle-mounted module, a vehicle-mounted component, a vehicle-mounted chip, or vehicle-mounted unit. It should be noted that the terminal 11 is not limited to any specific type in the embodiments of this application. The network-side device 12 may include an access network device or a core network device, where the access network device may also be referred to as a radio access network (Radio Access Network, RAN) device, a radio access network function, or a radio access network unit. The access network device may include a base station, a wireless local area network (Wireless Local Area Network, WLAN) access point (Access Point, AS), a wireless fidelity (Wireless Fidelity, WiFi) node, or the like. The base station may be referred to as a Node B (NB), an evolved Node B (Evolved Node B, eNB), a next generation Node B (the next generation Node B, gNB), a new radio Node B (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home Node B (home Node B, HNB), a home evolved Node B (home evolved Node B), a transmission and reception point (Transmission Reception Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that in the embodiments of this application, only the core network device in the NR system is introduced as an example, and the specific type of the core network device is not limited.

Optionally, obtaining may be understood as acquiring from configuration, receiving, obtaining through receiving upon a request, obtaining through self-learning, obtaining through deduction based on non-received information, or obtaining through processing received information, which may be determined according to actual needs. This is not limited in the embodiments of this application. For example, when specific capability indication information transmitted by a device is not received, it can be deduced that the device does not support the capability.

Optionally, transmitting may include broadcasting, broadcasting through a system message, or returning a response after receiving the request.

In an optional embodiment of this application, the communication device may include at least one of the following: a communication network element and a terminal.

In an embodiment of this application, the communication network element may include at least one of the following: a core network element and a radio access network element.

In the embodiments of this application, a core network element (CN network element) may include, but is not limited to, at least one of the following: a core network device, a core network node, a core network function, a core network element, a mobility management entity (Mobility Management Entity, MME), an access mobility management function (Access Management Function, AMF), a session management function (Session Management Function, SMF), a user plane function (User Plane Function, UPF), a serving gateway (serving GW, SGW), PDN gateway (PDN Gate Way, PDN), a policy control function (Policy Control Function, PCF), a policy and charging rules function (Policy and Charging Rules Function, PCRF), serving GPRS support node (Serving GPRS Support Node, SGSN), a gateway GPRS support node (Gateway GPRS Support Node, GGSN), and an application function (Application Function).

In the embodiments of this application, a radio access network device or a RAN network element may include, but is not limited to, at least one of the following: a radio access network device, a radio access network node, a radio access network function, a radio access network unit, a 3GPP radio access network, a non-3GPP radio access network, a centralized unit (Centralized Unit, CU), a distributed unit (Distributed Unit, DU), a base station, an evolved NodeB (evolved Node B, eNB), a 5G base station (gNB), a radio network controller (Radio Network Controller, RNC), a base station (NodeB), a non-3GPP interworking function (Non-3GPP Inter Working Function, N3IWF), an access controller (Access Controller, AC) node, an access-point (Access Point, AP) device, a wireless local area network (Wireless Local Area Network, WLAN) node, or an N3IWF.

A base station may be a base transceiver station (BTS, Base Transceiver Station) in GSM or CDMA, or may be a NodeB (NodeB) in WCDMA, or may be an evolved NodeB (eNB or e-Node B, evolutional Node B) in LTE or a 5G NodeB (gNB), which is not limited in the embodiments of this application.

In an optional embodiment of this application, the terminal may include a relay supporting the terminal function and/or a terminal supporting the relay function. The terminal may also be referred to as a terminal device or user equipment (User Equipment, UE). The terminal may be a terminal-side device such as a mobile phone, a tablet computer (Tablet Personal Computer), a laptop computer (Laptop Computer), a personal digital assistant (Personal Digital Assistant, PDA), a mobile Internet device (Mobile Internet Device, MID), a wearable device (Wearable Device), or an in-vehicle device. It should be noted that a specific type of the terminal is not limited in the embodiments of this application.

In an optional embodiment of this application, the handling operation includes handling and/or an operation.

In an optional embodiment of this application, handling is equivalent to an operation.

In an optional embodiment of this application, marking XX information includes setting a value of the XX information. The XX information is, for example, one of the following: PDU Set information, and data burst information (including data burst end indicator information).

In an implementation of this application, support includes one of the following: being applicable and being enabled (enable).

In an implementation of this application, apply can also be referred to as one of the following: use, adopt, execute, and perform. Meanings of the foregoing several terms are consistent.

In an optional embodiment of this application, not applying may be referred to as one of the following: deactivating, stop performing, not performing, and no longer performing. Meanings of the foregoing several terms are consistent.

In an implementation of this application, unknown includes one of the following: not known (unknown), unclear, uncertain, undetermined (such as undetermined), and undefined (undefined).

The second packet header is a packet header of the user plane protocol (such as GTP-U) between the RAN and the CN network element (such as an anchor gateway UPF that terminates the N6 interface). The second packet header is, for example, a GTP-U packet header.

The first packet header may be one of the following: a protocol header indicated by the protocol description information, an application protocol header, and a header of a protocol layer (for example, not limited to one of the following: RTP, SRTP, MPEG, WebRTC, HTTP, DASH, and QUIC) above the IP layer or ethernet layer of the terminal.

Optionally, the PDU Set QoS operation includes at least one of the following: PDU Set-based QoS operation, PDU Set QoS parameter-based operation, and applying PDU Set QoS. The PDU Set-based QoS operation can be understood as a QoS operation based on a PDU Set granularity. The QoS operation is used to meet a requirement of QoS parameters. Therefore, the PDU Set-based QoS operation generally needs to perform an operation based on a PDU Set QoS parameter.

In an implementation, the first packet header is a header of a first protocol, and the first protocol is a protocol indicated by protocol description information (Protocol Description).

The protocol description information may be protocol information used for marking PDU Set information, and/or a protocol used for describing a service data flow. The protocol description information is used to describe but is not limited to at least one of the following: Real-time Transport Protocol (Real-time Transport Protocol, RTP), RTP extension (extension), RTP protocol header, Secure Real-time Transport Protocol (Secure Real-time Transport Protocol, SRTP), SRTP header, RTP extension protocol, RTP extension protocol header, Moving Picture Coding Experts Group (Moving Picture Coding Experts Group, MPEG), MPEG Network Abstract Layer (Network Abstract Layer, NAL) header, Web Real-Time Communication (Web Real-Time Communication, WebRTC), HyperText Transfer Protocol (HyperText Transfer Protocol, HTTP), Dynamic Adaptive Streaming over HTTP (Dynamic Adaptive Streaming over HTTP, DASH), and Quick UDP Internet Connections (Quick UDP Internet Connections, QUIC). The (s)RTP extension protocol includes at least one of the following: (s)RTP extension protocol defined by 3GPP and (s)RTP extension protocol defined by IETF.

The (s)RTP extension protocol header includes at least one of the following: (s)RTP extension protocol header defined by 3GPP and (s)RTP extension protocol header defined by IETF. The (s)RTP represents at least one of the following: RTP and SRTP.

In an optional embodiment of this application, a data packet is, for example, a PDU.

In an optional embodiment of this application, a PDU Set includes one or more PDUs. The PDUs are carried in payload of an information element (such as a frame or video slice (video slice)) generated at the application program level. In some implementations, the application layer requires all PDUs in the PDU Set to use a corresponding information element. In other implementations, when some PDUs are lost, the application layer may still recover all or part of the information element.

In an optional embodiment of this application, the data packet set may be simply referred to as a data set. A data packet set includes one or more data packets. Optionally, the data packet set has a boundary.

In an optional embodiment of this application, the data packet set is a concept in a cellular mobile communication network. The data packet set may be a paragraph formed by one or more data packets or a set formed by one or more data packets in a tunnel (such as a QoS flow, a QoS subflow, and a radio bearer).

In an optional embodiment of this application, the data packet may be a PDU packet data unit.

In an optional embodiment of this application, the data packet set may be one of the following: a packet data unit set PDU set, one instance of the PDU set, a PDU set type, one instance of the PDU set type, a data segment or a data packet set in a tunnel (such as a QoS flow, a QoS subflow, and a radio bearer).
(1) In an implementation, a PDU set of one type may include a plurality of PDU set instances. A PDU set of one type may be identified by a PDU set identifier (such as a QoS identifier at a PDU set level). A plurality of different PDU set instances of a same PDU set may be distinguished by data packet set sequence numbers (such as PDU set sequence numbers).
(2) In another implementation, one PDU set type may include a plurality of PDU sets. The PDU set is an instance of the PDU set type. The PDU set type may be identified by a PDU set identifier (such as a QoS identifier at a PDU set level). A plurality of different PDU sets of a same PDU set type may be distinguished by data packet set sequence numbers (such as PDU set sequence numbers).

In an optional embodiment of this application, the data packet set type may be one of the following: a packet data unit set (PDU Set), and a tunnel (such as a QoS flow, a QoS subflow, and a radio bearer). One data packet set type may correspond to a plurality of data packet sets. The data packet set is an instance of the data packet set type. The data packet set type may be identified by a data packet set type identifier. The data packet set type identifier is, for example, a QoS identifier at a data packet set level. In this case, a plurality of data packet sets may be distinguished by data packet set sequence numbers.

In an implementation, the one or more data packet sets have a same or different type. Data packet sets of different types may be distinguished by data packet set identifiers. Different data packet sets of a same type may be distinguished by data packet set sequence numbers.

In an optional embodiment of this application, a PDU set is formed by one or more PDUs, and the PDUs carry a payload (such as a frame or a video slice) of one information element generated at an application program level. In some implementations, the application layer requires all PDUs in a PDU set to use a corresponding information element. In other implementations, when some PDUs are lost, the application layer may still recover all or part of the information element.

In an implementation, the first request or the first requirement is different from the PDU Set QoS parameter.

In an implementation, the PDU Set information does not include the PDU Set QoS parameter.

In an implementation, the PDU information-based operation or the PDU Set-based operation does not include at least one of the following: PDU Set QoS operation, and applying PDU Set QoS.

In another implementation, the PDU Set information includes: PDU Set QoS.

In another implementation, the PDU information-based operation or the PDU Set-based operation includes at least one of the following: PDU Set QoS operation, and applying PDU Set QoS.

In an optional embodiment of this application, the PDU Set-based operation may include, but is not limited to, at least one of the following: PDU Set information-based operation, and PDU Set QoS operation.

The PDU information-based operation may include one of the following:
PDU Set-based operation other than PDU Set QoS operation; and
PDU Set information-based operation other than PDU Set QoS operation;
   or
the PDU information-based operation does not include at least one of the following: PDU Set QoS operation, and applying PDU Set QoS.

In another implementation, the PDU Set-based operation includes one of the following:
PDU Set-based operation other than PDU Set QoS operation; and
PDU Set information-based operation other than PDU Set QoS operation;
   or
the PDU Set-based operation does not include at least one of the following: PDU Set QoS operation, and applying PDU Set QoS.

In an optional embodiment of this application, the PDU Set-based operation or the PDU Set information-based operation includes at least one of the following:
handling a data packet based on a data packet set granularity;
applying PDU Set information;
applying PDU Set QoS;
PDU Set QoS handling;
applying PDU Set importance;
PDU Set importance-based operation;
applying PDU Set Size;
PDU Set Size-based operation;
applying PDU Set end information;
PDU Set end information-based operation;
applying PDU Set start information;
PDU Set start information-based operation;
applying a sequence number of a data packet in a PDU Set;
operation based on a sequence number of a data packet in a PDU Set;
applying a PDU Set sequence number; and
PDU Set sequence number-based operation.

In an optional embodiment of this application, the PDU Set information-based operation does not include a PDU Set QoS operation. For example, the PDU Set information-based operation may include at least one of the following:
handling a data packet based on a data packet set granularity;
applying PDU Set information;
applying PDU Set importance;
PDU Set importance-based operation;
applying PDU Set Size;
PDU Set Size-based operation;
applying PDU Set end information;
PDU Set end information-based operation;
applying PDU Set start information;
PDU Set start information-based operation;
applying a sequence number of a data packet in a PDU Set;
operation based on a sequence number of a data packet in a PDU Set;
applying a PDU Set sequence number; and
PDU Set sequence number-based operation.

In an implementation of this application, applying PDU Set information includes at least one of the following: applying PDU Set information to uplink and applying PDU Set information to downlink.

In an implementation of this application, not applying PDU Set information includes at least one of the following: not applying PDU Set information to uplink and not applying PDU Set information to downlink.

In an implementation of this application, the supporting PDU Set handling includes at least one of the following: supporting PDU Set handling in uplink, and supporting PDU Set handling in downlink.

In an implementation of this application, the not supporting PDU Set handling includes at least one of the following: not supporting PDU Set handling in uplink, and not supporting PDU Set handling in downlink.

In an implementation of this application, applying PDU Set information-based operation includes at least one of the following: applying the PDU Set information-based operation to uplink, and applying the PDU Set information-based operation to downlink.

In an implementation of this application, the PDU Set-based operation includes at least one of the following: applying PDU Set-based operation to uplink, and applying PDU Set-based operation to downlink.

In an implementation of this application, not applying PDU Set information-based operation includes at least one of the following: not applying the PDU Set information-based operation to uplink, and not applying the PDU Set information-based operation to downlink.

In an implementation of this application, the PDU Set QoS includes at least one of the following: PDU Set error rate (PDU Set Error Rate, PSER), PDU Set delay budge (PDU Set Delay Budge, PSDB), PDU Set integrated handling information (PDU Set Integrated Handling Information, PSIHI), PDU Set Importance, and PDU Set Importance (Importance). (That is, PDU Set Importance is also PDU Set QoS).

In another embodiment of this application, PDU Set QoS includes at least one of the following: PSER, PSDB, and PSIHI. (That is, PDU Set Importance is not PDU Set QoS).

In an implementation of this application, PDU Set importance refers to importance of a PDU Set. The importance of different PDU Sets may be different.

In an implementation of this application, PDU Set size (Size) is a size of a PDU Set, such as a data volume, which can be measured by byte, bit, and the number of data packets.

In an implementation of this application, the PDU Set end indicator information is used to indicate whether a data packet carrying PDU Set end indicator information is an end data packet or the last data packet of a PDU Set, and the PDU Set end indicator information can be embodied by one indicator or encoded with other information.

In an implementation of this application, the PDU Set start indicator information is used for indicating whether a data packet carrying PDU Set start indicator information is a start data packet or the 1st data packet of a PDU Set. The PDU Set start indicator information can be embodied by one indicator or encoded with other information.

In an implementation of this application, for a sequence number of a data packet in a PDU Set, for example, one PDU Set includes a plurality of data packets, for example, 5, and sequence numbers of five data packets in the PDU Set may be 1, 2, 3, 4, and 5.

In an implementation of this application, for a sequence number of a PDU set, for example, there are a plurality of PDU Sets, namely PDU Set 1, PDU Set 2, and PDU Set 3, and for example, sequence numbers of the PDU Sets may be 1, 2, and 3.

In an implementation of this application, the PDU Set duration may be one of the following: an interval between a reception time of the last received data packet and a reception time of the 1st received data packet in a PDU set, and an interval between a sending time of the last sent data packet and a sending time of the 1st sent data packet in a PDU set.

In an implementation of this application, the interval between PDU Sets or the interval between a PDU set and a next PDU set.

In an implementation of this application, the PDU Set periodicity means that an interval between PDU Sets is balanced, reflecting characteristics of periodicity.

The PDU Set importance information-based handling includes at least one of the following: performing PDU Set importance information marking on a packet header of a data packet, and packet discarding based on the PDU Set importance information.

In an implementation of this application, the supporting PDU Set importance or supporting a PDU Set importance-based operation may include: supporting packet discarding based on PDU Set importance (for example, in a case of congestion).

In an implementation of this application, the not supporting PDU Set importance or not supporting a PDU Set importance-based operation may include: not supporting packet discarding based on PDU Set importance (for example, in a case of congestion).

In an implementation of this application, the PDU Set packet discarding includes at least one of the following: packet discarding based on PDU Set importance, and PDU Set integrated packet discarding.

In an implementation of this application, the applying PDU Set importance-based handling includes: discarding a PDU Set based on PDU Set importance in a case of congestion. For example, discarding is performed in ascending order of importance.

In an implementation of this application, the Data Burst size (Size) is a size of a Data Burst, such as a data volume, which can be measured by byte, bit, and the number of data packets.

In an implementation of this application, the Data Burst end indicator information is used to indicate whether a data packet carrying Data Burst end indicator information is an end data packet or the last data packet of a Data Burst, and the Data Burst end indicator information can be embodied by one indicator or encoded with other information.

In an implementation of this application, the Data Burst start indicator information is used to indicate whether a data packet carrying a Data Burst start indicator information is a start data packet or the 1st data packet of a Data Burst. The Data Burst start indicator information can be embodied by one indicator or encoded with other information.

In an implementation of this application, for a sequence number of a data packet in a Data Burst, for example, one Data Burst includes a plurality of data packets, for example, 5, and sequence numbers of five data packets in the Data Burst may be 1, 2, 3, 4, and 5.

In an implementation of this application, for the Data Burst sequence number, for example, there are a plurality of Data Bursts, namely Data Burst 1, Data Burst 2, and Data Burst 3; and sequence numbers of the Data Bursts may be, for example, 1, 2, and 3.

In an implementation of this application, the Data Burst duration may be one of the following: an interval between a reception time of the last received data packet and a reception time of the 1st received data packet in a Data Burst, and an interval between a sending time of the last sent data packet and a sending time of the 1st sent data packet in a Data Burst.

In an implementation of this application, the interval between Data Bursts or the interval between a Data Burst and a next Data Burst.

In an implementation of this application, the Data Burst periodicity means that an interval between Data Bursts is balanced, reflecting characteristics of periodicity.

Data Burst is one burst of data. Data is present within duration of a Data Burst. There is no data transmission between Data Bursts.

The applying a Data Burst information-based operation includes at least one of the following:
a power-saving operation performed on a terminal based on Data Burst information; and
a Data Burst end indicator-based operation.

The power-saving operation performed on the terminal is (for example, setting DRX).

In an implementation, the marking a data packet with PDU Set information that is corresponding to a PDU Set to which the data packet belongs includes: marking the data packet with the PDU Set information that is corresponding to the PDU Set to which the data packet belongs, and the PDU Set information includes at least one of the following:
PDU Set importance;
PDU Set size (Size);
PDU Set end indicator information;
PDU Set start indicator information;
a sequence number of a data packet in a PDU Set;
PDU Set sequence number;
PDU Set duration;
an interval between PDU Sets or an interval between a PDU set and a next PDU set; and
PDU Set periodicity.

In this embodiment of this application, the supporting Data Burst information (such as a Data Burst end indicator) or supporting a Data Burst information-based operation includes at least one of the following:
supporting a power-saving operation performed on a terminal based on Data Burst information; and
supporting a power-saving operation performed on the terminal.

In this embodiment of this application, the not supporting Data Burst information (such as a Data Burst end indicator) or not supporting a Data Burst information-based operation includes at least one of the following:
not supporting a power-saving operation performed on a terminal based on Data Burst information; and
not supporting a power-saving operation performed on the terminal.

The power-saving operation performed on the terminal is, for example, setting DRX.

In an optional embodiment of this application, the tunnel may include at least one of the following: PDU session, quality of service (Quality of Service, QoS) flow, evolved packet system (Evolved Packet System, EPS) bearer, PDP context, DRB, SRB, and Internet protocol security (Internet Protocol Security, IPsec) association.

In an embodiment of this application, the NG interface may also be referred to as an S1 interface or an N2 interface, and the naming is not limited.

In an embodiment of this application, the wireless communication network may be at least one of the following: a public network or a non-public network; or the first network may be a non-public network.

In an embodiment of this application, a non-public network is an abbreviation of non public network. The non-public network may be referred to as one of the following: a non-public communication network. The non-public network may include at least one of the following deployment manners: a physical non-public network, a virtual non-public network, and a non-public network implemented on a public network. In an implementation, the non-public network is a closed access group (Closed Access Group, CAG). One CAG may include a group of terminals.

In an embodiment of this application, the non-public network may include or be referred to as a private network. The private network may be referred to one of the following: a private communication network, a private network, a local area network (LAN), a private virtual network (PVN), an isolated communication network, a dedicated communication network, or other names. It should be noted that the naming manner is not specifically limited in the embodiments of this application.

In an embodiment of this application, a public network is an abbreviation of public network. The public network may be referred to as one of the following: a public communication network or other names. It should be noted that the naming manner is not specifically limited in the embodiments of this application.

In an embodiment of this application, a data packet size may be referred to as a data packet length.

In an embodiment of this application, a data packet may be referred to as a data frame.

In an optional embodiment of this application, the communication device may include at least one of the following: a communication network element and a terminal.

In an embodiment of this application, the communication network element may include at least one of the following: a core network element and a radio access network element.

In the embodiments of this application, a core network element (CN network element) may include, but is not limited to, at least one of the following: a core network device, a core network node, a core network function, a core network element, a mobility management entity (Mobility Management Entity, MME), an access mobility management function (Access Management Function, AMF), a session management function (Session Management Function, SMF), a user plane function (User Plane Function, UPF), a serving gateway (serving GW, SGW), PDN gateway (PDN Gate Way, PDN), a policy control function (Policy Control Function, PCF), a policy and charging rules function (Policy and Charging Rules Function, PCRF), serving GPRS support node (Serving GPRS Support Node, SGSN), a gateway GPRS support node (Gateway GPRS Support Node, GGSN), and an application function (Application Function).

In the embodiments of this application, a RAN network element may include, but is not limited to, at least one of the following: a radio access network device, a radio access network node, a radio access network function, a radio access network unit, a 3GPP radio access network, a non-3GPP radio access network, a centralized unit (Centralized Unit, CU), a distributed unit (Distributed Unit, DU), a base station, an evolved NodeB (evolved Node B, eNB), a 5G base station (gNB), a radio network controller (Radio Network Controller, RNC), a base station (NodeB), a non-3GPP interworking function (Non-3GPP Inter Working Function, N3IWF), an access controller (Access Controller, AC) node, an access-point (Access Point, AP) device, a wireless local area network (Wireless Local Area Network, WLAN) node, or an N3IWF.

A base station may be a base transceiver station (BTS, Base Transceiver Station) in GSM or CDMA, or may be a NodeB (NodeB) in WCDMA, or may be an evolved NodeB (eNB or e-Node B, evolutional Node B) in LTE or a 5G NodeB (gNB), which is not limited in the embodiments of this application.

In an optional embodiment of this application, the terminal may include a relay supporting the terminal function and/or a terminal supporting the relay function. The terminal may also be referred to as a terminal device or user equipment (User Equipment, UE). The terminal may be a terminal-side device such as a mobile phone, a tablet computer (Tablet Personal Computer), a laptop computer (Laptop Computer), a personal digital assistant (Personal Digital Assistant, PDA), a mobile Internet device (Mobile Internet Device, MID), a wearable device (Wearable Device), or an in-vehicle device. It should be noted that a specific type of the terminal is not limited in the embodiments of this application.

The following describes the information marking method in the embodiments of this application.

Referring to FIG. 2, an embodiment of this application provides an information marking method, applied to a first communication device. The first communication device includes, but is not limited to, a CN network element (such as a user plane CN network element (such as a UPF (such as an anchor gateway that terminates an N6 interface))); in this case, the CN network element may be referred to as a first CN network element. The method includes the following steps.

Step 21: The first communication device performs a first operation.

The first operation includes at least one of the following:
sending tenth information, where the tenth information is used for indicating at least one of the following: the first communication device supports or does not support a PDU Set information-based operation, and the first communication device supports or does not support PDU Set information;
sending eleventh information, where the eleventh information is used for indicating at least one of the following: the first communication device supports or does not support a Data Burst information-based operation, and the first communication device supports or does not support Data Burst information;
a first sub-operation;
a second sub-operation;
a third sub-operation; and
a fourth sub-operation;
where
the first sub-operation includes:
   obtaining first information related to packet data unit set PDU Set information, where the first information related to PDU Set information includes at least one of the following: information for requesting to perform a PDU Set information-related operation; and fourth information supported by a first object, where the fourth information is information used for determining PDU Set information; and
   performing marking on a data packet with corresponding PDU Set information based on the first information related to PDU Set information.

The second sub-operation includes:
obtaining first information related to data burst (Data Burst) information, where the first information related to the Data Burst information includes at least one of the following: fifth information supported by the first object, information for requesting to perform a Data Burst information-related operation; and fifth information supported by the first object, where the fifth information is information for determining a Data Burst; and
based on the first information related to the Data Burst information, performing marking on a data packet with corresponding Data Burst information.

The third sub-operation includes:
obtaining third information related to PDU Set information, where the third information related to PDU Set information is used for requesting at least one of the following: not marking a data packet with PDU Set information corresponding to a PDU Set to which the data packet belongs; not applying PDU Set information; not applying a PDU Set information-based operation; and not performing a PDU Set information-related operation; and
based on the third information related to PDU Set information, performing no marking on a data packet with corresponding PDU Set information, or not performing a PDU Set information-related operation.

The fourth sub-operation includes:
obtaining third information related to Data Burst information, where the third information related to Data Burst information is used for requesting at least one of the following: not marking Data Burst information corresponding to a Data Burst to which a data packet belongs; not applying Data Burst information; not applying a Data Burst information-based operation; and not performing a Data Burst information-related operation; and
based on the third information related to Data Burst information, performing no marking on a data packet with corresponding Data Burst information, or not performing a Data Burst information-related operation;

In an implementation, the not marking a data packet with PDU Set information corresponding to a PDU Set to which the data packet belongs, or performing no marking on a data packet with corresponding PDU Set information can be understood as: no longer performing or stopping performing marking on a data packet with PDU Set information corresponding to a PDU Set to which the data packet belongs.

In an implementation, the not marking a data packet with Data Burst information corresponding to a Data Burst to which the data packet belongs, or performing no marking on a data packet with corresponding Data Burst information can be understood as: no longer performing or stopping performing marking on a data packet with Data Burst information corresponding to a Data Burst to which the data packet belongs;
where
the first object includes at least one of the following: a first traffic flow, a first protocol, a first application, a first packet header, and a first QoS flow.

In an implementation, the performing no marking on a data packet with corresponding PDU Set information includes: performing no more marking on a data packet with corresponding PDU Set information.

The not marking a data packet with PDU Set information corresponding to a PDU Set to which the data packet belongs includes: no longer marking the data packet with the PDU Set information corresponding to the PDU Set to which the data packet belongs, for example, no longer marking a second packet header of a data packet with PDU Set information that is corresponding to a PDU Set to which the data packet belongs.

The not applying PDU Set information includes: no longer applying the PDU Set information.

The not applying a PDU Set information-based operation includes: no longer applying the PDU Set information-based operation.

The performing no marking on a data packet with corresponding Data Burst information includes: performing no more marking on the data packet with the corresponding Data Burst information.

The not marking a data packet with corresponding PDU Set information includes: setting the PDU Set information (such as a value of the PDU Set information) to unknown.

The not marking a data packet with corresponding Data Burst information includes: setting the Data Burst information (such as a value of the Data Burst) to unknown.

The not marking a data packet with Data Burst information corresponding to a Data Burst to which the data packet belongs includes: no longer marking the data packet with the Data Burst information corresponding to the Data Burst to which the data packet belongs, for example, no longer marking a second packet header of a data packet with Data Burst information that is corresponding to a Data Burst to which the data packet belongs.

The not applying Data Burst information includes: no longer applying the Data Burst information.

The not applying a Data Burst information-based operation includes: no longer applying the Data Burst information-based operation.

In an implementation, the first communication device receives at least one of the following from a third communication device (such as an SMF): the first information related to PDU Set information; and the first information related to the Data Burst information.

In an implementation, at least one of the first information related to PDU Set information and the first information related to Data Burst information is included in a first rule (packet detection rule (Packet Detection Rule) or forwarding action rule (Forwarding Action Rule)) for sending. In an implementation, at least one of the first information related to PDU Set information and the first information related to Data Burst information is information in the outer header creation (Outer header creation) of the forwarding action rule.

The fourth information supported by the first object refers to a category or type of the fourth information supported by the first object. Specifically, the fourth information is included in the first packet header of the data packet for transmission.

The fifth information supported by the first object refers to a category or type of the fifth information supported by the first object. Specifically, the fifth information is included in the first packet header of the data packet for transmission.

Optionally, the first QoS flow may be the first traffic flow or a QoS flow mapped to the first application. The data packet may be a data packet of at least one of the first QoS flow, the first traffic flow, and the first application.

The first packet header may be one of the following: a protocol header indicated by the protocol description information, an application protocol header, and a header of a protocol layer (for example, but not limited to one of the following: RTP, SRTP, MPEG, WebRTC, HTTP, DASH, and QUIC) above the IP layer or ethernet layer of the terminal.

In an implementation, the first packet header is a header of a first protocol, and the first protocol is a protocol indicated by protocol description information (Protocol Description).

In an implementation, the fourth information supported by the first object includes at least one of the following:
basis information that is used for determining PDU Set information and that the first object supports or supports providing; and
PDU Set information that the first object supports or supports directly providing.

It is easy to understand that the fourth information includes at least one of the following: basis information for determining PDU Set information, and PDU Set information.

In an implementation, the fifth information supported by the first object includes at least one of the following:
basis information that is used for determining Data Burst information and that the first object supports or supports providing; and
Data Burst information that the first object supports or supports directly providing.

It is easy to understand that the fifth information includes at least one of the following: basis information for determining Data Burst information, and Data Burst information.

Optionally, the information for determining the PDU Set information includes at least one of the following:
basis information that is used for determining PDU Set information and that the first object supports or supports providing; and
PDU Set information.

The basis information for determining PDU Set information is information that can be used for determining the PDU Set information and that is different from the PDU Set information.

Optionally, the PDU Set information includes at least one of the following:
PDU Set importance;
PDU Set size (Size);
PDU Set end indicator information;
PDU Set start indicator information;
a sequence number of a data packet in a PDU Set;
PDU Set sequence number;
PDU Set duration;
an interval between PDU Sets or an interval between a PDU set and a next PDU set; and
PDU Set periodicity.

In an implementation of this application, PDU Set size (Size) is a size of a PDU Set, such as a data volume, which can be measured by byte, bit, and the number of data packets.

In an implementation of this application, the PDU Set end indicator information is used to indicate whether a data packet carrying PDU Set end indicator information is an end data packet or the last data packet of a PDU Set, and the PDU Set end indicator information can be embodied by one indicator or encoded with other information.

In an implementation of this application, the PDU Set start indicator information is used for indicating whether a data packet carrying PDU Set start indicator information is a start data packet or the 1st data packet of a PDU Set. The PDU Set start indicator information can be embodied by one indicator or encoded with other information.

In an implementation of this application, for a sequence number of a data packet in a PDU Set, for example, one PDU Set includes a plurality of data packets, for example, 5, and sequence numbers of five data packets in the PDU Set may be 1, 2, 3, 4, and 5.

In an implementation of this application, for a sequence number of a PDU Set, for example, there are a plurality of PDU Sets, namely PDU Set 1, PDU Set 2, and PDU Set 3, and for example, sequence numbers of the PDU Sets may be 1, 2, and 3.

In an implementation of this application, the PDU Set duration may be one of the following: an interval between a reception time of the last received data packet and a reception time of the 1st received data packet in a PDU set, and an interval between a sending time of the last sent data packet and a sending time of the 1st sent data packet in a PDU set.

In an implementation of this application, the interval between PDU Sets or the interval between a PDU set and a next PDU set;

In an implementation of this application, the PDU Set periodicity means that an interval between PDU Sets is balanced, reflecting characteristics of periodicity.

Optionally, the information for determining the Data Burst information includes at least one of the following:
basis information that is used for determining Data Burst information and that the first object supports or supports providing; and
Data Burst information.

The basis information for determining PDU Set information is information that can be used for determining the Data Burst information and that is different from the Data Burst information.

Optionally, the Data Burst information includes at least one of the following:
Data Burst size;
Data Burst end indicator information;
Data Burst start indicator information;
a sequence number of a data packet in a Data Burst;
a Data Burst sequence number;
Data Burst duration;
an interval between Data Bursts or an interval between a Data Burst and a next Data Burst; and
Data Burst periodicity.

In an implementation of this application, PDU Set importance refers to importance of a PDU Set. The importance of different PDU Sets may be different.

In an implementation of this application, Data Burst size (Size) is a size of a Data Burst, such as a data volume, which can be measured by byte, bit, and the number of data packets.

In an implementation of this application, the Data Burst end indicator information is used to indicate whether a data packet carrying Data Burst end indicator information is an end data packet or the last data packet of a Data Burst, and the Data Burst end indicator information can be embodied by one indicator or encoded with other information.

In an implementation of this application, the Data Burst start indicator information is used to indicate whether a data packet carrying a Data Burst start indicator information is a start data packet or the 1st data packet of a Data Burst. The Data Burst start indicator information can be embodied by one indicator or encoded with other information.

In an implementation of this application, for a sequence number of a data packet in a Data Burst, for example, one Data Burst includes a plurality of data packets, for example, 5, and sequence numbers of five data packets in the Data Burst may be 1, 2, 3, 4, and 5.

In an implementation of this application, for the Data Burst sequence number, for example, there are a plurality of Data Bursts, namely Data Burst 1, Data Burst 2, and Data Burst 3; and sequence numbers of the Data Bursts may be, for example, 1, 2, and 3.

In an implementation of this application, the Data Burst duration may be one of the following: an interval between a reception time of the last received data packet and a reception time of the 1st received data packet in a Data Burst, and an interval between a sending time of the last sent data packet and a sending time of the 1st sent data packet in a Data Burst.

In an implementation of this application, the interval between Data Bursts or the interval between a Data Burst and a next Data Burst.

In an implementation of this application, the Data Burst periodicity means that an interval between Data Bursts is balanced, reflecting characteristics of periodicity.

Optionally, the PDU Set information-related operation includes at least one of the following:
monitoring PDU Set information corresponding to a data packet;
marking a data packet with PDU Set information that is corresponding to a PDU Set to which the data packet belongs;
marking a second packet header of a data packet with PDU Set information based on information for determining the PDU Set information in a first packet header of the data packet;
applying PDU Set information;
applying a PDU Set-based operation; and
applying a PDU Set information-based operation.

In an implementation, the PDU Set-based operation may include, but is not limited to, at least one of the following: PDU Set information-based operation, and PDU Set QoS operation.

The PDU information-based operation includes one of the following:
PDU Set-based operation other than PDU Set QoS operation; and
PDU Set information-based operation other than PDU Set QoS operation;
   or
the PDU information-based operation does not include at least one of the following: PDU Set QoS operation, and applying PDU Set QoS.

In another implementation, the PDU Set-based operation includes one of the following:
PDU Set-based operation other than PDU Set QoS operation; and
PDU Set information-based operation other than PDU Set QoS operation;
   or
the PDU Set-based operation does not include at least one of the following: PDU Set QoS operation, and applying PDU Set QoS.

Optionally, the PDU Set-based operation or the PDU Set information-based operation includes at least one of the following:
handling a data packet based on a data packet set granularity;
applying PDU Set information;
applying PDU Set QoS;
PDU Set QoS handling;
applying PDU Set importance;
PDU Set importance-based operation;
applying PDU Set Size;
PDU Set Size-based operation;
applying PDU Set end information;
PDU Set end information-based operation;
applying PDU Set start information;
PDU Set start information-based operation;
applying a sequence number of a data packet in a PDU Set;
operation based on a sequence number of a data packet in a PDU Set;
applying a PDU Set sequence number; and
PDU Set sequence number-based operation.

In an optional embodiment of this application, the PDU Set information-based operation does not include a PDU Set QoS operation. For example, the PDU Set information-based operation may include at least one of the following:
handling a data packet based on a data packet set granularity;
applying PDU Set information;
applying PDU Set importance;
PDU Set importance-based operation;
applying PDU Set Size;
PDU Set Size-based operation;
applying PDU Set end information;
PDU Set end information-based operation;
applying PDU Set start information;
PDU Set start information-based operation;
applying a sequence number of a data packet in a PDU Set;
operation based on a sequence number of a data packet in a PDU Set;
applying a PDU Set sequence number; and
PDU Set sequence number-based operation.

Optionally, the second packet header is a packet header of the user plane protocol (such as GTP-U) between the RAN and the CN network element (such as an anchor gateway UPF that terminates the N6 interface). The second packet header is, for example, a GTP-U packet header.

Optionally, setting a value of PDU Set information corresponding to a data packet can be understood as marking the data packet with corresponding PDU Set information, for example, marking the data packet with corresponding PDU Set importance information, and marking the data packet with corresponding PDU Set size information.

The marking the data packet with corresponding PDU Set information includes: setting a bit corresponding to PDU Set information in a second packet header (such as a GTP-U packet header) of the data packet to a value of PDU Set information corresponding to the data packet. The same holds true for marking a data packet with corresponding data burst information.

For example, the marking the data packet with corresponding PDU Set importance information includes: setting a bit corresponding to PDU Set importance information in a second packet header (such as a GTP-U packet header) of the data packet to a value of PDU Set importance corresponding to the data packet.

For example, the marking the data packet with corresponding PDU Set Size information includes: setting a bit corresponding to PDU Set Size information in a second packet header (such as a GTP-U packet header) of the data packet to a value of a PDU Set Size corresponding to the data packet.

Optionally, the applying PDU Set information may refer to performing related handling based on PDU Set information, or the like.

Optionally, the Data Burst information-related operation includes at least one of the following:
marking a data packet with Data Burst information that is corresponding to a Data Burst to which the data packet belongs;
monitoring Data burst information corresponding to a data packet;
marking a second packet header of a data packet with a Data Burst end indicator based on information for determining the Data Burst end indicator in a first packet header of the data packet;
applying Data Burst information; and
applying a Data Burst information-based operation.

Optionally, the Data Burst-based operation or Data Burst information-based operation includes at least one of the following:
a power-saving operation performed on a terminal based on Data Burst information; and
a Data Burst end indicator-based operation.

Optionally, the Data Burst end indicator-based operation includes performing a power-saving operation on the terminal based on the Data Burst end indicator.

In an implementation, the first information related to the PDU Set information is included in a first policy (such as a PCC rule) and received.

In an implementation, marking a data packet with Data Burst information corresponding to a Data Burst to which the data packet belongs is, for example, marking the last data packet of the Data Burst with a Data Burst end indicator.

Optionally, marking the data packet with corresponding PDU Set information includes: setting a bit corresponding to PDU Set information in a second packet header (such as a GTP-U packet header) of the data packet to a value of PDU Set information corresponding to the data packet.

For example, the marking the data packet with corresponding PDU Set importance information includes: setting a bit corresponding to PDU Set importance information in a second packet header (such as a GTP-U packet header) of the data packet to a value of PDU Set importance corresponding to the data packet.

For example, the marking the data packet with corresponding PDU Set Size information includes: setting a bit corresponding to PDU Set Size information in a second packet header (such as a GTP-U packet header) of the data packet to a value of a PDU Set Size corresponding to the data packet.

Optionally, the applying Data Burst information may refer to performing related handling using PDU Set information, or the like.

Optionally, PDU Set information corresponding to a data packet is used to describe importance of a PDU Set to which the data packet belongs.

The PDU Set information corresponding to a data packet is PDU Set information corresponding to a PDU Set to which the data packet belongs.

Optionally, the performing an operation of marking a data packet with corresponding PDU Set information based on the first information related to PDU Set information includes:
marking the data packet with corresponding PDU Set information based on the first information related to PDU Set information and the protocol description information.

Optionally, Data Burst information corresponding to a data packet is Data Burst information corresponding to a PDU Set to which the data packet belongs.

The protocol description information is: protocol information used for marking PDU Set information. The protocol description information is used to describe, but not limited to, at least one of the following: Real-time Transport Protocol (Real-time Transport Protocol, RTP), RTP extension (extension), RTP protocol header, Secure Real-time Transport Protocol (Secure Real-time Transport Protocol, SRTP), SRTP header, RTP extension protocol, RTP extension protocol header, Moving Picture Coding Experts Group (Moving Picture Coding Experts Group, MPEG), MPEG Network Abstract Layer (Network Abstract Layer, NAL) header, Web Real-Time Communication (Web Real-Time Communication, WebRTC), HyperText Transfer Protocol (HyperText Transfer Protocol, HTTP), Dynamic Adaptive Streaming over HTTP (Dynamic Adaptive Streaming over HTTP, DASH), and Quick UDP Internet Connections (Quick UDP Internet Connections, QUIC).

In an implementation, it is determined through traffic detection that the packet header of the first protocol includes or does not include information for determining the PDU Set Size.

Optionally, the first information related to the PDU Set information is different from protocol description information.

In an implementation, the protocol description information is used to determine at least one of the following: PDU Set information and Data Burst information.

Optionally, the performing marking on a data packet with corresponding PDU Set information based on the first information related to PDU Set information includes at least one of the following:
in a case that a first condition is met, performing marking on the data packet with the corresponding PDU Set information; and
in a case that a second condition is met, not performing marking on the data packet with the corresponding PDU Set information, or setting a value of the PDU Set information to a first value, where the first value is used to indicate one of the following: the PDU Set information being unknown, not applying the PDU Set information, and not applying PDU Set information-based handling.

The meeting the first condition includes at least one of the following:
the first information related to the PDU Set information has been obtained.

The meeting the second condition includes at least one of the following:
the first information related to the PDU Set information has not been obtained.

Optionally, unknown includes one of the following: not known (unknown), unclear, uncertain, undetermined (such as undetermined), and undefined (undefined).

Optionally, the performing marking on a data packet with corresponding Data Burst information based on the first information related to Data Burst information includes at least one of the following:
in a case that a third condition is met, performing marking on the data packet with the corresponding Data Burst information; and
in a case that a fourth condition is met, not performing marking on the data packet with the corresponding Data Burst information, or setting a value of the Data Burst information to a second value, where the second value is used to indicate one of the following: being unknown whether the data packet is an end data packet of a Data Burst, not applying a data burst end indicator, and not applying data burst end indicator-based handling;
where
the meeting the third condition includes at least one of the following:
   the first information related to the Data Burst information has been obtained;
   where
   the meeting the fourth condition includes at least one of the following:
      the first information related to the Data Burst information has not been obtained.

According to this embodiment of this application, a data packet is marked based on obtained PDU Set information-related information and Data Burst information-related information, so as to implement marking of data packets on demand or as required. This avoids resource waste and extra bandwidth occupation, featuring greater flexibility.

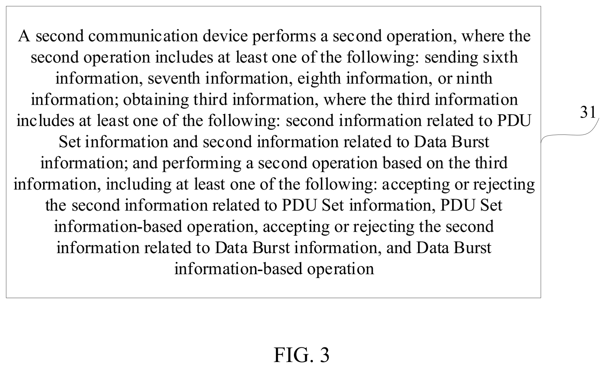

Referring to FIG. 3, an embodiment of this application provides an information marking method, applied to a second communication device. The second communication device includes but is not limited to a RAN network element, and the method includes the following steps.

Step 31: The second communication device performs a second operation, where the second operation includes at least one of the following:
sending sixth information, where the sixth information is used for indicating at least one of the following: the second communication device supports or does not support a PDU Set information-based operation, the second communication device supports or does not support PDU Set information, and the second communication device supports or does not support a PDU Set-based operation; where the PDU Set information includes PDU Set importance;
sending seventh information, where the seventh information is used for indicating at least one of the following: the second communication device supports or does not support a Data Burst information-based operation, and the second communication device supports or does not support Data Burst information;
sending eighth information;
sending ninth information;
obtaining third information, where the third information includes at least one of the following: second information related to PDU Set information and second information related to Data Burst information; and
performing a second operation based on the third information, including at least one of the following:
   accepting or rejecting the second information related to PDU Set information;
   sending eighth information;
   PDU Set information-based operation;
   PDU Set-based operation;
   accepting or rejecting the second information related to Data Burst information;
   sending ninth information;
   Data Burst information-based operation; and
   Data Burst-based operation;
   where
   the eighth information is used for indicating one of the following: PDU Set information-based operation having been enabled for a first QoS flow, accepting a requirement of applying PDU Set information to the first QoS flow, accepting a requirement of applying a PDU Set information-based operation to the first QoS flow, PDU Set information-based operation having not been enabled for the first QoS flow, rejecting a requirement of applying PDU Set information to the first QoS flow, rejecting a requirement of applying a PDU Set information-based operation to the first QoS flow, accepting performing a PDU Set-based operation on the first QoS flow, rejecting performing a PDU Set-based operation on the first QoS flow, accepting the second information related to PDU Set information, and rejecting the second information related to PDU Set information; and
   the ninth information is used for indicating one of the following: Data Burst information-based operation having been enabled for the first QoS flow, accepting a requirement of applying Data Burst information to the first QoS flow, accepting a requirement of applying a Data Burst information-based operation to the first QoS flow, Data Burst information-based operation having not been enabled for the first QoS flow, rejecting a requirement of applying Data Burst information to the first QoS flow, rejecting a requirement of applying a Data Burst information-based operation to the first QoS flow, accepting performing a Data Burst-based operation on the first QoS flow, rejecting performing a Data Burst-based operation on the first QoS flow, accepting the second information related to Data Burst information, and rejecting the second information related to Data Burst information.

The second information related to PDU Set information is used for at least one of the following:
requiring applying PDU Set information;
requiring applying a PDU Set information-based operation;
performing a PDU Set-based operation; and
indicating that a second packet header of a data packet includes PDU Set information;
where
the second information related to Data Burst information is used for at least one of the following:
   requiring applying Data Burst information;
   requiring applying a Data Burst information-based operation;
   Data Burst-based operation; and
   indicating that the second packet header of the data packet includes Data Burst information.

In an implementation, in a case that the second communication device accepts at least one or any one PDU Set QoS parameter or at least one piece of PDU Set information, the second communication device returns to accept the PDU Set-based operation.

In an implementation, at least one of the following is sent to a third communication device (such as an SMF): sixth information, eighth information, and ninth information.

In an implementation, the first QoS flow is a specific QoS flow.

In an implementation, the sixth information is use to indicate whether the second communication device (such as a RAN) supports or does not support PDU Set importance.

The second communication device supporting PDU Set importance or supporting a PDU Set importance-based operation may include: the second communication device supports packet discarding based on PDU Set importance (for example, in a case of congestion).

The second communication device not supporting PDU Set importance or not supporting a PDU Set importance-based operation may include: the second communication device does not support packet discarding based on PDU Set importance (for example, in a case of congestion).

In an implementation, the seventh information is used for indicating at least one of the following: the second communication device supports or does not support a Data Burst information-based operation, and the second communication device supports or does not support Data Burst information.

In this embodiment of this application, the supporting Data Burst information (such as a Data Burst end indicator) or supporting a Data Burst information-based operation includes at least one of the following:
supporting a power-saving operation performed on a terminal based on Data Burst information; and
supporting a power-saving operation performed on the terminal.

In this embodiment of this application, the not supporting Data Burst information (such as a Data Burst end indicator) or not supporting a Data Burst information-based operation includes at least one of the following:
not supporting a power-saving operation performed on a terminal based on Data Burst information; and
not supporting a power-saving operation performed on the terminal.

The power-saving operation performed on the terminal may be setting DRX.

In an implementation, the second information related to PDU Set information is second information related to PDU Set information corresponding to the first QoS flow.

It can be understood that the second information related to the PDU Set information corresponding to the first QoS flow is used for at least one of the following:
requiring applying the PDU Set information to the first QoS flow;
requiring applying a PDU Set information-based operation to the first QoS flow; and
indicating that a second packet header of a data packet in the first QoS flow includes the PDU Set information.

In an implementation, the second information related to Data Burst is second information related to Data Burst information corresponding to the first QoS flow.

It can be understood that the second information related to the Data Burst information corresponding to the first QoS flow is used for at least one of the following:
requiring applying the Data Burst information to the first QoS flow;
requiring applying a Data Burst information-based operation to the first QoS flow; and
indicating that a second packet header of a data packet in the first QoS flow includes the Data Burst information.

In an implementation, the sending eighth information includes: sending the eighth information in a case that a ninth condition is met, and the eighth information includes information used for indicating one of the following:
accepting the second information related to PDU Set information;
PDU Set information-based operation having been enabled for a first QoS flow;
accepting a requirement of applying PDU Set information to the first QoS flow;
accepting a requirement of applying a PDU Set information-based operation to the first QoS flow, and
accepting performing a PDU Set-based operation on the first QoS flow;
where
the meeting the ninth condition includes at least one of the following:
   the second communication device accepts the second information related to PDU Set information;
   the second communication device accepts a requirement of applying PDU Set information to the first QoS flow;
   the second communication device accepts a requirement of applying a PDU Set information-based operation to the first QoS flow;
   the terminal moves between RAN network elements;
   the second communication device support a PDU Set importance-based operation;
   the second communication device accepts at least one or any one PDU Set QoS parameter;
   the second communication device accepts at least one or any one piece of PDU Set information;
   the second communication device accepts at least one or any one PDU Set parameter, where the PDU Set parameter includes at least one of the following: PDU QoS parameter and PDU Set information;
   the second communication device accepts at least one or any one PDU Set-based operation; and
   the second communication device accepts at least one or any one PDU Set information-based operation.

In an implementation, in a case that the second communication device accepts at least one or any one of PDU QoS parameters and the PDU Set information, the second communication device returns to accept the PDU Set-based operation. For example, there are three PDU Set parameters, two are PDU Set QoS parameters A and B, and the other is PDU Set information C. In this case, the second communication device accepts any one of A, B, and C, and the second communication device may return to accept the PDU Set-based operation.

In another implementation, the PDU Set QoS is also one of the PDU Set information. For example, there are three pieces of PDU Set information, two are PDU Set QoS parameters A and B, and the other is PDU Set information C other than PDU Set QoS. In this case, the second communication device accepts any one of A, B, and C, and the second communication device may return to accept the PDU Set information-based operation.

In an implementation, the sending ninth information includes: sending the ninth information in a case that a tenth condition is met.

The meeting the tenth condition includes at least one of the following:
the second communication device accepts the second information related to Data Burst information;
the second communication device accepts a requirement of applying Data Burst information to the first QoS flow;
the second communication device accepts a requirement of applying a Data Burst information-based operation to the first QoS flow;
the terminal moves between RAN network elements; and
the second communication device supports a Data Burst information-based operation.

In an implementation, the second communication device obtains the third information by receiving it from at least one of the following: the third communication device (such as an SMF) and a RAN network element. For example, when the terminal moves between RAN network elements, the second communication device (such as a target RAN network element) may obtains the third information by receiving it from a source RAN network element. The source RAN network element is a network element before handover (moving), and the target RAN network element is a network element after handover (moving).

In an implementation, the second communication device obtains the second information related to the PDU Set information by receiving it from at least one of the third communication device (such as an SMF) and the RAN network element.

In an implementation, the first communication device obtains the second information related to the Data Burst information by receiving it from at least one of the third communication device (such as an SMF) and the RAN network element.

Optionally, the PDU Set information includes one of the following:
PDU Set information other than PDU Set QoS; and
PDU Set information unrelated to QoS;
   or,
the PDU Set information does not include: PDU Set QoS.

Optionally, PDU Set QoS can also be referred to as PDU Set QoS parameter.

Optionally, the PDU information-based operation or the PDU Set-based operation includes one of the following:
PDU Set-based operation other than PDU Set QoS operation; and
PDU Set information-based operation other than PDU Set QoS operation;
   or
the PDU information-based operation or the PDU Set-based operation does not include at least one of the following: PDU Set QoS operation, and applying PDU Set QoS.

Optionally, the PDU Set QoS operation includes at least one of the following: PDU Set-based QoS operation, PDU Set QoS parameter-based operation, and applying PDU Set QoS. The PDU Set-based QoS operation can be understood as a QoS operation based on a PDU Set granularity. The QoS operation is used to meet a requirement of QoS parameters. Therefore, the PDU Set-based QoS operation generally needs to perform an operation based on a PDU Set QoS parameter.

In an implementation, the PDU Set-based operation other than the PDU Set QoS operation is one or more PDU Set-based operations other than the PDU Set QoS operation.

In another implementation, the PDU Set information includes PDU Set QoS.

In another implementation, the PDU information-based operation or the PDU Set-based operation includes at least one of the following: PDU Set QoS operation, and applying PDU Set QoS.

In another implementation, the PDU Set-based operation may include, but is not limited to, at least one of the following: PDU Set information-based operation, and PDU Set QoS operation.

In an implementation, the first request or the first requirement is different from the PDU Set QoS parameter.

In an implementation, the PDU Set information does not include the PDU Set QoS parameter.

In an implementation, the PDU information-based operation or the PDU Set-based operation does not include at least one of the following: PDU Set QoS operation, and applying PDU Set QoS.

In another implementation, the PDU Set information includes: PDU Set QoS.

In another implementation, the PDU information-based operation or the PDU Set-based operation includes at least one of the following: PDU Set QoS operation, and applying PDU Set QoS.

Optionally, the PDU Set-based operation other than the PDU Set QoS operation, or the PDU Set information-based operation other than the PDU Set QoS operation, or the PDU Set information-based operation includes at least one of the following:
handling a data packet based on a data packet set granularity;
applying PDU Set information;
applying PDU Set importance;
PDU Set importance-based operation;
applying PDU Set Size;
PDU Set Size-based operation;
applying PDU Set end information;
PDU Set end information-based operation;
applying PDU Set start information;
PDU Set start information-based operation;
applying a sequence number of a data packet in a PDU Set;
operation based on a sequence number of a data packet in a PDU Set;
applying a PDU Set sequence number; and
PDU Set sequence number-based operation.

Optionally, the PDU Set-based operation or the PDU Set information-based operation includes at least one of the following:
handling a data packet based on a data packet set granularity;
applying PDU Set information;
applying PDU Set QoS;
PDU Set QoS handling;
applying PDU Set importance;
PDU Set importance-based operation;
applying PDU Set Size;
PDU Set Size-based operation;
applying PDU Set end information;
PDU Set end information-based operation;
applying PDU Set start information;
PDU Set start information-based operation;
applying a sequence number of a data packet in a PDU Set;
operation based on a sequence number of a data packet in a PDU Set;
applying a PDU Set sequence number; and
PDU Set sequence number-based operation.

Optionally, the PDU Set importance-based operation includes packet discarding based on PDU Set importance.

Optionally, the Data Burst-based operation or Data Burst information-based operation includes at least one of the following:
a power-saving operation performed on the terminal based on Data Burst information; and
a Data Burst end indicator-based operation.

In an implementation, the Data Burst-based operation is the same as the Data Burst information-based operation. It is easy to understand that a basis of the Data Burst-based operation is obtaining the Data Burst information.

In another implementation, the Data Burst-based operation is a Data Burst information-related operation, including at least one of the following:
marking a data packet with Data Burst information that is corresponding to a Data Burst to which the data packet belongs;
monitoring Data burst information corresponding to a data packet;
marking a second packet header of a data packet with a Data Burst end indicator based on information for determining the Data Burst end indicator in a first packet header of the data packet;
applying Data Burst information; and
applying a Data Burst information-based operation.

Optionally, the Data Burst end indicator-based operation includes performing a power-saving operation on the terminal based on the Data Burst end indicator.

Optionally, the PDU Set information includes at least one of the following:
PDU Set importance;
PDU Set size (Size);
PDU Set end indicator information;
PDU Set start indicator information;
a sequence number of a data packet in a PDU Set;
PDU Set sequence number;
PDU Set duration;
an interval between PDU Sets or an interval between a PDU set and a next PDU set; and
PDU Set periodicity.

Optionally, the Data Burst information includes at least one of the following:
Data Burst size;
Data Burst end indicator information;
Data Burst start indicator information;
a sequence number of a data packet in a Data Burst;
a Data Burst sequence number;
Data Burst duration;
an interval between Data Bursts or an interval between a Data Burst and a next Data Burst; and
Data Burst periodicity.

According to this embodiment of this application, whether to apply a data packet marking information-based operation is determined based on the information marked for the data packet can avoid waste of processing resources and features greater flexibility.

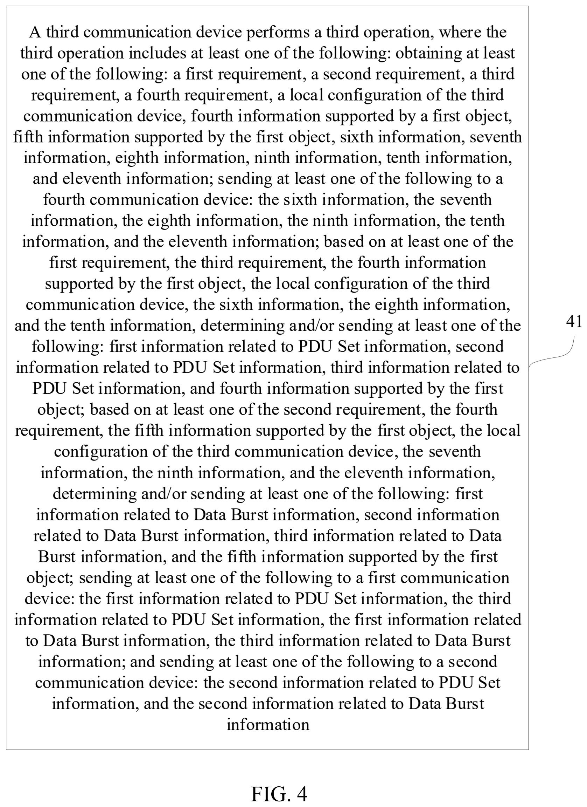

Referring to FIG. 4, an embodiment of this application provides an information marking method, applied to a third communication device. The third communication device includes but is not limited to a CN network element (such as an SMF), and in this case, the CN network element can be referred to as a second CN network element, and the method includes the following steps.

Step 41: The third communication device performs a third operation, where the third operation includes at least one of the following:
obtaining at least one of the following: a first requirement, a second requirement, a third requirement, a fourth requirement, a local configuration of the third communication device, fourth information supported by a first object, fifth information supported by the first object, sixth information, seventh information, eighth information, ninth information, tenth information, and eleventh information; where the fourth information is information used for determining PDU Set information; and the fifth information is information for determining Data Burst information;
sending at least one of the following to a fourth communication device: the sixth information, the seventh information, the eighth information, the ninth information, the tenth information, and the eleventh information;
based on at least one of the first requirement, the third requirement, the fourth information supported by the first object, the local configuration of the third communication device, the sixth information, the eighth information, and the tenth information, determining and/or sending at least one of the following: first information related to PDU Set information, second information related to PDU Set information, third information related to PDU Set information, and fourth information supported by the first object;
based on at least one of the second requirement, the fourth requirement, the fifth information supported by the first object, the local configuration of the third communication device, the seventh information, the ninth information, and the eleventh information, determining and/or sending at least one of the following: first information related to Data Burst information, second information related to Data Burst information, third information related to Data Burst information, and the fifth information supported by the first object;
sending at least one of the following to a first communication device: the first information related to PDU Set information, the third information related to PDU Set information, the first information related to Data Burst information, the third information related to Data Burst information; and
sending at least one of the following to a second communication device: the second information related to PDU Set information, and the second information related to Data Burst information;
where
the sixth information is used for indicating at least one of the following: the second communication device supports or does not support a PDU Set information-based operation, the second communication device supports or does not support PDU Set information, and the second communication device supports or does not support a PDU Set-based operation; where the PDU Set information includes PDU Set importance;
the seventh information is used for indicating at least one of the following: the second communication device supports or does not support a Data Burst information-based operation, and the second communication device supports or does not support Data Burst information;
the eighth information is used for indicating one of the following: PDU Set information-based operation having been enabled for a first QoS flow, accepting a requirement of applying PDU Set information to the first QoS flow, accepting a requirement of applying a PDU Set information-based operation to the first QoS flow, PDU Set information-based operation having not been enabled for the first QoS flow, rejecting a requirement of applying PDU Set information to the first QoS flow, rejecting a requirement of applying a PDU Set information-based operation to the first QoS flow, accepting performing a PDU Set-based operation on the first QoS flow, rejecting performing a PDU Set-based operation on the first QoS flow, accepting the second information related to PDU Set information, and rejecting the second information related to PDU Set information;
the ninth information is used for indicating one of the following: Data Burst information-based operation having been enabled for the first QoS flow, accepting a requirement of applying Data Burst information to the first QoS flow, accepting a requirement of applying a Data Burst information-based operation to the first QoS flow, Data Burst information-based operation having not been enabled for the first QoS flow, rejecting a requirement of applying Data Burst information to the first QoS flow, rejecting a requirement of applying a Data Burst information-based operation to the first QoS flow, accepting performing a Data Burst-based operation on the first QoS flow, rejecting performing a Data Burst-based operation on the first QoS flow, accepting the second information related to Data Burst information, and rejecting the second information related to Data Burst information;
the tenth information is used for indicating at least one of the following: the first communication device supports or does not support a PDU Set information-based operation, the first communication device supports or does not support PDU Set information, and the first communication device supports or does not support a PDU Set-based operation; and
the eleventh information is used for indicating at least one of the following: the first communication device supports or does not support a Data Burst information-based operation, the first communication device supports or does not support Data Burst information, and the first communication device supports or does not support a Data Burst-based operation.

The first object includes at least one of the following: a first traffic flow, a first protocol, a first application, a first packet header, and a first QoS flow.

The first requirement is used to require at least one of the following:
marking a data packet with PDU Set information that is corresponding to a PDU Set to which the data packet belongs;
marking a second packet header of a data packet with PDU Set information based on information for determining the PDU Set information in a first packet header of the data packet;
applying PDU Set information;
PDU Set-based operation; and
applying a PDU Set information-based operation.

The second requirement is used to require at least one of the following:
marking a data packet with Data Burst information that is corresponding to a Data Burst to which the data packet belongs;
marking a second packet header of a data packet with a Data Burst end indicator based on information for determining the Data Burst end indicator in a first packet header of the data packet;
marking a second packet header of a data packet with Data Burst information based on information for determining the Data Burst information in a first packet header of the data packet (optionally, the Data Burst information may not include a Data Burst end indicator);
applying Data Burst information; and
applying a Data Burst information-based operation.

The third requirement is used to require at least one of the following:
marking a data packet with PDU Set information that is corresponding to a PDU Set to which the data packet belongs; and
marking a second packet header of a data packet with PDU Set information based on information for determining the PDU Set information in a first packet header of the data packet.

The fourth requirement is used to require at least one of the following:
marking a data packet with Data Burst information that is corresponding to a Data Burst to which the data packet belongs; and
marking a second packet header of a data packet with Data Burst information based on information for determining the Data Burst information in a first packet header of the data packet;
where
the first information related to PDU Set information is used for requesting at least one of the following:
   marking a data packet with PDU Set information that is corresponding to a PDU Set to which the data packet belongs;
   marking a second packet header of a data packet with PDU Set information based on information for determining the PDU Set information in a first packet header of the data packet;
   applying PDU Set information;
   PDU Set-based operation; and
   applying a PDU Set information-based operation.

The third information related to PDU Set information is used to request at least one of the following:
not marking a data packet with PDU Set information that is corresponding to a PDU Set to which the data packet belongs;
not applying PDU Set information; and
not applying a PDU Set information-based operation;
where
the second information related to PDU Set information is used for at least one of the following:
   requiring applying PDU Set information;
   requiring applying a PDU Set information-based operation; and
   indicating that a second packet header of a data packet includes PDU Set information;
   where
   the first information related to Data Burst information is used for requesting at least one of the following:
      marking a data packet with Data Burst information that is corresponding to a Data Burst to which the data packet belongs;
      marking a second packet header of a data packet with a Data Burst end indicator based on information for determining the Data Burst end indicator in a first packet header of the data packet;
      applying Data Burst information; and
      applying a Data Burst information-based operation;
      where
      the third information related to Data Burst information is used for requesting at least one of the following:
         not marking a data packet with Data Burst information that is corresponding to a Data Burst to which the data packet belongs;
         not applying Data Burst information; and
         not applying a Data Burst information-based operation;
         where
         the second information related to Data Burst information is used for at least one of the following:
            requiring applying Data Burst information;
            requiring applying a Data Burst information-based operation; and
            indicating that the second packet header of the data packet includes Data Burst information.

In an implementation, based on at least one of the first requirement, the fourth information supported by the first object, the local configuration of the third communication device, and the sixth information, at least one of the following is determined and/or sent: the first information related to PDU Set information, and information for requesting to stop performing a PDU Set information-related operation.

In an implementation, based on at least one of the second request, the fifth information supported by the first object, the local configuration of the third communication device, and the seventh information, at least one of the following is determined and/or sent: the first information related to Data Burst information, and information for requesting to stop performing a Data Burst information-related operation.

In an implementation, the first request or the first requirement is different from the PDU Set QoS parameter.

In an implementation, the PDU Set information does not include the PDU Set QoS parameter.

In an implementation, the PDU information-based operation or the PDU Set-based operation does not include at least one of the following: PDU Set QoS operation, and applying PDU Set QoS.

In another implementation, the PDU Set information includes: PDU Set QoS.

In another implementation, the PDU information-based operation or the PDU Set-based operation includes at least one of the following: PDU Set QoS operation, and applying PDU Set QoS.

In an implementation, the marking a data packet with Data Burst information that is corresponding to a Data Burst to which the data packet belongs indicates: marking the data packet with the Data Burst information that is corresponding to the Data Burst to which the data packet belongs; and
the marking a data packet with PDU Set information that is corresponding to a PDU Set to which the data packet belongs indicates: marking the data packet with the PDU Set information that is corresponding to the PDU Set to which the data packet belongs.

In an implementation, the first information related to PDU Set information is first information related to PDU Set information corresponding to the first QoS flow.

In an implementation, the second information related to PDU Set information is second information related to PDU Set information corresponding to the first QoS flow.

In an implementation, the third information related to PDU Set information is third information related to PDU Set information corresponding to the first QoS flow.

In an implementation, the first information related to Data Burst information is first information related to Data Burst information corresponding to the first QoS flow.

In an implementation, the second information related to Data Burst information is second information related to Data Burst information corresponding to the first QoS flow.

In an implementation, the third information related to Data Burst information is third information related to Data Burst information corresponding to the first QoS flow.

In an implementation, not marking a data packet with PDU Set information corresponding to a PDU Set to which the data packet belongs includes: no longer marking a data packet with PDU Set information corresponding to a PDU Set to which the data packet belongs, for example, no longer marking a second packet header of a data packet with PDU Set information that is corresponding to a PDU Set to which the data packet belongs.

The not applying PDU Set information includes: no longer applying the PDU Set information.

The not applying a PDU Set information-based operation includes: no longer applying the PDU Set information-based operation.

In an implementation, the not marking a data packet with Data Burst information corresponding to a Data Burst to which the data packet belongs includes: no longer marking the data packet with the Data Burst information corresponding to the Data Burst to which the data packet belongs, for example, no longer marking a second packet header of a data packet with Data Burst information that is corresponding to a Data Burst to which the data packet belongs.

The not applying Data Burst information includes: no longer applying the Data Burst information.

The not applying a Data Burst information-based operation includes: no longer applying the Data Burst information-based operation.

The not marking a data packet with corresponding PDU Set information includes: setting the PDU Set information (such as a value of the PDU Set information) to unknown.

The not marking a data packet with corresponding Data Burst information includes: setting the Data Burst information (such as a value of the Data Burst information) to unknown.

In an implementation, the marking a data packet with PDU Set information that is corresponding to a PDU Set to which the data packet belongs includes: marking a data packet with PDU Set information that is corresponding to a PDU Set to which the data packet belongs, and the PDU Set information includes at least one of the following:
PDU Set importance;
PDU Set size (Size);
PDU Set end indicator information;
PDU Set start indicator information;
a sequence number of a data packet in a PDU Set;
PDU Set sequence number;
PDU Set duration;
an interval between PDU Sets or an interval between a PDU set and a next PDU set; and
PDU Set periodicity.

In an implementation, the N-th requirement is included in a first policy (such as a PCC rule) and sent.

In an implementation, the N-th request is obtained from at least one of the following: an AF and a NEF.

In an implementation, the N-th requirement is a first requirement corresponding to the first policy.

In an implementation, the N-th request is a first request corresponding to the first traffic flow.

A value of N is one of the following: 1 or 2.

In an implementation, the first information related to PDU Set information is first information related to PDU Set information corresponding to the first QoS flow.

In an implementation, the first information related to Data Burst information is first information related to Data Burst information corresponding to the first QoS flow.

In an implementation, the value of the PDU Set information included in the second packet header of the data packet is different from the first value (unknown, such as unknown, undetermined, or undefined).

In an implementation, the value of the Data Burst information included in the second packet header of the data packet is different from the second value (indicating not known, such as unknown, undetermined, or undefined).

In an implementation, at least one of the first information related to PDU Set information and the first information related to Data Burst information is included in a first rule (packet detection rule (Packet Detection Rule) or forwarding action rule (Forwarding Action Rule)) for sending. In an implementation, at least one of the first information related to PDU Set information and the first information related to Data Burst information is information in the outer header creation (Outer header creation) of the forwarding action rule.

Optionally, in a case that a fifth condition is met, at least one of the following is determined and/or sent: the first information related to PDU Set information, and the second information related to PDU Set information.

The fifth condition includes at least one of the following:
the first requirement has been obtained;
the fourth information supported by the first object has been obtained;
the local configuration of the third communication device includes the first requirement;
the second communication device supports a PDU Set information-based operation;
the second communication device supports PDU Set information;
the second communication device supports a PDU Set-based operation;
the first communication device supports a PDU Set information-based operation;
the first communication device supports PDU Set information;
the first communication device supports a PDU Set-based operation;
the second communication device enables a PDU Set information-based operation for the first QoS flow;
the second communication device accepts a requirement of applying PDU Set information to the first QoS flow;
the second communication device accepts a requirement of applying a PDU Set information-based operation to the first QoS flow;
the second communication device accepts a PDU Set-based operation for the first QoS flow; and
the second communication device accepts the second information related to PDU Set information.

In another implementation, in a case that a fifth condition is met, the second information related to PDU Set information is determined and/or sent.

In this case, the fifth condition includes at least one of the following:
the first requirement has been obtained;
the fourth information supported by the first object has been obtained;
the local configuration of the third communication device includes the first requirement;
the second communication device supports the second information related to PDU Set information;
the second communication device supports PDU Set information;
the second communication device supports a PDU Set-based operation;
the second communication device supports a PDU Set information-based operation;
the first communication device supports PDU Set information; and
the first communication device supports a PDU Set-based operation.

In an implementation, in a case that an eleventh condition is met, the first information related to PDU Set information is determined and/or sent, where the eleventh condition includes at least one of the following:
at least one of the following has been obtained: the first requirement and the third requirement;
the fourth information supported by the first object has been obtained;
the local configuration of the third communication device includes at least one of the following: the first requirement and the third requirement;
the second communication device supports a PDU Set information-based operation;
the second communication device supports PDU Set information;
the second communication device supports a PDU Set-based operation;
the first communication device supports a PDU Set information-based operation;
the first communication device supports PDU Set information;
the first communication device supports a PDU Set-based operation;
the third communication device has sent the second information related to PDU Set information to the second communication device;
the second communication device enables a PDU Set information-based operation for the first QoS flow;
the second communication device accepts a requirement of applying PDU Set information to the first QoS flow;
the second communication device accepts a requirement of applying a PDU Set information-based operation to the first QoS flow;
the second communication device accepts a PDU Set-based operation for the first QoS flow; and
the second communication device accepts the second information related to PDU Set information.

In an implementation, the PDU Set information includes PDU Set importance.

In an implementation, in a case that a thirteenth condition is met, the third information related to PDU Set information is determined and/or sent.

The thirteenth condition includes at least one of the following:
the second communication device does not support a PDU Set information-based operation;
the second communication device does not support PDU Set information;
the second communication device does not support a PDU Set-based operation;
the sixth information has not been obtained;
the eighth information has not been obtained;
the third communication device has sent the second information related to PDU Set information to the second communication device;
the second communication device has not enabled a PDU Set information-based operation for the first QoS flow;
the second communication device rejects a requirement of applying PDU Set information to the first QoS flow;
the second communication device rejects a requirement of applying a PDU Set information-based operation to the first QoS flow;
the second communication device rejects a PDU Set-based operation for the first QoS flow; and
the second communication device rejects the second information related to PDU Set information.

In an implementation, the thirteenth condition further includes at least one of the following:
the second communication device rejects applying PDU Set QoS to the first QoS flow;
the second communication device rejects applying a PDU Set QoS operation to the first QoS flow;
the second communication device does not support PDU Set QoS; and
the second communication device does not support a PDU Set QoS operation.

For example, when the sixth information and/or the eighth information has not been received from the second communication device (the target base station) in a handover scenario, at least one of the following is implicitly indicated: the second communication device does not support a PDU Set information-based operation; the second communication device does not support PDU Set information; and the second communication device does not support a PDU Set-based operation. It is easy to understand that nothing can be sent when the second communication device (the target base station) does not support at least one of the following: PDU Set information, PDU Set-based operation, and PDU Set information-based operation.

In an implementation, in a case that the thirteenth condition includes at least one of the following, the thirteenth condition further includes that the second communication device supports the PDU Set information-based operation, and the second communication device supports at least one of the PDU Set information:
the second communication device has not enabled a PDU Set information-based operation for the first QoS flow;
the second communication device rejects a requirement of applying PDU Set information to the first QoS flow; and
the second communication device rejects a requirement of applying a PDU Set information-based operation to the first QoS flow.

Optionally, in a case that a sixth condition is met, at least one of the following is determined and/or sent: the second requirement, the first information related to Data Burst information, and the second information related to Data Burst information.

The meeting the sixth condition includes at least one of the following:
the second requirement has been obtained;
the fifth information supported by the first object has been obtained;
the local configuration includes the second requirement;
the second communication device supports a Data Burst information-based operation;
the second communication device supports Data Burst information;
the second communication device supports a Data Burst-based operation;
the first communication device supports a Data Burst information-based operation;
the first communication device supports Data Burst information;
the first communication device supports a Data Burst-based operation;
the second communication device has enabled a Data Burst information-based operation for the first QoS flow;
the second communication device accepts a requirement of applying Data Burst information to the first QoS flow;
the second communication device accepts a requirement of applying a Data Burst information-based operation to the first QoS flow;
the second communication device accepts a Data Burst-based operation for the first QoS flow; and
the second communication device accepts the second information related to Data Burst information.

In another implementation, in a case that a sixth condition is met, the second information related to Data Burst information is determined and/or sent.

The meeting the sixth condition includes at least one of the following:
the second request has been obtained;
the fifth information supported by the first object has been obtained;
the local configuration includes the second requirement;
the second communication device supports the second information related to Data Burst information;
the second communication device supports Data Burst information;
the second communication device supports a Data Burst-based operation;
the second communication device supports a Data Burst information-based operation;
the first communication device supports Data Burst information; and
the first communication device supports a Data Burst-based operation.

In an implementation, in a case that a twelfth condition is met, the first information related to Data Burst information is determined and/or sent, where the twelfth condition includes at least one of the following:
at least one of the following has been obtained: the second requirement and the fourth requirement;
the fifth information supported by the first object has been obtained;
the local configuration includes at least one of the following: the second requirement and the fourth requirement;
the second communication device supports a Data Burst information-based operation;
the second communication device supports Data Burst information;
the second communication device supports a Data Burst-based operation;
the first communication device supports a Data Burst information-based operation;
the first communication device supports Data Burst information;
the first communication device supports a Data Burst-based operation;
the third communication device has sent the second information related to Data Burst information to the second communication device;
the second communication device has enabled a Data Burst information-based operation for the first QoS flow;
the second communication device accepts a requirement of applying Data Burst information to the first QoS flow;
the second communication device accepts a requirement of applying a Data Burst information-based operation to the first QoS flow;
the second communication device accepts a Data Burst-based operation for the first QoS flow; and
the second communication device accepts the second information related to Data Burst information.

In an implementation,
in a case that a fourteenth condition is met, the third information related to Data Burst information is determined and/or sent.

The fourteenth condition includes at least one of the following:
the seventh information has not been obtained;
the ninth information has not been obtained;
the second communication device does not support a Data Burst information-based operation;
the second communication device does not support Data Burst information;
the second communication device does not support a Data Burst-based operation;
the third communication device has sent the second information related to Data Burst information to the second communication device;
the second communication device has not enabled a Data Burst information-based operation for a first QoS flow;
the second communication device rejects a requirement of applying Data Burst information to the first QoS flow;
the second communication device rejects a requirement of applying a Data Burst information-based operation to the first QoS flow;
the second communication device rejects a Data Burst-based operation for the first QoS flow; and
the second communication device rejects the second information related to Data Burst information.

For example, when the seventh information and/or the ninth information has not been received from the second communication device (the target base station) in a handover scenario, at least one of the following is implicitly indicated: the second communication device does not support a Data Burst information-based operation; the second communication device does not support PDU Set information; and the second communication device does not support a Data Burst-based operation. It is easy to understand that nothing can be sent when the second communication device (the target base station) does not support at least one of the following: Data Burst information, Data Burst-based operation, and Data Burst information-based operation.

In an implementation, the fourteenth condition further includes that the second communication device supports the Data Burst information-based operation, and the second communication device supports at least one of the Data Burst information, in a case that the fourteenth condition includes at least one of the following:
the second communication device has not enabled a Data Burst information-based operation for a first QoS flow;
the second communication device rejects a requirement of applying Data Burst information to the first QoS flow; and
the second communication device rejects a requirement of applying a Data Burst information-based operation to the first QoS flow.

Optionally, the method further includes:
obtaining, by the third communication device, protocol description information; and
based on at least one of the protocol description information, the first requirement, the fourth information supported by the first object, the local configuration of the third communication device, the sixth information, the eighth information, and the tenth information, determining and/or sending at least one of the following: the first information related to PDU Set information, the second information related to PDU Set information, the third information related to PDU Set information, and the fourth information supported by the first object;
   or
based on at least one of the protocol description information, the second requirement, the fifth information supported by the first object, the local configuration of the third communication device, the seventh information, the ninth information, and the eleventh information, determining and/or sending at least one of the following: the first information related to Data Burst information, the second information related to Data Burst information, the third information related to Data Burst information, and the fifth information supported by the first object;

In an implementation, the sixth information has been received, and the sixth information explicitly indicates at least one of the following:
the second communication device rejects the second information related to PDU Set information;
the second communication device rejects or does not support PDU Set information;
the second communication device rejects or does not support a PDU Set-based operation; and
the second communication device rejects or does not support a PDU Set information-based operation.

In another implementation, absence of receiving the sixth information implicitly indicates at least one of the following:
the second communication device rejects the second information related to PDU Set information;
the second communication device rejects or does not support PDU Set information;
the second communication device rejects or does not support a PDU Set-based operation; and
the second communication device rejects or does not support a PDU Set information-based operation.

In an implementation, the protocol description information is used to determine at least one of the following: PDU Set information and Data Burst information.

According to this embodiment of this application, the third communication device sends at least one of PDU Set information-related information and Data Burst information-related information to the first communication device, and the first communication device marks a data packet based on at least one of the obtained PDU Set information-related information and Data Burst information-related information, so as to implement marking of data packets on demand or as required. This avoids resource waste and extra bandwidth occupation, featuring greater flexibility.

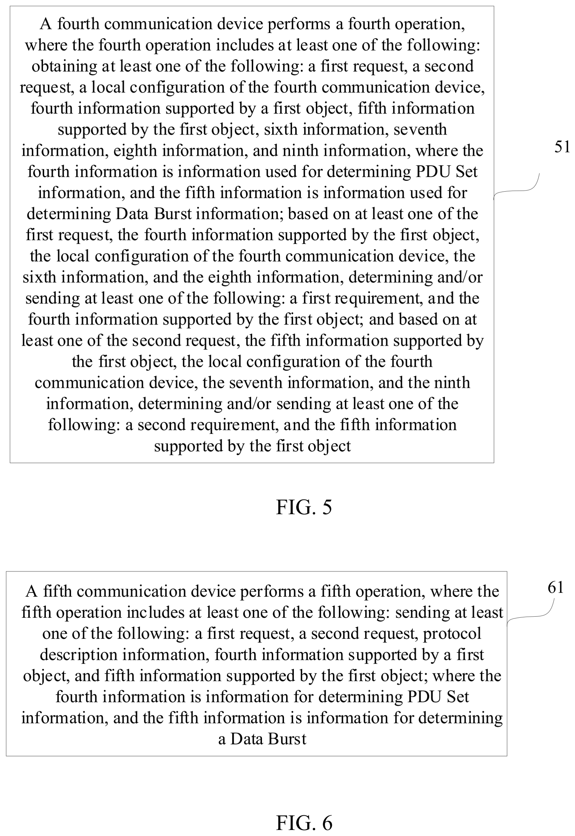

Referring to FIG. 5, an embodiment of this application provides an information marking method, applied to a fourth communication device. The fourth communication device includes but is not limited to a CN network element (such as a PCF), and in this case, the CN network element can be referred to as a third CN network element, and the method includes the following steps.

Step 51: The fourth communication device performs a fourth operation, where the fourth operation includes at least one of the following:
obtaining at least one of the following: a first request, a second request, a local configuration of the fourth communication device, fourth information supported by a first object, fifth information supported by the first object, sixth information, seventh information, eighth information, and ninth information;
based on at least one of the first request, the fourth information supported by the first object, the local configuration of the fourth communication device, the sixth information, and the eighth information, determining and/or sending at least one of the following: a first requirement, and the fourth information supported by the first object; and
based on at least one of the second request, the fifth information supported by the first object, the local configuration of the fourth communication device, the seventh information, and the ninth information, determining and/or sending at least one of the following: a second requirement, and the fifth information supported by the first object;
where
the fourth information is information used for determining PDU Set information;
the fifth information is information used for determining Data Burst information;
the sixth information is used for indicating at least one of the following: a second communication device supports or does not support a PDU Set information-based operation, and the second communication device supports or does not support PDU Set information;
the seventh information is used for indicating at least one of the following: the second communication device supports or does not support a Data Burst information-based operation, and the second communication device supports or does not support Data Burst information; and
the first object includes at least one of the following: a first traffic flow, a first protocol, a first application, a first packet header, and a first QoS flow.

The first request is used to request at least one of the following:
monitoring PDU Set information corresponding to a data packet;
marking a data packet with PDU Set information that is corresponding to a PDU Set to which the data packet belongs;
marking a second packet header of a data packet with PDU Set information based on information for determining the PDU Set information in a first packet header of the data packet;
applying PDU Set information;
applying a PDU Set information-based operation; and
performing a PDU Set-based operation.

The first requirement is used to require at least one of the following:
monitoring PDU Set information corresponding to a data packet;
marking a data packet with PDU Set information that is corresponding to a PDU Set to which the data packet belongs;
marking a second packet header of a data packet with PDU Set information based on information for determining the PDU Set information in a first packet header of the data packet;
applying PDU Set information;
applying a PDU Set information-based operation; and
performing a PDU Set-based operation.

In an implementation, the first request or the first requirement is different from the PDU Set QoS parameter.

In an implementation, the PDU Set information does not include the PDU Set QoS parameter.

In an implementation, the PDU information-based operation or the PDU Set-based operation does not include at least one of the following: PDU Set QoS operation, and applying PDU Set QoS.

In another implementation, the PDU Set information includes: PDU Set QoS.

In another implementation, the PDU information-based operation or the PDU Set-based operation includes at least one of the following: PDU Set QoS operation, and applying PDU Set QoS.

In an implementation, the PDU Set-based operation may include, but is not limited to, at least one of the following: PDU Set information-based operation, and PDU Set QoS operation.

In another implementation, the PDU information-based operation or the PDU Set-based operation includes one of the following:
PDU Set-based operation other than PDU Set QoS operation; and
PDU Set information-based operation other than PDU Set QoS operation; or
the PDU information-based operation or the PDU Set-based operation does not include at least one of the following: PDU Set QoS operation, and applying PDU Set QoS.

The third requirement is used to require at least one of the following:
marking a data packet with PDU Set information that is corresponding to a PDU Set to which the data packet belongs; and
marking a second packet header of a data packet with PDU Set information based on information for determining the PDU Set information in a first packet header of the data packet.

The second request is used for requesting at least one of the following:
monitoring Data burst information corresponding to a data packet;
marking a data packet with Data Burst information that is corresponding to a Data Burst to which the data packet belongs;
marking a second packet header of a data packet with a Data Burst end indicator based on information for determining the Data Burst end indicator in a first packet header of the data packet;
applying Data Burst information;
applying a Data Burst information-based operation;
performing a Data Burst-based operation; and
performing a terminal power-saving operation.

The second requirement is used to require at least one of the following:
monitoring Data burst information corresponding to a data packet;
marking a data packet with Data Burst information that is corresponding to a Data Burst to which the data packet belongs;
marking a second packet header of a data packet with a Data Burst end indicator based on information for determining the Data Burst end indicator in a first packet header of the data packet;
marking a second packet header of a data packet with Data Burst information based on information for determining the Data Burst information in a first packet header of the data packet;
applying Data Burst information;
applying a Data Burst information-based operation;
performing a Data Burst information-based operation; and
performing a terminal power-saving operation.

A fourth requirement is used to require at least one of the following:
marking a data packet with Data Burst information that is corresponding to a Data Burst to which the data packet belongs; and
marking a second packet header of a data packet with Data Burst information based on information for determining the Data Burst information in a first packet header of the data packet.

Optionally, the first protocol is a protocol described by the protocol description information.

Optionally, at least one of the first request and the second request is obtained from a first source end. The first source end includes at least one of an AF, a NEF, and a terminal.

Optionally, at least one of the first requirement and the second requirement is sent to a first target end. The first target end includes at least one of the following: an SMF.

Optionally, marking a data packet with Data Burst information corresponding to a Data Burst to which the data packet belongs is, for example, marking the last data packet of the Data Burst with a Data Burst end indicator.

In an implementation, the N-th requirement is included in a first policy (such as a PCC rule) and sent.

In an implementation, the N-th requirement is the N-th requirement corresponding to the first policy.

In an implementation, the N-th request is the N-th request corresponding to the first traffic flow.

In an implementation, the N-th information is first information related to PDU Set information corresponding to the first QoS flow.

A value of N is one of the following: 1 or 2.

Optionally, in a case that a seventh condition is met, at least one of the following is determined and/or sent: the first requirement and the third requirement.

The seventh condition includes at least one of the following:
the first request has been obtained;
the fourth information supported by the first object has been obtained;
the local configuration of the fourth communication device includes the first requirement;
the second communication device supports a PDU Set information-based operation;
the second communication device supports PDU Set information;
the first communication device supports a PDU Set information-based operation; and
the first communication device supports PDU Set information.

Optionally, in a case that an eighth condition is met, at least one of the following is determined and/or sent: the second requirement and the fourth requirement.

The eighth condition being met includes at least one of the following:
the second request has been obtained;
the fifth information supported by the first object has been obtained;
the local configuration of the fourth communication device includes the second requirement;
the second communication device supports a Data Burst information-based operation;
the second communication device supports Data Burst information;
the first communication device supports a Data Burst information-based operation; and
the first communication device supports Data Burst information.

Optionally, the method further includes:
obtaining, by the fourth communication device, protocol description information; and
based on at least one of the protocol description information, the first request, the fourth information supported by the first object, the local configuration of the fourth communication device, the sixth information, and the eighth information, determining and/or sending at least one of the following: a first requirement, and the fourth information supported by the first object;
   or
based on at least one of the protocol description information, the second request, the fifth information supported by the first object, the local configuration of the fourth communication device, the seventh information, and the ninth information, determining and/or sending at least one of the following: a second requirement, and the fifth information supported by the first object.

In an implementation, the protocol description information is used to determine at least one of the following: PDU Set information and Data Burst information.

Optionally, the PDU Set-based operation or the PDU Set information-based operation includes at least one of the following:
handling a data packet based on a data packet set granularity;
applying PDU Set information;
applying PDU Set QoS;
PDU Set QoS handling;
applying PDU Set importance;
PDU Set importance-based operation;
applying PDU Set Size;
PDU Set Size-based operation;
applying PDU Set end information;
PDU Set end information-based operation;
applying PDU Set start information;
PDU Set start information-based operation;
applying a sequence number of a data packet in a PDU Set;
operation based on a sequence number of a data packet in a PDU Set;
applying a PDU Set sequence number; and
PDU Set sequence number-based operation.

Optionally, the PDU Set information-based operation includes at least one of the following:
handling a data packet based on a data packet set granularity;
applying PDU Set information;
applying PDU Set importance;
PDU Set importance-based operation;
applying PDU Set Size;
PDU Set Size-based operation;
applying PDU Set end information;
PDU Set end information-based operation;
applying PDU Set start information;
PDU Set start information-based operation;
applying a sequence number of a data packet in a PDU Set;
operation based on a sequence number of a data packet in a PDU Set;
applying a PDU Set sequence number; and
PDU Set sequence number-based operation.

Optionally, the Data Burst-based operation or Data Burst information-based operation includes at least one of the following:
a power-saving operation performed on a terminal based on Data Burst information; and
a Data Burst end indicator-based operation.

Optionally, the Data Burst end indicator-based operation includes performing a power-saving operation on the terminal based on the Data Burst end indicator.

According to this embodiment of this application, the fourth communication device sends, to the third communication device, triggering information related to at least one of PDU Set information-related information and Data Burst information-related information, and the third communication device sends at least one of PDU Set information-related information and Data Burst information-related information to the first communication device, and the first communication device marks a data packet based on at least one of the obtained PDU Set information-related information and Data Burst information-related information, so as to implement marking of data packets on demand or as required. This avoids resource waste and extra bandwidth occupation, featuring greater flexibility.

Referring to FIG. 6, an embodiment of this application provides an information marking method, applied to a fifth communication device. The fifth communication device includes but is not limited to a CN network element (such as an AF), and in this case, the CN network element can be referred to as a fourth CN network element, and the method includes the following steps.

Step 61: The fifth communication device performs a fifth operation, where the fifth operation includes at least one of the following:
sending at least one of the following: a first request, a second request, protocol description information, fourth information supported by a first object, and fifth information supported by the first object; where the fourth information is information used for determining PDU Set information, and the fifth information is information for determining a Data Burst;
where
the first object includes at least one of the following: a first traffic flow, a first protocol, a first application, a first packet header, and a first QoS flow.

The first request is used to request at least one of the following:
monitoring PDU Set information corresponding to a data packet;
marking a data packet with PDU Set information that is corresponding to a PDU Set to which the data packet belongs;
marking a second packet header of a data packet with PDU Set information based on information for determining the PDU Set information in a first packet header of the data packet;
applying PDU Set information;
applying a PDU Set information-based operation; and
performing a PDU Set-based operation.

The second request is used to request at least one of the following:
monitoring Data burst information corresponding to a data packet;
marking a data packet with Data Burst information that is corresponding to a Data Burst to which the data packet belongs;
marking a second packet header of a data packet with a Data Burst end indicator based on information for determining the Data Burst end indicator in a first packet header of the data packet;
applying Data Burst information;
applying a Data Burst information-based operation;
performing a Data Burst-based operation; and
performing a terminal power-saving operation.

Optionally, at least one of the first request and the second request is sent to a second target end. The second target end includes at least one of a NEF, a PCF, and a TSCTSF.

Optionally, the PDU Set-based operation or the PDU Set information-based operation includes at least one of the following:
handling a data packet based on a data packet set granularity;
applying PDU Set information;
applying PDU Set QoS;
PDU Set QoS handling;
applying PDU Set importance;
PDU Set importance-based operation;
applying PDU Set Size;
PDU Set Size-based operation;
applying PDU Set end information;
PDU Set end information-based operation;
applying PDU Set start information;
PDU Set start information-based operation;
applying a sequence number of a data packet in a PDU Set;
operation based on a sequence number of a data packet in a PDU Set;
applying a PDU Set sequence number; and
PDU Set sequence number-based operation.

Optionally, the PDU Set information-based operation includes at least one of the following:
handling a data packet based on a data packet set granularity;
applying PDU Set information;
applying PDU Set importance;
PDU Set importance-based operation;
applying PDU Set Size;
PDU Set Size-based operation;
applying PDU Set end information;
PDU Set end information-based operation;
applying PDU Set start information;
PDU Set start information-based operation;
applying a sequence number of a data packet in a PDU Set;
operation based on a sequence number of a data packet in a PDU Set;
applying a PDU Set sequence number; and
PDU Set sequence number-based operation.

Optionally, the Data Burst-based operation or Data Burst information-based operation includes at least one of the following:
a power-saving operation performed on a terminal based on Data Burst information; and
a Data Burst end indicator-based operation.

Optionally, the Data Burst end indicator-based operation includes performing a power-saving operation on the terminal based on the Data Burst end indicator.

According to this embodiment of this application, indicating to the network whether information used for determining data packet marking is supported, or requesting data packet marking implements marking of data packets on demand or as required. This avoids resource waste and extra bandwidth occupation, featuring greater
The following describes the information marking method in the embodiments of this application with reference to specific application scenarios.

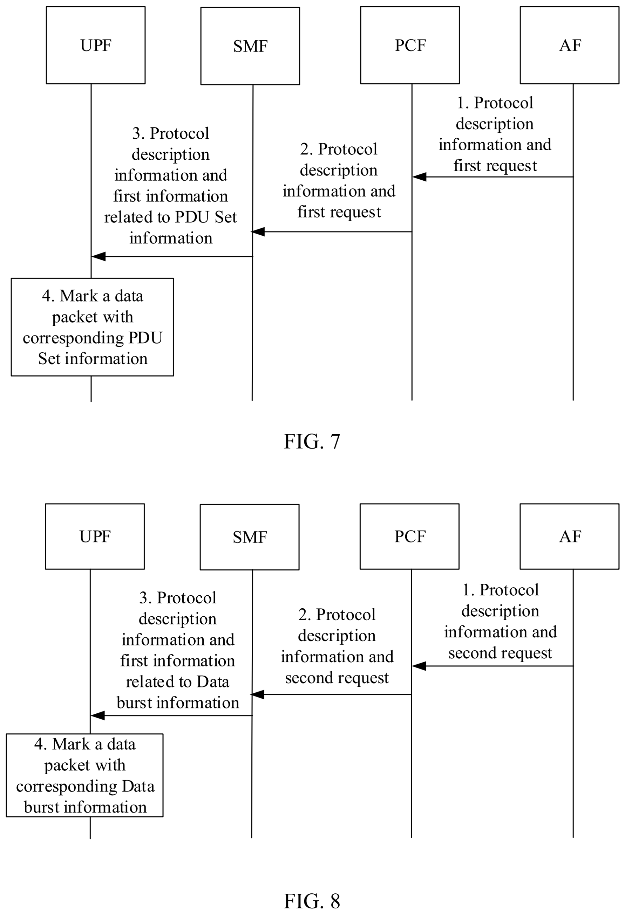

Application scenario 1 in the embodiments of this application mainly describes interaction between the AF, the PCF, the SMF, and the UPF, and the process of performing a PDU Set information-related operation. Referring to FIG. 7, the procedure includes the following steps.

Step 1: The AF sends, through the NEF or directly, a first request and protocol description information to the PCF.

Step 2: The PCF performs a fourth operation based on the first request and the protocol description information, specifically as described in the embodiment of the fourth communication device.

Step 3: The SMF performs a second operation based on a first requirement and the protocol description information, specifically as described in the embodiment of the second communication device.

Step 4: The UPF performs a first sub-operation based on first information related to PDU Set information and the protocol description information, for example, marking a data packet with corresponding PDU Set information, as specifically described in the embodiment of the first communication device.

Application Scenario 2 in the embodiments of this application:
Application scenario 2 in the embodiments of this application mainly describes interaction between the AF, the PCF, the SMF, and the UPF, and the process of performing a Data Burst information-related operation. Referring to FIG. 8, the procedure includes the following steps.

Step 1: The AF sends, through the NEF or directly, a second request and protocol description information to the PCF.

Step 2: The PCF performs a fourth operation based on the second request and the protocol description information, specifically as described in the embodiment of the fourth communication device.

Step 3: The SMF performs a third operation based on a second requirement and the protocol description information, specifically as described in the embodiment of the third communication device.

Step 4: The UPF performs a second sub-operation based on first information related to Data Burst information and the protocol description information, for example, marking a data packet with corresponding Data Burst information, as specifically described in the embodiment of the first communication device.

In the information marking method provided in this embodiment of this application, the executing subject can be an information marking apparatus. In the embodiments of this application, the information marking apparatus provided in the embodiments of this application is described by using the information marking method being executed by the information marking apparatus as an example.

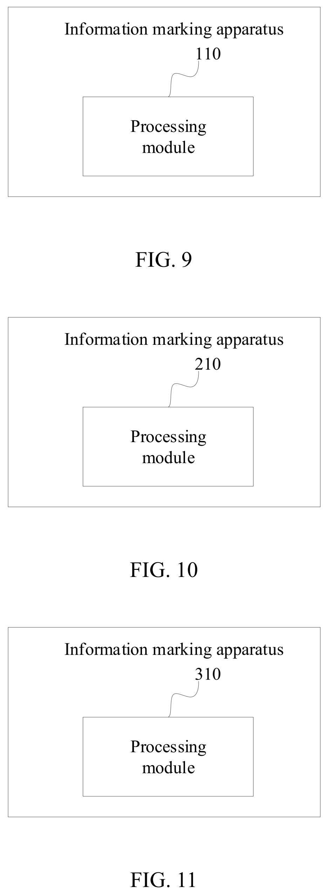

FIG. 9 is a first schematic structural diagram of an information marking apparatus according to an embodiment of this application. As shown in FIG. 9, the information marking apparatus is applied to a first communication device, and the information marking apparatus includes:
a processing module 110, configured to perform a first operation.

The first operation includes at least one of the following:
sending tenth information, where the tenth information is used for indicating at least one of the following: the first communication device supports or does not support a PDU Set information-based operation, and the first communication device supports or does not support PDU Set information;
sending eleventh information, where the eleventh information is used for indicating at least one of the following: the first communication device supports or does not support a Data Burst information-based operation, and the first communication device supports or does not support Data Burst information;
a first sub-operation;
a second sub-operation;
a third sub-operation; and
a fourth sub-operation;
where
the first sub-operation includes:
   obtaining first information related to packet data unit set PDU Set information, where the first information related to PDU Set information includes at least one of the following: information for requesting to perform a PDU Set information-related operation; and fourth information supported by a first object, where the fourth information is information used for determining PDU Set information; and
   performing marking on a data packet with corresponding PDU Set information based on the first information related to PDU Set information.

The second sub-operation includes:
obtaining first information related to data burst (Data Burst) information, where the first information related to the Data Burst information includes at least one of the following: fifth information supported by the first object, information for requesting to perform a Data Burst information-related operation; and fifth information supported by the first object, where the fifth information is information for determining a Data Burst; and
based on the first information related to the Data Burst information, performing marking on a data packet with corresponding Data Burst information.

The third sub-operation includes:
obtaining third information related to PDU Set information, where the third information related to PDU Set information is used for requesting at least one of the following: not marking a data packet with PDU Set information corresponding to a PDU Set to which the data packet belongs; not applying PDU Set information; not applying a PDU Set information-based operation; and not performing a PDU Set information-related operation; and
based on the third information related to PDU Set information, performing no marking on a data packet with corresponding PDU Set information, or not performing a PDU Set information-related operation.

The fourth sub-operation includes:
obtaining third information related to Data Burst information, where the third information related to Data Burst information is used for requesting at least one of the following: not marking Data Burst information corresponding to a Data Burst to which a data packet belongs; not applying Data Burst information; not applying a Data Burst information-based operation; and not performing a Data Burst information-related operation; and
based on the third information related to Data Burst information, performing no marking on a data packet with corresponding Data Burst information, or not performing a Data Burst information-related operation.

The first object includes at least one of the following: a first traffic flow, a first protocol, a first application, a first packet header, and a first QoS flow.

Optionally, the information for determining the PDU Set information includes at least one of the following:
basis information that is used for determining PDU Set information and that the first object supports or supports providing; and
PDU Set information.

Optionally, the PDU Set information includes at least one of the following:
PDU Set importance;
PDU Set size (Size);
PDU Set end indicator information;
PDU Set start indicator information;
a sequence number of a data packet in a PDU Set;
PDU Set sequence number;
PDU Set duration;
an interval between PDU Sets or an interval between a PDU set and a next PDU set; and
PDU Set periodicity.

Optionally, the information for determining the Data Burst information includes at least one of the following:
basis information that is used for determining Data Burst information and that the first object supports or supports providing; and
Data Burst information.

Optionally, the Data Burst information includes at least one of the following:
Data Burst size;
Data Burst end indicator information;
Data Burst start indicator information;
a sequence number of a data packet in a Data Burst;
a Data Burst sequence number;
Data Burst duration;
an interval between Data Bursts or an interval between a Data Burst and a next Data Burst; and
Data Burst periodicity.

Optionally, the PDU Set information-related operation includes at least one of the following:
monitoring PDU Set information corresponding to a data packet;
marking a data packet with PDU Set information that is corresponding to a PDU Set to which the data packet belongs;
marking a second packet header of a data packet with PDU Set information based on information for determining the PDU Set information in a first packet header of the data packet;
applying PDU Set information;
applying a PDU Set-based operation; and
applying a PDU Set information-based operation.

In an implementation, the marking a data packet with PDU Set information that is corresponding to a PDU Set to which the data packet belongs includes: marking a data packet with PDU Set information that is corresponding to a PDU Set to which the data packet belongs, and the PDU Set information includes at least one of the following:
PDU Set importance;
PDU Set size (Size);
PDU Set end indicator information;
PDU Set start indicator information;
a sequence number of a data packet in a PDU Set;
PDU Set sequence number;
PDU Set duration;
an interval between PDU Sets or an interval between a PDU set and a next PDU set; and
PDU Set periodicity.

Optionally, the PDU Set-based operation or the PDU Set information-based operation includes at least one of the following:
handling a data packet based on a data packet set granularity;
applying PDU Set information;
applying PDU Set QoS;
PDU Set QoS handling;
applying PDU Set importance;
PDU Set importance-based operation;
applying PDU Set Size;
PDU Set Size-based operation;
applying PDU Set end information;
PDU Set end information-based operation;
applying PDU Set start information;
PDU Set start information-based operation;
applying a sequence number of a data packet in a PDU Set;
operation based on a sequence number of a data packet in a PDU Set;
applying a PDU Set sequence number; and
PDU Set sequence number-based operation.

Optionally, the PDU Set information-based operation includes at least one of the following:
handling a data packet based on a data packet set granularity;
applying PDU Set information;
applying PDU Set importance;
PDU Set importance-based operation;
applying PDU Set Size;
PDU Set Size-based operation;
applying PDU Set end information;
PDU Set end information-based operation;
applying PDU Set start information;
PDU Set start information-based operation;
applying a sequence number of a data packet in a PDU Set;
operation based on a sequence number of a data packet in a PDU Set;
applying a PDU Set sequence number; and
PDU Set sequence number-based operation.

Optionally, the Data Burst information-related operation includes at least one of the following:
marking a data packet with Data Burst information that is corresponding to a Data Burst to which the data packet belongs;
monitoring Data burst information corresponding to a data packet;
marking a second packet header of a data packet with a Data Burst end indicator based on information for determining the Data Burst end indicator in a first packet header of the data packet;
applying Data Burst information; and
applying a Data Burst information-based operation.

Optionally, the Data Burst-based operation or Data Burst information-based operation includes at least one of the following:
a power-saving operation performed on a terminal based on Data Burst information; and
a Data Burst end indicator-based operation.

Optionally, the first information related to the PDU Set information is different from protocol description information.

Optionally, the performing marking on a data packet with corresponding PDU Set information based on the first information related to PDU Set information includes at least one of the following:
in a case that a first condition is met, performing marking on the data packet with the corresponding PDU Set information; and
in a case that a second condition is met, not performing marking on the data packet with the corresponding PDU Set information, or setting a value of the PDU Set information to a first value, where the first value is used to indicate one of the following: the PDU Set information being unknown, not applying the PDU Set information, and not applying PDU Set information-based handling.

The meeting the first condition includes at least one of the following:
the first information related to the PDU Set information has been obtained.

The meeting the second condition includes at least one of the following:
the first information related to the PDU Set information has not been obtained.

Optionally, the performing marking on a data packet with corresponding Data Burst information based on the first information related to Data Burst information includes at least one of the following:
in a case that a third condition is met, performing marking on the data packet with the corresponding Data Burst information; and
in a case that a fourth condition is met, not performing marking on the data packet with the corresponding Data Burst information, or setting a value of the Data Burst information to a second value, where the second value is used to indicate one of the following: being unknown whether the data packet is an end data packet of a Data Burst, not applying a data burst end indicator, and not applying data burst end indicator-based handling;
where
the meeting the third condition includes at least one of the following:
   the first information related to the Data Burst information has been obtained;
   where
   the meeting the fourth condition includes at least one of the following:
      the first information related to the Data Burst information has not been obtained.

The apparatus in this embodiment can be configured to execute the method in any one of the foregoing method embodiments on the first communication device side, and its specific implementation processes and technical effects are the same as those in the method embodiments on the first communication device side. For details, refer to the detailed description in the method embodiments on the first communication device side. Details are not repeated here.

FIG. 10 is a second schematic structural diagram of an information marking apparatus according to an embodiment of this application. As shown in FIG. 10, the information marking apparatus is applied to a second communication device, and the information marking apparatus includes:
a processing module 210, configured to perform a second operation, where the second operation includes at least one of the following:
sending sixth information, where the sixth information is used for indicating at least one of the following: the second communication device supports or does not support a PDU Set information-based operation, the second communication device supports or does not support PDU Set information, and the second communication device supports or does not support a PDU Set-based operation; where the PDU Set information includes PDU Set importance;
sending seventh information, where the seventh information is used for indicating at least one of the following: the second communication device supports or does not support a Data Burst information-based operation, and the second communication device supports or does not support Data Burst information;
sending eighth information;
sending ninth information;
obtaining third information, where the third information includes at least one of the following: second information related to PDU Set information and second information related to Data Burst information; and
performing a second operation based on the third information, including at least one of the following:
   accepting or rejecting the second information related to PDU Set information;
   sending eighth information;
   PDU Set information-based operation;
   PDU Set-based operation;
   accepting or rejecting the second information related to Data Burst information;
   sending ninth information;
   Data Burst information-based operation; and
   Data Burst-based operation;
   where
   the eighth information is used for indicating one of the following: PDU Set information-based operation having been enabled for a first QoS flow, accepting a requirement of applying PDU Set information to the first QoS flow, accepting a requirement of applying a PDU Set information-based operation to the first QoS flow, PDU Set information-based operation having not been enabled for the first QoS flow, rejecting a requirement of applying PDU Set information to the first QoS flow, rejecting a requirement of applying a PDU Set information-based operation to the first QoS flow, accepting performing a PDU Set-based operation on the first QoS flow, rejecting performing a PDU Set-based operation on the first QoS flow, accepting the second information related to PDU Set information, and rejecting the second information related to PDU Set information; and
   the ninth information is used for indicating one of the following: Data Burst information-based operation having been enabled for the first QoS flow, accepting a requirement of applying Data Burst information to the first QoS flow, accepting a requirement of applying a Data Burst information-based operation to the first QoS flow, Data Burst information-based operation having not been enabled for the first QoS flow, rejecting a requirement of applying Data Burst information to the first QoS flow, rejecting a requirement of applying a Data Burst information-based operation to the first QoS flow, accepting performing a Data Burst-based operation on the first QoS flow, rejecting performing a Data Burst-based operation on the first QoS flow, accepting the second information related to Data Burst information, and rejecting the second information related to Data Burst information.

The second information related to PDU Set information is used for at least one of the following:
requiring applying PDU Set information;
requiring applying a PDU Set information-based operation;
performing a PDU Set-based operation; and
indicating that a second packet header of a data packet includes PDU Set information;
where
the second information related to Data Burst information is used for at least one of the following:
   requiring applying Data Burst information;
   requiring applying a Data Burst information-based operation;
   Data Burst-based operation; and
   indicating that the second packet header of the data packet includes Data Burst information.

Optionally, the processing module 210 is configured to send the eighth information in a case that a ninth condition is met, and the eighth information includes information used for indicating one of the following:
accepting the second information related to PDU Set information;
PDU Set information-based operation having been enabled for a first QoS flow,
accepting a requirement of applying PDU Set information to the first QoS flow;
accepting a requirement of applying a PDU Set information-based operation to the first QoS flow; and
accepting performing a PDU Set-based operation on the first QoS flow;
where
the meeting the ninth condition includes at least one of the following:
   the second communication device accepts the second information related to PDU Set information;
   the second communication device accepts a requirement of applying PDU Set information to the first QoS flow;
   the second communication device accepts a requirement of applying a PDU Set information-based operation to the first QoS flow;
   the terminal moves between RAN network elements;
   the second communication device support a PDU Set information-based operation;
   the second communication device accepts at least one or any one PDU Set QoS parameter;
   the second communication device accepts at least one or any one piece of PDU Set information;
   the second communication device accepts at least one or any one PDU Set parameter, where the PDU Set parameter includes at least one of the following: PDU QoS parameter and PDU Set information;
   the second communication device accepts at least one or any one piece of PDU Set information;
   the second communication device accepts at least one or any one PDU Set-based operation; and
   the second communication device accepts at least one or any one PDU Set information-based operation.

Optionally, the processing module 210 is configured to send the ninth information in a case that a tenth condition is met.

The meeting the tenth condition includes at least one of the following:
the second communication device accepts the second information related to Data Burst information;
the second communication device accepts a requirement of applying Data Burst information to the first QoS flow;
the second communication device accepts a requirement of applying a Data Burst information-based operation to the first QoS flow;
the terminal moves between RAN network elements; and
the second communication device supports a Data Burst information-based operation.

Optionally, the PDU Set information includes one of the following:
PDU Set information other than PDU Set QoS; and
PDU Set information unrelated to QoS;
   or,
the PDU Set information does not include: PDU Set QoS.

Optionally, the PDU information-based operation or the PDU Set-based operation includes one of the following:
PDU Set-based operation other than PDU Set QoS operation; and
PDU Set information-based operation other than PDU Set QoS operation;
   or
the PDU information-based operation or the PDU Set-based operation does not include at least one of the following: PDU Set QoS operation, and applying PDU Set QoS.

Optionally, the PDU Set-based operation other than the PDU Set QoS operation, or the PDU Set information-based operation other than the PDU Set QoS operation, or the PDU Set information-based operation includes at least one of the following:
handling a data packet based on a data packet set granularity;
applying PDU Set information;
applying PDU Set importance;
PDU Set importance-based operation;
applying PDU Set Size;
PDU Set Size-based operation;
applying PDU Set end information;
PDU Set end information-based operation;
applying PDU Set start information;
PDU Set start information-based operation;
applying a sequence number of a data packet in a PDU Set;
operation based on a sequence number of a data packet in a PDU Set;
applying a PDU Set sequence number; and
PDU Set sequence number-based operation.

Optionally, the PDU Set-based operation or the PDU Set information-based operation includes at least one of the following:
handling a data packet based on a data packet set granularity;
applying PDU Set information;
applying PDU Set QoS;
PDU Set QoS handling;
applying PDU Set importance;
PDU Set importance-based operation;
applying PDU Set Size;
PDU Set Size-based operation;
applying PDU Set end information;
PDU Set end information-based operation;
applying PDU Set start information;
PDU Set start information-based operation;
applying a sequence number of a data packet in a PDU Set;
operation based on a sequence number of a data packet in a PDU Set;
applying a PDU Set sequence number; and
PDU Set sequence number-based operation.

Optionally, the PDU Set importance-based operation includes packet discarding based on PDU Set importance.

Optionally, the Data Burst-based operation or Data Burst information-based operation includes at least one of the following:
a power-saving operation performed on the terminal based on Data Burst information; and
a Data Burst end indicator-based operation.

Optionally, the PDU Set information includes at least one of the following:
PDU Set importance;
PDU Set size (Size);
PDU Set end indicator information;
PDU Set start indicator information;
a sequence number of a data packet in a PDU Set;
PDU Set sequence number;
PDU Set duration;
an interval between PDU Sets or an interval between a PDU set and a next PDU set; and
PDU Set periodicity.

Optionally, the Data Burst information includes at least one of the following:
Data Burst size;
Data Burst end indicator information;
Data Burst start indicator information;
a sequence number of a data packet in a Data Burst;
a Data Burst sequence number;
Data Burst duration;
an interval between Data Bursts or an interval between a Data Burst and a next Data Burst; and
Data Burst periodicity.

The apparatus in this embodiment can be configured to execute the method in any one of the foregoing method embodiments on the second communication device side, and its specific implementation processes and technical effects are the same as those in the method embodiments on the second communication device side. For details, refer to the detailed description in the method embodiments on the second communication device side. Details are not repeated here.

FIG. 11 is a third schematic structural diagram of an information marking apparatus according to an embodiment of this application. As shown in FIG. 11, the information marking apparatus is applied to a third communication device, and the information marking apparatus includes:
a processing module 310, configured to perform a third operation, where the third operation includes at least one of the following:
obtaining at least one of the following: a first requirement, a second requirement, a third requirement, a fourth requirement, a local configuration of the third communication device, fourth information supported by a first object, fifth information supported by the first object, sixth information, seventh information, eighth information, ninth information, tenth information, and eleventh information;
sending at least one of the following to a fourth communication device: the sixth information, the seventh information, the eighth information, the ninth information, the tenth information, and the eleventh information;
based on at least one of the first requirement, the third requirement, the fourth information supported by the first object, the local configuration of the third communication device, the sixth information, the eighth information, and the tenth information, determining and/or sending at least one of the following: first information related to PDU Set information, second information related to PDU Set information, third information related to PDU Set information, and fourth information supported by the first object;
based on at least one of the second requirement, the fourth requirement, the fifth information supported by the first object, the local configuration of the third communication device, the seventh information, the ninth information, and the eleventh information, determining and/or sending at least one of the following: first information related to Data Burst information, second information related to Data Burst information, third information related to Data Burst information, and the fifth information supported by the first object;
sending at least one of the following to a first communication device: the first information related to PDU Set information, the third information related to PDU Set information, the first information related to Data Burst information, the third information related to Data Burst information; and
sending at least one of the following to a second communication device: the second information related to PDU Set information, and the second information related to Data Burst information.

The fourth information is information used for determining PDU Set information;
the fifth information is information used for determining Data Burst information;
the sixth information is used for indicating at least one of the following: the second communication device supports or does not support a PDU Set information-based operation, the second communication device supports or does not support PDU Set information, and the second communication device supports or does not support a PDU Set-based operation; where the PDU Set information includes PDU Set importance;
the seventh information is used for indicating at least one of the following: the second communication device supports or does not support a Data Burst information-based operation, and the second communication device supports or does not support Data Burst information;
the eighth information is used for indicating one of the following: PDU Set information-based operation having been enabled for a first QoS flow, accepting a requirement of applying PDU Set information to the first QoS flow, accepting a requirement of applying a PDU Set information-based operation to the first QoS flow, PDU Set information-based operation having not been enabled for the first QoS flow, rejecting a requirement of applying PDU Set information to the first QoS flow, rejecting a requirement of applying a PDU Set information-based operation to the first QoS flow, accepting performing a PDU Set-based operation on the first QoS flow, rejecting performing a PDU Set-based operation on the first QoS flow, accepting the second information related to PDU Set information, and rejecting the second information related to PDU Set information;
the ninth information is used for indicating one of the following: Data Burst information-based operation having been enabled for the first QoS flow, accepting a requirement of applying Data Burst information to the first QoS flow, accepting a requirement of applying a Data Burst information-based operation to the first QoS flow, Data Burst information-based operation having not been enabled for the first QoS flow, rejecting a requirement of applying Data Burst information to the first QoS flow, rejecting a requirement of applying a Data Burst information-based operation to the first QoS flow, accepting performing a Data Burst-based operation on the first QoS flow, rejecting performing a Data Burst-based operation on the first QoS flow, accepting the second information related to Data Burst information, and rejecting the second information related to Data Burst information;
the tenth information is used for indicating at least one of the following: the first communication device supports or does not support a PDU Set information-based operation, the first communication device supports or does not support PDU Set information, and the first communication device supports or does not support a PDU Set-based operation; and
the eleventh information is used for indicating at least one of the following: the first communication device supports or does not support a Data Burst information-based operation, the first communication device supports or does not support Data Burst information, and the first communication device supports or does not support a Data Burst-based operation.

The first object includes at least one of the following: a first traffic flow, a first protocol, a first application, a first packet header, and a first QoS flow.

The first requirement is used to require at least one of the following:
marking a data packet with PDU Set information that is corresponding to a PDU Set to which the data packet belongs;
marking a second packet header of a data packet with PDU Set information based on information for determining the PDU Set information in a first packet header of the data packet;
applying PDU Set information;
PDU Set-based operation; and
applying a PDU Set information-based operation.

The second requirement is used to require at least one of the following:
marking a data packet with Data Burst information that is corresponding to a Data Burst to which the data packet belongs;
marking a second packet header of a data packet with a Data Burst end indicator based on information for determining the Data Burst end indicator in a first packet header of the data packet;
marking a second packet header of a data packet with Data Burst information based on information for determining the Data Burst information in a first packet header of the data packet; (optionally, the Data Burst information may not include a Data Burst end indicator)
applying Data Burst information; and
applying a Data Burst information-based operation.

A third requirement is used to require at least one of the following:
marking a data packet with PDU Set information that is corresponding to a PDU Set to which the data packet belongs; and
marking a second packet header of a data packet with PDU Set information based on information for determining the PDU Set information in a first packet header of the data packet.

The fourth requirement is used to require at least one of the following:
marking a data packet with Data Burst information that is corresponding to a Data Burst to which the data packet belongs; and
marking a second packet header of a data packet with Data Burst information based on information for determining the Data Burst information in a first packet header of the data packet;
where
the first information related to PDU Set information is used for requesting at least one of the following:
   marking a data packet with PDU Set information that is corresponding to a PDU Set to which the data packet belongs;
   marking a second packet header of a data packet with PDU Set information based on information for determining the PDU Set information in a first packet header of the data packet;
   applying PDU Set information;
   PDU Set-based operation; and
   applying a PDU Set information-based operation.

The third information related to PDU Set information is used to request at least one of the following:
not marking a data packet with PDU Set information that is corresponding to a PDU Set to which the data packet belongs;
not applying PDU Set information; and
not applying a PDU Set information-based operation;
where
the second information related to PDU Set information is used for at least one of the following:
   requiring applying PDU Set information;
   requiring applying a PDU Set information-based operation; and
   indicating that a second packet header of a data packet includes PDU Set information.

The first information related to Data Burst information is used for requesting at least one of the following:
marking a data packet with Data Burst information that is corresponding to a Data Burst to which the data packet belongs;
marking a second packet header of a data packet with a Data Burst end indicator based on information for determining the Data Burst end indicator in a first packet header of the data packet;
applying Data Burst information; and
applying a Data Burst information-based operation;
where
the third information related to Data Burst information is used for requesting at least one of the following:
   not marking a data packet with Data Burst information that is corresponding to a Data Burst to which the data packet belongs;
   not applying Data Burst information; and
   not applying a Data Burst information-based operation;
   where
   the second information related to Data Burst information is used for at least one of the following:
      requiring applying Data Burst information;
      requiring applying a Data Burst information-based operation; and
      indicating that the second packet header of the data packet includes Data Burst information.

Optionally, in a case that a fifth condition is met, at least one of the following is determined and/or sent: the first information related to PDU Set information, and the second information related to PDU Set information.

The fifth condition includes at least one of the following:
the first requirement has been obtained;
the fourth information supported by the first object has been obtained;
the local configuration of the third communication device includes the first requirement;
the second communication device supports a PDU Set information-based operation;
the second communication device supports PDU Set information;
the second communication device supports a PDU Set-based operation;
the first communication device supports a PDU Set information-based operation;
the first communication device supports PDU Set information;
the first communication device supports a PDU Set-based operation;
the second communication device enables a PDU Set information-based operation for the first QoS flow;
the second communication device accepts a requirement of applying PDU Set information to the first QoS flow;
the second communication device accepts a requirement of applying a PDU Set information-based operation to the first QoS flow;
the second communication device accepts a PDU Set-based operation for the first QoS flow; and
the second communication device accepts the second information related to PDU Set information.

In an implementation, in a case that an eleventh condition is met, the first information related to PDU Set information is determined and/or sent.

The eleventh condition includes at least one of the following:
at least one of the following has been obtained: the first requirement and the third requirement;
the fourth information supported by the first object has been obtained;
the local configuration of the third communication device includes at least one of the following: the first requirement and the third requirement;
the second communication device supports a PDU Set information-based operation;
the second communication device supports PDU Set information;
the second communication device supports a PDU Set-based operation;
the first communication device supports a PDU Set information-based operation;
the first communication device supports PDU Set information;
the first communication device supports a PDU Set-based operation;
the third communication device has sent the second information related to PDU Set information to the second communication device;
the second communication device enables a PDU Set information-based operation for the first QoS flow;
the second communication device accepts a requirement of applying PDU Set information to the first QoS flow;
the second communication device accepts a requirement of applying a PDU Set information-based operation to the first QoS flow;
the second communication device accepts a PDU Set-based operation for the first QoS flow; and
the second communication device accepts the second information related to PDU Set information.

In an implementation, the PDU Set information includes PDU Set importance.

In an implementation, in a case that a thirteenth condition is met, the third information related to PDU Set information is determined and/or sent; where
the thirteenth condition includes at least one of the following:
the second communication device does not support a PDU Set information-based operation;
the second communication device does not support PDU Set information;
the second communication device does not support a PDU Set-based operation;
the sixth information has not been obtained;
the eighth information has not been obtained;
the third communication device has sent the second information related to PDU Set information to the second communication device;
the second communication device has not enabled a PDU Set information-based operation for the first QoS flow;
the second communication device rejects a requirement of applying PDU Set information to the first QoS flow;
the second communication device rejects a requirement of applying a PDU Set information-based operation to the first QoS flow;
the second communication device rejects a PDU Set-based operation for the first QoS flow; and
the second communication device rejects the second information related to PDU Set information.

In an implementation, the thirteenth condition further includes that the second communication device supports the PDU Set information-based operation, and the second communication device supports at least one of the PDU Set information, in a case that the thirteenth condition includes at least one of the following:
the second communication device has not enabled a PDU Set information-based operation for the first QoS flow;
the second communication device rejects a requirement of applying PDU Set information to the first QoS flow; and
the second communication device rejects a requirement of applying a PDU Set information-based operation to the first QoS flow.

Optionally, in a case that a sixth condition is met, at least one of the following is determined and/or sent: the second requirement, the first information related to Data Burst information, and the second information related to Data Burst information.

The meeting the sixth condition includes at least one of the following:
the second requirement has been obtained;
the fifth information supported by the first object has been obtained;
the local configuration includes the second requirement;
the second communication device supports a Data Burst information-based operation;
the second communication device supports Data Burst information;
the second communication device supports a Data Burst-based operation;
the first communication device supports a Data Burst information-based operation;
the first communication device supports Data Burst information;
the first communication device supports a Data Burst-based operation;
the second communication device has enabled a Data Burst information-based operation for the first QoS flow;
the second communication device accepts a requirement of applying Data Burst information to the first QoS flow;
the second communication device accepts a requirement of applying a Data Burst information-based operation to the first QoS flow;
the second communication device accepts a Data Burst-based operation for the first QoS flow; and
the second communication device accepts the second information related to Data Burst information.

In an implementation, in a case that a twelfth condition is met, the first information related to Data Burst information is determined and/or sent.

The twelfth condition includes at least one of the following:
at least one of the following has been obtained: the second requirement and the fourth requirement;
the fifth information supported by the first object has been obtained;
the local configuration includes at least one of the following: the second requirement and the fourth requirement;
the second communication device supports a Data Burst information-based operation;
the second communication device supports Data Burst information;
the second communication device supports a Data Burst-based operation;
the first communication device supports a Data Burst information-based operation;
the first communication device supports Data Burst information;
the first communication device supports a Data Burst-based operation;
the third communication device has sent the second information related to Data Burst information to the second communication device;
the second communication device has enabled a Data Burst information-based operation for the first QoS flow;
the second communication device accepts a requirement of applying Data Burst information to the first QoS flow;
the second communication device accepts a requirement of applying a Data Burst information-based operation to the first QoS flow;
the second communication device accepts a Data Burst-based operation for the first QoS flow; and
the second communication device accepts the second information related to Data Burst information.

In an implementation, in a case that a fourteenth condition is met, the third information related to Data Burst information is determined and/or sent.

The fourteenth condition includes at least one of the following:
the seventh information has not been obtained;
the ninth information has not been obtained;
the second communication device does not support a Data Burst information-based operation;
the second communication device does not support Data Burst information;
the second communication device does not support a Data Burst-based operation;
the third communication device has sent the second information related to Data Burst information to the second communication device;
the second communication device has not enabled a Data Burst information-based operation for a first QoS flow;
the second communication device rejects a requirement of applying Data Burst information to the first QoS flow;
the second communication device rejects a requirement of applying a Data Burst information-based operation to the first QoS flow;
the second communication device rejects a Data Burst-based operation for the first QoS flow; and
the second communication device rejects the second information related to Data Burst information.

In a case that the fourteenth condition includes at least one of the following, the fourteenth condition further includes that the second communication device supports the Data Burst information-based operation, and the second communication device supports at least one of the Data Burst information:
the second communication device has not enabled a Data Burst information-based operation for a first QoS flow;
the second communication device rejects a requirement of applying Data Burst information to the first QoS flow; and
the second communication device rejects a requirement of applying a Data Burst information-based operation to the first QoS flow.

Optionally, the apparatus further includes:
an obtaining module, configured to obtain protocol description information.

The processing module 310 is further configured to:
based on at least one of the protocol description information, the first requirement, the fourth information supported by the first object, the local configuration of the third communication device, the sixth information, the eighth information, and the tenth information, determine and/or send at least one of the following: the first information related to PDU Set information, the second information related to PDU Set information, the third information related to PDU Set information, and the fourth information supported by the first object;
   or
based on at least one of the protocol description information, the second requirement, the fifth information supported by the first object, the local configuration of the third communication device, the seventh information, the ninth information, and the eleventh information, determine and/or send at least one of the following: the first information related to Data Burst information, the second information related to Data Burst information, the third information related to Data Burst information, and the fifth information supported by the first object.

The apparatus in this embodiment can be configured to execute the method in any one of the foregoing method embodiments on the third communication device side, and its specific implementation processes and technical effects are the same as those in the method embodiments on the third communication device side. For details, refer to the detailed description in the method embodiments on the third communication device side. Details are not repeated here.

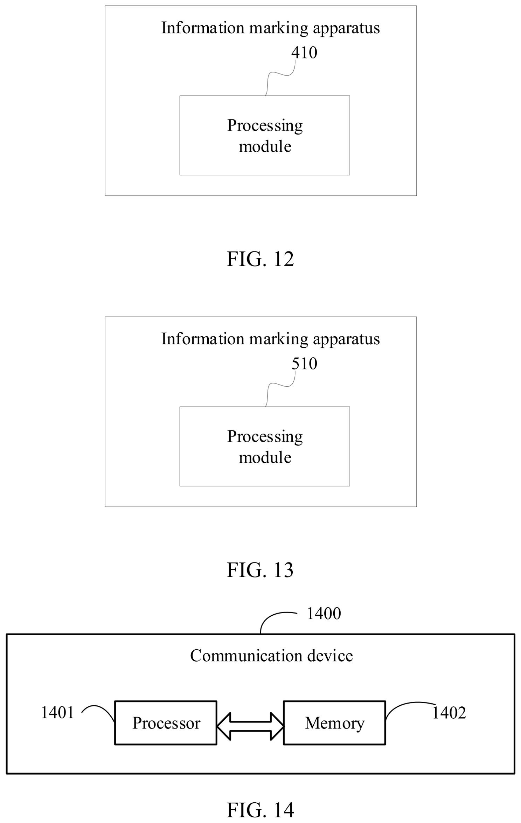

FIG. 12 is a fourth schematic structural diagram of an information marking apparatus according to an embodiment of this application. As shown in FIG. 12, the information marking apparatus is applied to a fourth communication device, and the information marking apparatus includes:
a processing module 410, configured to perform a fourth operation, where the fourth operation includes at least one of the following:
obtaining at least one of the following: a first request, a second request, a local configuration of the fourth communication device, fourth information supported by a first object, fifth information supported by the first object, sixth information, seventh information, eighth information, and ninth information;
based on at least one of the first request, the fourth information supported by the first object, the local configuration of the fourth communication device, the sixth information, and the eighth information, determining and/or sending at least one of the following: a first requirement, and the fourth information supported by the first object; and
based on at least one of the second request, the fifth information supported by the first object, the local configuration of the fourth communication device, the seventh information, and the ninth information, determining and/or sending at least one of the following: a second requirement, and the fifth information supported by the first object.

The fourth information is information used for determining PDU Set information;
the fifth information is information used for determining Data Burst information;
the sixth information is used for indicating at least one of the following: a second communication device supports or does not support a PDU Set information-based operation, and the second communication device supports or does not support PDU Set information; and
the seventh information is used for indicating at least one of the following: the second communication device supports or does not support a Data Burst information-based operation, and the second communication device supports or does not support Data Burst information.

The first object includes at least one of the following: a first traffic flow, a first protocol, a first application, a first packet header, and a first QoS flow.

The first request is used to request at least one of the following:
monitoring PDU Set information corresponding to a data packet;
marking a data packet with PDU Set information that is corresponding to a PDU Set to which the data packet belongs;
marking a second packet header of a data packet with PDU Set information based on information for determining the PDU Set information in a first packet header of the data packet;
applying PDU Set information;
applying a PDU Set information-based operation; and
performing a PDU Set-based operation.

The first requirement is used to require at least one of the following:
monitoring PDU Set information corresponding to a data packet;
marking a data packet with PDU Set information that is corresponding to a PDU Set to which the data packet belongs;
marking a second packet header of a data packet with PDU Set information based on information for determining the PDU Set information in a first packet header of the data packet;
applying PDU Set information;
applying a PDU Set information-based operation; and
performing a PDU Set-based operation.

A third requirement is used to require at least one of the following:
marking a data packet with PDU Set information that is corresponding to a PDU Set to which the data packet belongs; and
marking a second packet header of a data packet with PDU Set information based on information for determining the PDU Set information in a first packet header of the data packet.

The second request is used for requesting at least one of the following:
monitoring Data burst information corresponding to a data packet;
marking a data packet with Data Burst information that is corresponding to a Data Burst to which the data packet belongs;
marking a second packet header of a data packet with a Data Burst end indicator based on information for determining the Data Burst end indicator in a first packet header of the data packet;
applying Data Burst information;
applying a Data Burst information-based operation;
performing a Data Burst-based operation; and
performing a terminal power-saving operation.

The second requirement is used to require at least one of the following:
monitoring Data burst information corresponding to a data packet;
marking a data packet with Data Burst information that is corresponding to a Data Burst to which the data packet belongs;
marking a second packet header of a data packet with a Data Burst end indicator based on information for determining the Data Burst end indicator in a first packet header of the data packet;
marking a second packet header of a data packet with Data Burst information based on information for determining the Data Burst information in a first packet header of the data packet;
applying Data Burst information;
applying a Data Burst information-based operation;
performing a Data Burst information-based operation; and
performing a terminal power-saving operation.

A fourth requirement is used to require at least one of the following:
marking a data packet with Data Burst information that is corresponding to a Data Burst to which the data packet belongs; and
marking a second packet header of a data packet with Data Burst information based on information for determining the Data Burst information in a first packet header of the data packet.

Optionally, in a case that a seventh condition is met, at least one of the following is determined and/or sent: the first requirement and the third requirement.

The seventh condition includes at least one of the following:
the first request has been obtained;
the fourth information supported by the first object has been obtained;
the local configuration of the fourth communication device includes the first requirement;
the second communication device supports a PDU Set information-based operation;
the second communication device supports PDU Set information;
the first communication device supports a PDU Set information-based operation; and
the first communication device supports PDU Set information.

Optionally, in a case that an eighth condition is met, at least one of the following is determined and/or sent: the second requirement and the fourth requirement.

The eighth condition being met includes at least one of the following:
the second request has been obtained;
the fifth information supported by the first object has been obtained;
the local configuration of the fourth communication device includes the second requirement;
the second communication device supports a Data Burst information-based operation;
the second communication device supports Data Burst information;
the first communication device supports a Data Burst information-based operation; and
the first communication device supports Data Burst information.

Optionally, the apparatus further includes:
an obtaining module, configured to obtain protocol description information.

The processing module 410 is further configured to:
based on at least one of the protocol description information, the first request, the fourth information supported by the first object, the local configuration of the fourth communication device, the sixth information, and the eighth information, determining and/or sending at least one of the following: a first requirement, and the fourth information supported by the first object;
   or
based on at least one of the protocol description information, the second request, the fifth information supported by the first object, the local configuration of the fourth communication device, the seventh information, and the ninth information, determining and/or sending at least one of the following: a second requirement, and the fifth information supported by the first object.

Optionally, the PDU Set-based operation or the PDU Set information-based operation includes at least one of the following:
handling a data packet based on a data packet set granularity;
applying PDU Set information;
applying PDU Set QoS;
PDU Set QoS handling;
applying PDU Set importance;
PDU Set importance-based operation;
applying PDU Set Size;
PDU Set Size-based operation;
applying PDU Set end information;
PDU Set end information-based operation;
applying PDU Set start information;
PDU Set start information-based operation;
applying a sequence number of a data packet in a PDU Set;
operation based on a sequence number of a data packet in a PDU Set;
applying a PDU Set sequence number; and
PDU Set sequence number-based operation.

Optionally, the PDU Set information-based operation includes at least one of the following:
handling a data packet based on a data packet set granularity;
applying PDU Set information;
applying PDU Set importance;
PDU Set importance-based operation;
applying PDU Set Size;
PDU Set Size-based operation;
applying PDU Set end information;
PDU Set end information-based operation;
applying PDU Set start information;
PDU Set start information-based operation;
applying a sequence number of a data packet in a PDU Set;
operation based on a sequence number of a data packet in a PDU Set;
applying a PDU Set sequence number; and
PDU Set sequence number-based operation.

Optionally, the Data Burst-based operation or Data Burst information-based operation includes at least one of the following:
a power-saving operation performed on a terminal based on Data Burst information; and
a Data Burst end indicator-based operation.

The apparatus in this embodiment can be configured to execute the method in any one of the foregoing method embodiments on the fourth communication device side, and its specific implementation processes and technical effects are the same as those in the method embodiments on the fourth communication device side. For details, refer to the detailed description in the method embodiments on the fourth communication device side. Details are not repeated here.

FIG. 13 is a fifth schematic structural diagram of an information marking apparatus according to an embodiment of this application. As shown in FIG. 13, the information marking apparatus is applied to a fifth communication device, and the information marking apparatus includes:
a processing module 510, configured to perform a fifth operation, where the fifth operation includes at least one of the following:
sending at least one of the following: a first request, a second request, protocol description information, fourth information supported by a first object, and fifth information supported by the first object; where the fourth information is information used for determining PDU Set information, and the fifth information is information for determining a Data Burst;
where
the first object includes at least one of the following: a first traffic flow, a first protocol, a first application, a first packet header, and a first QoS flow.

The first request is used to request at least one of the following:
monitoring PDU Set information corresponding to a data packet;
marking a data packet with PDU Set information that is corresponding to a PDU Set to which the data packet belongs;
marking a second packet header of a data packet with PDU Set information based on information for determining the PDU Set information in a first packet header of the data packet;
applying PDU Set information;
applying a PDU Set information-based operation; and
performing a PDU Set-based operation.

The second request is used to request at least one of the following:
monitoring Data burst information corresponding to a data packet;
marking a data packet with Data Burst information that is corresponding to a Data Burst to which the data packet belongs;
marking a second packet header of a data packet with a Data Burst end indicator based on information for determining the Data Burst end indicator in a first packet header of the data packet;
applying Data Burst information;
applying a Data Burst information-based operation;
performing a Data Burst-based operation; and
performing a terminal power-saving operation.

Optionally, the PDU Set-based operation or the PDU Set information-based operation includes at least one of the following:
handling a data packet based on a data packet set granularity;
applying PDU Set information;
applying PDU Set QoS;
PDU Set QoS handling;
applying PDU Set importance;
PDU Set importance-based operation;
applying PDU Set Size;
PDU Set Size-based operation;
applying PDU Set end information;
PDU Set end information-based operation;
applying PDU Set start information;
PDU Set start information-based operation;
applying a sequence number of a data packet in a PDU Set;
operation based on a sequence number of a data packet in a PDU Set;
applying a PDU Set sequence number; and
PDU Set sequence number-based operation.

Optionally, the PDU Set information-based operation includes at least one of the following:
handling a data packet based on a data packet set granularity;
applying PDU Set information;
applying PDU Set importance;
PDU Set importance-based operation;
applying PDU Set Size;
PDU Set Size-based operation;
applying PDU Set end information;
PDU Set end information-based operation;
applying PDU Set start information;
PDU Set start information-based operation;
applying a sequence number of a data packet in a PDU Set;
operation based on a sequence number of a data packet in a PDU Set;
applying a PDU Set sequence number; and
PDU Set sequence number-based operation.

Optionally, the Data Burst-based operation or Data Burst information-based operation includes at least one of the following:
a power-saving operation performed on a terminal based on Data Burst information; and
a Data Burst end indicator-based operation.

The apparatus in this embodiment can be configured to execute the method in any one of the foregoing method embodiments on the fifth communication device side, and its specific implementation processes and technical effects are the same as those in the method embodiments on the fifth communication device side. For details, refer to the detailed description in the method embodiments on the fifth communication device side. Details are not repeated here.

The information marking apparatus in this embodiment of this application may be an electronic device, such as an electronic device with an operating system, or a component in the electronic device, such as an integrated circuit or a chip. The electronic device may be a terminal or a device other than terminals. For example, the terminal may include, but is not limited to, the types of the terminal 11 listed above, and other devices may be a server, a network attached storage (Network Attached Storage, NAS), and the like. This is not limited in the embodiments of this application.

The information marking apparatus provided in this embodiment of this application can implement the processes implemented in the method embodiments in FIG. 2 to FIG. 8, with the same technical effects achieved. To avoid repetition, details are not described herein again.

Optionally, as shown in FIG. 14, an embodiment of this application further provides a communication device 1400, including a processor 1401 and a memory 1402. A program or instructions capable of running on the processor 1401 are stored in the memory 1402. For example, when the communication device 1400 is a terminal and when the program or the instructions are executed by the processor 1401, the steps of the foregoing embodiments of the information marking method are implemented, with the same technical effects achieved. When the communication device 1400 is a network-side device and when the program or the instructions are executed by the processor 1401, the steps of the foregoing embodiments of the information marking method are implemented, with the same technical effects achieved. To avoid repetition, details are not described herein again.

An embodiment of this application further provides a network-side device, which includes a processor and a communication interface, where the communication interface is coupled to the processor, and the processor is configured to run a program or instructions to implement the steps of the method embodiments shown in any one of FIG. 2 to FIG. 6. The network-side device embodiment corresponds to the foregoing network-side device method embodiment, and the implementation processes and implementations of the foregoing method embodiments can be applied to the network-side device embodiment, with the same technical effects achieved.

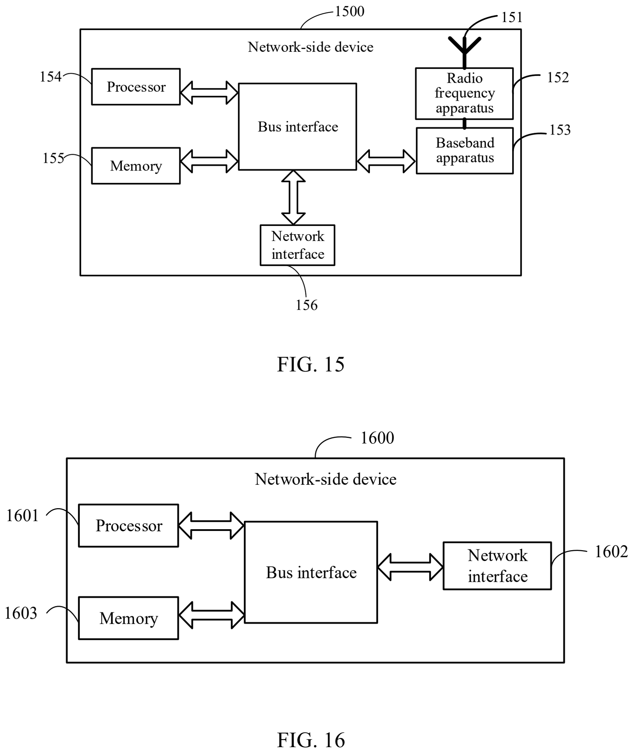

Specifically, an embodiment of this application further provides a network-side device. As shown in FIG. 15, the network-side device 1500 includes an antenna 151, a radio frequency apparatus 152, a baseband apparatus 153, a processor 154, and memory 155. The antenna 151 is connected to the radio frequency apparatus 152. In an uplink direction, the radio frequency apparatus 152 receives information by using the antenna 151, and sends the received information to the baseband apparatus 153 for processing. In a downlink direction, the baseband apparatus 153 processes to-be-sent information, and sends the information to the radio frequency apparatus 152; and the radio frequency apparatus 152 processes the received information and then sends the information out by using the antenna 151.

The method executed by the network-side device in the foregoing embodiments may be implemented on the baseband apparatus 153. The baseband apparatus 153 includes a baseband processor.

The baseband apparatus 153 may include, for example, at least one baseband board, where a plurality of chips are disposed on the baseband board. As shown in FIG. 15, one of the chips is, for example, the baseband processor, and connected to the memory 155 through a bus interface, to invoke the program in the memory 155 to perform the operations of the network device shown in the foregoing method embodiment.

The network-side device may further include a network interface 156, where the interface is, for example, a common public radio interface (Common Public Radio Interface, CPRI).

Specifically, the network-side device 1500 according to this embodiment of this application further includes instructions or programs stored in the memory 155 and capable of running on the processor 154, and the processor 154 calls the instructions or programs in the memory 155 to execute the methods performed by the modules shown in FIG. 10, with the same technical effects achieved. To avoid repetition, details are not described herein again.

Specifically, an embodiment of this application further provides a network-side device. As shown in FIG. 16, the network-side device 1600 includes a processor 1601, a network interface 1602, and a memory 1603. The network interface 1602 is, for example, a common public radio interface (Common Public Radio Interface, CPRI).

Specifically, the network-side device 1600 in this embodiment of this application further includes: instructions or a program stored in the memory 1603 and capable of running on the processor 1601. The processor 1601 invokes the instructions or program in the memory 1603 to execute the method executed by the modules shown in FIG. 9 or any one of FIG. 11 to FIG. 13, with the same technical effects achieved. To avoid repetition, details are not described herein again.

An embodiment of this application further provides a readable storage medium. The readable storage medium stores a program or instructions. When the program or instructions are executed by a processor, the processes of the foregoing embodiments of the information marking method are implemented, with the same technical effects achieved. To avoid repetition, details are not described herein again.

The processor is a processor in the terminal described in the foregoing embodiment. The readable storage medium includes a computer-readable storage medium such as a computer read-only memory ROM, a random access memory RAM, a magnetic disk, or an optical disc. In some examples, the readable storage medium may be a non-transitory readable storage medium.

An embodiment of this application further provides a chip, where the chip includes a processor and a communication interface. The communication interface is coupled to the processor, and the processor is configured to run a program or instructions to implement the processes of the foregoing embodiments of the information marking method, with the same technical effects achieved. To avoid repetition, details are not described herein again.

It should be understood that the chip mentioned in this embodiment of this application may also be referred to as a system-on-chip, a system chip, a system-on-a-chip, or a system on a chip, or the like.

An embodiment of this application further provides a computer program/program product, where the computer program/program product is stored in a storage medium, and when being executed by at least one processor, the computer program/program product is configured to implement the processes of the foregoing embodiments of the information marking method, with the same technical effects achieved. To avoid repetition, details are not repeated herein.

An embodiment of this application further provides a communication system, including a first communication device, a second communication device, a third communication device, a fourth communication device, and a fifth communication device, where the first communication device can be configured to execute the steps of the information marking method described above, the second communication device can be configured to execute the steps of the information marking method described above, the third communication device can be configured to execute the steps of the information marking method described above, the fourth communication device can be configured to execute the steps of the information marking method described above, and the fifth communication device can be configured to execute the steps of the information marking method described above.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and apparatus in the implementations of this application is not limited to functions being performed in the order shown or discussed, but may further include functions being performed at substantially the same time or in a reverse order, depending on the functions involved. For example, the described method may be performed in an order different from the order described, and steps may be added, omitted, or combined. In addition, features described with reference to some examples can be combined in other examples.

According to the description of the foregoing implementations, persons skilled in the art can clearly understand that the method in the foregoing embodiments may be implemented by a computer software product in combination with a necessary general hardware platform. Specifically, the method in the foregoing embodiments may alternatively be implemented by hardware. The computer software product is stored in a storage medium (such as a ROM, a RAM, a magnetic disk, or an optical disc), and includes several instructions to enable a terminal or a network-side device to execute the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other implementation manners without departing from principles of this application and the protection scope of the claims, many and all such implementation manners fall within the protection scope of this application.

## Claims

1. An information marking method, comprising:
performing, by a first communication device, a first operation; wherein
the first operation comprises at least one of the following:
sending tenth information, wherein the tenth information is used for indicating at least one of the following: the first communication device supports or does not support a PDU Set information-based operation, and the first communication device supports or does not support PDU Set information;
sending eleventh information, wherein the eleventh information is used for indicating at least one of the following: the first communication device supports or does not support a Data Burst information-based operation, and the first communication device supports or does not support Data Burst information;
a first sub-operation;
a second sub-operation;
a third sub-operation; and
a fourth sub-operation;
wherein
the first sub-operation comprises:
obtaining first information related to packet data unit set PDU Set information, wherein the first information related to PDU Set information comprises at least one of the following: information for requesting to perform a PDU Set information-related operation; and fourth information supported by a first object, wherein the fourth information is information used for determining PDU Set information; and
performing marking on a data packet with corresponding PDU Set information based on the first information related to PDU Set information;
the second sub-operation comprises:
obtaining first information related to data burst (Data Burst) information, wherein the first information related to the Data Burst information comprises at least one of the following: fifth information supported by the first object, information for requesting to perform a Data Burst information-related operation; and fifth information supported by the first object, wherein the fifth information is information for determining a Data Burst; and
based on the first information related to the Data Burst information, performing marking on a data packet with corresponding Data Burst information;
the third sub-operation comprises:
obtaining third information related to PDU Set information, wherein the third information related to PDU Set information is used for requesting at least one of the following: not marking a data packet with PDU Set information corresponding to a PDU Set to which the data packet belongs; not applying PDU Set information; not applying a PDU Set information-based operation; and not performing a PDU Set information-related operation; and
based on the third information related to PDU Set information, performing no marking on a data packet with corresponding PDU Set information, or not performing a PDU Set information-related operation; and
the fourth sub-operation comprises:
obtaining third information related to Data Burst information, wherein the third information related to Data Burst information is used for requesting at least one of the following: not marking Data Burst information corresponding to a Data Burst to which a data packet belongs; not applying Data Burst information; not applying a Data Burst information-based operation; and not performing a Data Burst information-related operation; and
based on the third information related to Data Burst information, performing no marking on a data packet with corresponding Data Burst information, or not performing a Data Burst information-related operation;
wherein
the first object comprises at least one of the following: a first traffic flow, a first protocol, a first application, a first packet header, and a first QoS flow.

2. The method according to claim 1, wherein information for determining the PDU Set information comprises at least one of the following:
basis information that is used for determining PDU Set information and that the first object supports or supports providing; and
PDU Set information.

3. The method according to claim 1 or 2, wherein
the PDU Set information comprises at least one of the following:
PDU Set importance;
PDU Set size (Size);
PDU Set end indicator information;
PDU Set start indicator information;
a sequence number of a data packet in a PDU Set;
PDU Set sequence number;
PDU Set duration;
an interval between PDU Sets or an interval between a PDU set and a next PDU set; and
PDU Set periodicity.

4. The method according to claim 1, wherein information for determining the Data Burst information comprises at least one of the following:
basis information that is used for determining Data Burst information and that the first object supports or supports providing; and
Data Burst information.

5. The method according to claim 1 or 4, wherein
the Data Burst information comprises at least one of the following:
Data Burst size;
Data Burst end indicator information;
Data Burst start indicator information;
a sequence number of a data packet in a Data Burst;
a Data Burst sequence number;
Data Burst duration;
an interval between Data Bursts or an interval between a Data Burst and a next Data Burst; and
Data Burst periodicity.

6. The method according to any one of claims 1 to 5, wherein
the PDU Set information-related operation comprises at least one of the following:
monitoring PDU Set information corresponding to a data packet;
marking a data packet with PDU Set information that is corresponding to a PDU Set to which the data packet belongs;
marking a second packet header of a data packet with PDU Set information based on information for determining the PDU Set information in a first packet header of the data packet;
applying PDU Set information;
applying a PDU Set-based operation; and
applying a PDU Set information-based operation.

7. The method according to claim 6, wherein
the PDU Set information-based operation comprises at least one of the following:
handling a data packet based on a data packet set granularity;
applying PDU Set information;
applying PDU Set QoS;
PDU Set QoS handling;
applying PDU Set importance;
PDU Set importance-based operation;
applying PDU Set Size;
PDU Set Size-based operation;
applying PDU Set end information;
PDU Set end information-based operation;
applying PDU Set start information;
PDU Set start information-based operation;
applying a sequence number of a data packet in a PDU Set;
operation based on a sequence number of a data packet in a PDU Set;
applying a PDU Set sequence number; and
PDU Set sequence number-based operation.

8. The method according to any one of claims 1 to 7, wherein
the Data Burst information-related operation comprises at least one of the following:
marking a data packet with Data Burst information that is corresponding to a Data Burst to which the data packet belongs;
marking a second packet header of a data packet with a Data Burst end indicator based on information for determining the Data Burst end indicator in a first packet header of the data packet;
applying Data Burst information; and
applying a Data Burst information-based operation.

9. The method according to claim 8, wherein
the Data Burst-based operation or Data Burst information-based operation comprises at least one of the following:
a power-saving operation performed on a terminal based on Data Burst information; and
a Data Burst end indicator-based operation.

10. The method according to any one of claims 1 to 9, wherein
the first information related to the PDU Set information is different from protocol description information.

11. The method according to any one of claims 1 to 10, wherein
the performing marking on a data packet with corresponding PDU Set information based on the first information related to PDU Set information comprises at least one of the following:
in a case that a first condition is met, performing marking on the data packet with the corresponding PDU Set information; and
in a case that a second condition is met, not performing marking on the data packet with the corresponding PDU Set information, or setting a value of the PDU Set information to a first value, wherein the first value is used to indicate one of the following: the PDU Set information being unknown, not applying the PDU Set information, and not applying PDU Set information-based handling; wherein
the meeting the first condition comprises at least one of the following:
the first information related to the PDU Set information has been obtained; and
the meeting the second condition comprises at least one of the following:
the first information related to the PDU Set information has not been obtained.

12. The method according to any one of claims 1 to 11, wherein
the performing marking on a data packet with corresponding Data Burst information based on the first information related to Data Burst information comprises at least one of the following:
in a case that a third condition is met, performing marking on the data packet with the corresponding Data Burst information; and
in a case that a fourth condition is met, not performing marking on the data packet with the corresponding Data Burst information, or setting a value of the Data Burst information to a second value, wherein the second value is used to indicate one of the following: being unknown whether the data packet is an end data packet of a Data Burst, not applying a data burst end indicator, and not applying data burst end indicator-based handling;
wherein
the meeting the third condition comprises at least one of the following:
the first information related to the Data Burst information has been obtained;
wherein
the meeting the fourth condition comprises at least one of the following:
the first information related to the Data Burst information has not been obtained.

13. An information marking method comprises:
performing, by a second communication device, a second operation, wherein the second operation comprises at least one of the following:
sending sixth information, wherein the sixth information is used for indicating at least one of the following: the second communication device supports or does not support a PDU Set information-based operation, the second communication device supports or does not support PDU Set information, and the second communication device supports or does not support a PDU Set-based operation;
sending seventh information, wherein the seventh information is used for indicating at least one of the following: the second communication device supports or does not support a Data Burst information-based operation, and the second communication device supports or does not support Data Burst information;
sending eighth information;
sending ninth information;
obtaining third information, wherein the third information comprises at least one of the following: second information related to PDU Set information and second information related to Data Burst information; and
performing a second operation based on the third information, comprising at least one of the following:
accepting or rejecting the second information related to PDU Set information;
sending eighth information;
PDU Set information-based operation;
PDU Set-based operation;
accepting or rejecting the second information related to Data Burst information;
sending ninth information;
Data Burst information-based operation; and
Data Burst-based operation;
wherein
the eighth information is used for indicating one of the following:
PDU Set information-based operation having been enabled for a first QoS flow,
accepting a requirement of applying PDU Set information to the first QoS flow,
accepting a requirement of applying a PDU Set information-based operation to the first QoS flow,
PDU Set information-based operation having not been enabled for the first QoS flow,
rejecting a requirement of applying PDU Set information to the first QoS flow,
rejecting a requirement of applying a PDU Set information-based operation to the first QoS flow,
accepting performing a PDU Set-based operation on the first QoS flow,
rejecting performing a PDU Set-based operation on the first QoS flow,
accepting the second information related to PDU Set information, and
rejecting the second information related to PDU Set information;
the ninth information is used for indicating one of the following: Data Burst information-based operation having been enabled for the first QoS flow, accepting a requirement of applying Data Burst information to the first QoS flow, accepting a requirement of applying a Data Burst information-based operation to the first QoS flow, Data Burst information-based operation having not been enabled for the first QoS flow, rejecting a requirement of applying Data Burst information to the first QoS flow, rejecting a requirement of applying a Data Burst information-based operation to the first QoS flow, accepting performing a Data Burst-based operation on the first QoS flow, rejecting performing a Data Burst-based operation on the first QoS flow, accepting the second information related to Data Burst information, and rejecting the second information related to Data Burst information; and
the second information related to PDU Set information is used for at least one of the following:
requiring applying PDU Set information;
requiring applying a PDU Set information-based operation;
performing a PDU Set-based operation; and
indicating that a second packet header of a data packet comprises PDU Set information;
wherein
the second information related to Data Burst information is used for at least one of the following:
requiring applying Data Burst information;
requiring applying a Data Burst information-based operation;
Data Burst-based operation; and
indicating that the second packet header of the data packet comprises Data Burst information.

14. The method according to claim 13, wherein the sending eighth information comprises: sending the eighth information in a case that a ninth condition is met, and the eighth information comprises information used for indicating one of the following:
accepting the second information related to PDU Set information;
PDU Set information-based operation having been enabled for a first QoS flow;
accepting a requirement of applying PDU Set information to the first QoS flow;
accepting a requirement of applying a PDU Set information-based operation to the first QoS flow; and
accepting performing a PDU Set-based operation on the first QoS flow;
wherein
the meeting the ninth condition comprises at least one of the following:
the second communication device accepts the second information related to PDU Set information;
the second communication device accepts a requirement of applying PDU Set information to the first QoS flow;
the second communication device accepts a requirement of applying a PDU Set information-based operation to the first QoS flow;
a terminal moves between RAN network elements;
the second communication device support a PDU Set information-based operation;
the second communication device accepts at least one or any one PDU Set QoS parameter;
the second communication device accepts at least one or any one piece of PDU Set information;
the second communication device accepts at least one or any one PDU Set parameter, wherein the PDU Set parameter comprises at least one of the following: PDU QoS parameter and PDU Set information;
the second communication device accepts at least one or any one piece of PDU Set information;
the second communication device accepts at least one or any one PDU Set-based operation; and
the second communication device accepts at least one or any one PDU Set information-based operation.

15. The method according to claim 13, wherein the sending ninth information comprises: sending the ninth information in a case that a tenth condition is met; wherein
the meeting the tenth condition comprises at least one of the following:
the second communication device accepts the second information related to Data Burst information;
the second communication device accepts a requirement of applying Data Burst information to the first QoS flow;
the second communication device accepts a requirement of applying a Data Burst information-based operation to the first QoS flow;
the terminal moves between RAN network elements; and
the second communication device supports a Data Burst information-based operation.

16. The method according to claim 13, wherein the PDU Set information comprises one of the following:
PDU Set information other than PDU Set QoS; and
PDU Set information unrelated to QoS;
or,
the PDU Set information does not comprise: PDU Set QoS.

17. The method according to claim 13, wherein
the PDU information-based operation or the PDU Set-based operation comprises one of the following:
PDU Set-based operation other than PDU Set QoS operation; and
PDU Set information-based operation other than PDU Set QoS operation;
or
the PDU information-based operation or the PDU Set-based operation does not comprise at least one of the following: PDU Set QoS operation, and applying PDU Set QoS.

18. The method according to claim 17, wherein
the PDU Set-based operation other than the PDU Set QoS operation, or the PDU Set information-based operation other than the PDU Set QoS operation, or the PDU Set information-based operation comprises at least one of the following:
handling a data packet based on a data packet set granularity;
applying PDU Set information;
applying PDU Set importance;
PDU Set importance-based operation;
applying PDU Set Size;
PDU Set Size-based operation;
applying PDU Set end information;
PDU Set end information-based operation;
applying PDU Set start information;
PDU Set start information-based operation;
applying a sequence number of a data packet in a PDU Set;
operation based on a sequence number of a data packet in a PDU Set;
applying a PDU Set sequence number; and
PDU Set sequence number-based operation.

19. The method according to claim 13, wherein
the PDU Set-based operation or the PDU Set information-based operation comprises at least one of the following:
handling a data packet based on a data packet set granularity;
applying PDU Set information;
applying PDU Set QoS;
PDU Set QoS handling;
applying PDU Set importance;
PDU Set importance-based operation;
applying PDU Set Size;
PDU Set Size-based operation;
applying PDU Set end information;
PDU Set end information-based operation;
applying PDU Set start information;
PDU Set start information-based operation;
applying a sequence number of a data packet in a PDU Set;
operation based on a sequence number of a data packet in a PDU Set;
applying a PDU Set sequence number; and
PDU Set sequence number-based operation.

20. The method according to claim 18 or 19, wherein
the PDU Set importance-based operation comprises packet discarding based on PDU Set importance.

21. The method according to any one of claims 13 to 20, wherein
the Data Burst-based operation or Data Burst information-based operation comprises at least one of the following:
a power-saving operation performed on the terminal based on Data Burst information; and
a Data Burst end indicator-based operation.

22. The method according to any one of claims 13 to 21, wherein
the PDU Set information comprises at least one of the following:
PDU Set importance;
PDU Set size (Size);
PDU Set end indicator information;
PDU Set start indicator information;
a sequence number of a data packet in a PDU Set;
PDU Set sequence number;
PDU Set duration;
an interval between PDU Sets or an interval between a PDU set and a next PDU set; and
PDU Set periodicity.

23. The method according to any one of claims 13 to 21, wherein
the Data Burst information comprises at least one of the following:
Data Burst size;
Data Burst end indicator information;
Data Burst start indicator information;
a sequence number of a data packet in a Data Burst;
a Data Burst sequence number;
Data Burst duration;
an interval between Data Bursts or an interval between a Data Burst and a next Data Burst; and
Data Burst periodicity.

24. An information marking method, comprising:
performing, by a third communication device, a third operation, wherein the third operation comprises at least one of the following:
obtaining at least one of the following: a first requirement, a second requirement, a third requirement, a fourth requirement, a local configuration of the third communication device, fourth information supported by a first object, fifth information supported by the first object, sixth information, seventh information, eighth information, ninth information, tenth information, and eleventh information;
sending at least one of the following to a fourth communication device: the sixth information, the seventh information, the eighth information, the ninth information, the tenth information, and the eleventh information;
based on at least one of the first requirement, the third requirement, the fourth information supported by the first object, the local configuration of the third communication device, the sixth information, the eighth information, and the tenth information, determining and/or sending at least one of the following: first information related to PDU Set information, second information related to PDU Set information, third information related to PDU Set information, and fourth information supported by the first object;
based on at least one of the second requirement, the fourth requirement, the fifth information supported by the first object, the local configuration of the third communication device, the seventh information, the ninth information, and the eleventh information, determining and/or sending at least one of the following: first information related to Data Burst information, second information related to Data Burst information, third information related to Data Burst information, and the fifth information supported by the first object;
sending at least one of the following to a first communication device: the first information related to PDU Set information, the third information related to PDU Set information, the first information related to Data Burst information, the third information related to Data Burst information, the fourth information supported by the first object, and the fifth information supported by the first object; and
sending at least one of the following to a second communication device: the second information related to PDU Set information, and the second information related to Data Burst information;
wherein
the fourth information is information used for determining PDU Set information;
the fifth information is information used for determining Data Burst information;
the sixth information is used for indicating at least one of the following: the second communication device supports or does not support a PDU Set information-based operation, the second communication device supports or does not support PDU Set information, and the second communication device supports or does not support a PDU Set-based operation;
the seventh information is used for indicating at least one of the following: the second communication device supports or does not support a Data Burst information-based operation, and the second communication device supports or does not support Data Burst information;
the eighth information is used for indicating one of the following:
PDU Set information-based operation having been enabled for a first QoS flow;
accepting a requirement of applying PDU Set information to the first QoS flow;
accepting a requirement of applying a PDU Set information-based operation to the first QoS flow;
PDU Set information-based operation having not been enabled for the first QoS flow;
rejecting a requirement of applying PDU Set information to the first QoS flow;
rejecting a requirement of applying a PDU Set information-based operation to the first QoS flow;
accepting performing a PDU Set-based operation on the first QoS flow;
rejecting performing a PDU Set-based operation on the first QoS flow;
accepting the second information related to PDU Set information, and
rejecting the second information related to PDU Set information;
the ninth information is used for indicating one of the following: Data Burst information-based operation having been enabled for the first QoS flow, accepting a requirement of applying Data Burst information to the first QoS flow, accepting a requirement of applying a Data Burst information-based operation to the first QoS flow, Data Burst information-based operation having not been enabled for the first QoS flow, rejecting a requirement of applying Data Burst information to the first QoS flow, rejecting a requirement of applying a Data Burst information-based operation to the first QoS flow, accepting performing a Data Burst-based operation on the first QoS flow, rejecting performing a Data Burst-based operation on the first QoS flow, accepting the second information related to Data Burst information, and rejecting the second information related to Data Burst information;
the tenth information is used for indicating at least one of the following: the first communication device supports or does not support a PDU Set information-based operation, the first communication device supports or does not support PDU Set information, and the first communication device supports or does not support a PDU Set-based operation; and
the eleventh information is used for indicating at least one of the following: the first communication device supports or does not support a Data Burst information-based operation, the first communication device supports or does not support Data Burst information, and the first communication device supports or does not support a Data Burst-based operation;
wherein
the first object comprises at least one of the following: a first traffic flow, a first protocol, a first application, a first packet header, and a first QoS flow;
the first requirement is used to require at least one of the following:
marking a data packet with PDU Set information that is corresponding to a PDU Set to which the data packet belongs;
marking a second packet header of a data packet with PDU Set information based on information for determining the PDU Set information in a first packet header of the data packet;
applying PDU Set information;
PDU Set-based operation; and
applying a PDU Set information-based operation; wherein
the second requirement is used to require at least one of the following:
marking a data packet with Data Burst information that is corresponding to a Data Burst to which the data packet belongs;
marking a second packet header of a data packet with Data Burst information based on information for determining the Data Burst information in a first packet header of the data packet;
applying Data Burst information; and
applying a Data Burst information-based operation; wherein
the third requirement is used to require at least one of the following:
marking a data packet with PDU Set information that is corresponding to a PDU Set to which the data packet belongs; and
marking a second packet header of a data packet with PDU Set information based on information for determining the PDU Set information in a first packet header of the data packet; and
the fourth requirement is used to require at least one of the following:
marking a data packet with Data Burst information that is corresponding to a Data Burst to which the data packet belongs; and
marking a second packet header of a data packet with Data Burst information based on information for determining the Data Burst information in a first packet header of the data packet;
wherein
the first information related to PDU Set information is used for requesting at least one of the following:
marking a data packet with PDU Set information that is corresponding to a PDU Set to which the data packet belongs;
marking a second packet header of a data packet with PDU Set information based on information for determining the PDU Set information in a first packet header of the data packet;
applying PDU Set information;
PDU Set-based operation; and
applying a PDU Set information-based operation; wherein
the third information related to PDU Set information is used to request at least one of the following:
not marking a data packet with PDU Set information that is corresponding to a PDU Set to which the data packet belongs;
not applying PDU Set information; and
not applying a PDU Set information-based operation;
wherein
the second information related to PDU Set information is used for at least one of the following:
requiring applying PDU Set information;
requiring applying a PDU Set information-based operation; and
indicating that a second packet header of a data packet comprises PDU Set information;
wherein
the first information related to Data Burst information is used for requesting at least one of the following:
marking a data packet with Data Burst information that is corresponding to a Data Burst to which the data packet belongs;
marking a second packet header of a data packet with a Data Burst end indicator based on information for determining the Data Burst end indicator in a first packet header of the data packet;
applying Data Burst information; and
applying a Data Burst information-based operation;
wherein
the third information related to Data Burst information is used for requesting at least one of the following:
not marking a data packet with Data Burst information that is corresponding to a Data Burst to which the data packet belongs;
not applying Data Burst information; and
not applying a Data Burst information-based operation;
wherein
the second information related to Data Burst information is used for at least one of the following:
requiring applying Data Burst information;
requiring applying a Data Burst information-based operation; and
indicating that the second packet header of the data packet comprises Data Burst information.

25. The method according to claim 24, wherein
in a case that a fifth condition is met, at least one of the following is determined and/or sent: the first information related to PDU Set information, and the second information related to PDU Set information; wherein
the fifth condition comprises at least one of the following:
the first requirement has been obtained;
the fourth information supported by the first object has been obtained;
the local configuration of the third communication device comprises the first requirement;
the second communication device supports a PDU Set information-based operation;
the second communication device supports PDU Set information;
the second communication device supports a PDU Set-based operation; and the first communication device supports a PDU Set information-based operation;
the first communication device supports PDU Set information;
the first communication device supports a PDU Set-based operation;
the second communication device enables a PDU Set information-based operation for the first QoS flow;
the second communication device accepts a requirement of applying PDU Set information to the first QoS flow;
the second communication device accepts a requirement of applying a PDU Set information-based operation to the first QoS flow;
the second communication device accepts a PDU Set-based operation for the first QoS flow; and
the second communication device accepts the second information related to PDU Set information.

26. The method according to claim 24, wherein
in a case that an eleventh condition is met, the first information related to PDU Set information is determined and/or sent; wherein
the eleventh condition comprises at least one of the following:
at least one of the following has been obtained: the first requirement and the third requirement;
the fourth information supported by the first object has been obtained;
the local configuration of the third communication device comprises at least one of the following: the first requirement and the third requirement;
the second communication device supports a PDU Set information-based operation;
the second communication device supports PDU Set information;
the second communication device supports a PDU Set-based operation;
the first communication device supports a PDU Set information-based operation;
the first communication device supports PDU Set information;
the first communication device supports a PDU Set-based operation;
the third communication device has sent the second information related to PDU Set information to the second communication device;
the second communication device enables a PDU Set information-based operation for the first QoS flow;
the second communication device accepts a requirement of applying PDU Set information to the first QoS flow;
the second communication device accepts a requirement of applying a PDU Set information-based operation to the first QoS flow;
the second communication device accepts a PDU Set-based operation for the first QoS flow; and
the second communication device accepts the second information related to PDU Set information.

27. The method according to claim 24, wherein
in a case that a thirteenth condition is met, the third information related to PDU Set information is determined and/or sent; wherein
the thirteenth condition comprises at least one of the following:
the second communication device does not support a PDU Set information-based operation;
the second communication device does not support PDU Set information;
the second communication device does not support a PDU Set-based operation;
the sixth information has not been obtained;
the eighth information has not been obtained;
the third communication device has sent the second information related to PDU Set information to the second communication device;
the second communication device has not enabled a PDU Set information-based operation for the first QoS flow;
the second communication device rejects a requirement of applying PDU Set information to the first QoS flow;
the second communication device rejects a requirement of applying a PDU Set information-based operation to the first QoS flow;
the second communication device rejects a PDU Set-based operation for the first QoS flow; and
the second communication device rejects the second information related to PDU Set information.

28. The method according to claim 24, wherein
in a case that a sixth condition is met, at least one of the following is determined and/or sent: the second requirement, the first information related to Data Burst information, and the second information related to Data Burst information; wherein
the meeting the sixth condition comprises at least one of the following:
the second requirement has been obtained;
the fifth information supported by the first object has been obtained;
the local configuration comprises the second requirement;
the second communication device supports a Data Burst information-based operation;
the second communication device supports Data Burst information;
the second communication device supports a Data Burst-based operation;
the first communication device supports a Data Burst information-based operation;
the first communication device supports Data Burst information;
the first communication device supports a Data Burst-based operation;
the second communication device has enabled a Data Burst information-based operation for the first QoS flow;
the second communication device accepts a requirement of applying Data Burst information to the first QoS flow;
the second communication device accepts a requirement of applying a Data Burst information-based operation to the first QoS flow;
the second communication device accepts a Data Burst-based operation for the first QoS flow; and
the second communication device accepts the second information related to Data Burst information.

29. The method according to claim 24, wherein
in a case that a twelfth condition is met, the first information related to Data Burst information is determined and/or sent; wherein
the twelfth condition comprises at least one of the following:
at least one of the following has been obtained: the second requirement and the fourth requirement;
the fifth information supported by the first object has been obtained;
the local configuration comprises at least one of the following: the second requirement and the fourth requirement;
the second communication device supports a Data Burst information-based operation;
the second communication device supports Data Burst information;
the second communication device supports a Data Burst-based operation;
the first communication device supports a Data Burst information-based operation;
the first communication device supports Data Burst information;
the first communication device supports a Data Burst-based operation;
the third communication device has sent the second information related to Data Burst information to the second communication device;
the second communication device has enabled a Data Burst information-based operation for a first QoS flow;
the second communication device accepts a requirement of applying Data Burst information to the first QoS flow;
the second communication device accepts a requirement of applying a Data Burst information-based operation to the first QoS flow;
the second communication device accepts a Data Burst-based operation for the first QoS flow; and
the second communication device accepts the second information related to Data Burst information.

30. The method according to claim 24, wherein
in a case that a fourteenth condition is met, the third information related to Data Burst information is determined and/or sent; wherein
the fourteenth condition comprises at least one of the following:
the seventh information has not been obtained;
the ninth information has not been obtained;
the second communication device does not support a Data Burst information-based operation;
the second communication device does not support Data Burst information;
the second communication device does not support a Data Burst-based operation;
the third communication device has sent the second information related to Data Burst information to the second communication device;
the second communication device has not enabled a Data Burst information-based operation for a first QoS flow;
the second communication device rejects a requirement of applying Data Burst information to the first QoS flow;
the second communication device rejects a requirement of applying a Data Burst information-based operation to the first QoS flow;
the second communication device rejects a Data Burst-based operation for the first QoS flow; and
the second communication device rejects the second information related to Data Burst information.

31. The method according to any one of claims 24 to 30, wherein the method further comprises:
obtaining, by the third communication device, protocol description information;
and
based on at least one of the protocol description information, the first requirement, the fourth information supported by the first object, the local configuration of the third communication device, the sixth information, the eighth information, and the tenth information, determining and/or sending at least one of the following: the first information related to PDU Set information, the second information related to PDU Set information, the third information related to PDU Set information, and the fourth information supported by the first object;
or
based on at least one of the protocol description information, the second requirement, the fifth information supported by the first object, the local configuration of the third communication device, the seventh information, the ninth information, and the eleventh information, determining and/or sending at least one of the following: the first information related to Data Burst information, the second information related to Data Burst information, the third information related to Data Burst information, and the fifth information supported by the first object;

32. An information marking method, comprising:
performing, by a fourth communication device, a fourth operation, wherein the fourth operation comprises at least one of the following:
obtaining at least one of the following: a first request, a second request, a local configuration of the fourth communication device, fourth information supported by a first object, fifth information supported by the first object, sixth information, seventh information, eighth information, and ninth information;
based on at least one of the first request, the fourth information supported by the first object, the local configuration of the fourth communication device, the sixth information, and the eighth information, determining and/or sending at least one of the following: a first requirement, and the fourth information supported by the first object; and
based on at least one of the second request, the fifth information supported by the first object, the local configuration of the fourth communication device, the seventh information, and the ninth information, determining and/or sending at least one of the following: a second requirement, and the fifth information supported by the first object;
wherein
the fourth information is information used for determining PDU Set information;
the fifth information is information used for determining Data Burst information;
the sixth information is used for indicating at least one of the following: a second communication device supports or does not support a PDU Set information-based operation, and the second communication device supports or does not support PDU Set information; and
the seventh information is used for indicating at least one of the following: the second communication device supports or does not support a Data Burst information-based operation, and the second communication device supports or does not support Data Burst information;
wherein
the first object comprises at least one of the following: a first traffic flow, a first protocol, a first application, a first packet header, and a first QoS flow; and
the first request is used to request at least one of the following:
monitoring PDU Set information corresponding to a data packet;
marking a data packet with PDU Set information that is corresponding to a PDU Set to which the data packet belongs;
marking a second packet header of a data packet with PDU Set information based on information for determining the PDU Set information in a first packet header of the data packet;
applying PDU Set information;
applying a PDU Set information-based operation; and
performing a PDU Set-based operation;
wherein
the first requirement is used to require at least one of the following:
monitoring PDU Set information corresponding to a data packet;
marking a data packet with PDU Set information that is corresponding to a PDU Set to which the data packet belongs;
marking a second packet header of a data packet with PDU Set information based on information for determining the PDU Set information in a first packet header of the data packet;
applying PDU Set information;
applying a PDU Set information-based operation; and
performing a PDU Set-based operation; and
a third requirement is used to require at least one of the following:
marking a data packet with PDU Set information that is corresponding to a PDU Set to which the data packet belongs; and
marking a second packet header of a data packet with PDU Set information based on information for determining the PDU Set information in a first packet header of the data packet;
wherein
the second request is used to request at least one of the following:
monitoring Data burst information corresponding to a data packet;
marking a data packet with Data Burst information that is corresponding to a Data Burst to which the data packet belongs;
marking a second packet header of a data packet with a Data Burst end indicator based on information for determining the Data Burst end indicator in a first packet header of the data packet;
applying Data Burst information;
applying a Data Burst information-based operation;
performing a Data Burst-based operation; and
performing a terminal power-saving operation;
the second requirement is used to require at least one of the following:
monitoring Data burst information corresponding to a data packet;
marking a data packet with Data Burst information that is corresponding to a Data Burst to which the data packet belongs;
marking a second packet header of a data packet with a Data Burst end indicator based on information for determining the Data Burst end indicator in a first packet header of the data packet;
marking a second packet header of a data packet with Data Burst information based on information for determining the Data Burst information in a first packet header of the data packet;
applying Data Burst information;
applying a Data Burst information-based operation;
performing a Data Burst information-based operation; and
performing a terminal power-saving operation; and
a fourth requirement is used to require at least one of the following:
marking a data packet with Data Burst information that is corresponding to a Data Burst to which the data packet belongs; and
marking a second packet header of a data packet with Data Burst information based on information for determining the Data Burst information in a first packet header of the data packet.

33. The method according to claim 32, wherein
in a case that a seventh condition is met, at least one of the following is determined and/or sent: the first requirement and the third requirement; wherein
the seventh condition comprises at least one of the following:
the first request has been obtained;
the fourth information supported by the first object has been obtained;
the local configuration of the fourth communication device comprises the first requirement;
the second communication device supports a PDU Set information-based operation;
the second communication device supports PDU Set information;
the first communication device supports a PDU Set information-based operation;
and
the first communication device supports PDU Set information.

34. The method according to claim 32, wherein
in a case that an eighth condition is met, at least one of the following is determined and/or sent: the second requirement and the fourth requirement; wherein
the eighth condition being met comprises at least one of the following:
the second request has been obtained;
the fifth information supported by the first object has been obtained;
the local configuration of the fourth communication device comprises the second requirement;
the second communication device supports a Data Burst information-based operation;
the second communication device supports Data Burst information;
the first communication device supports a Data Burst information-based operation;
and
the first communication device supports Data Burst information.

35. The method according to any one of claims 32 to 34, wherein the method further comprises:
obtaining, by the fourth communication device, protocol description information;
and
based on at least one of the protocol description information, the first request, the fourth information supported by the first object, the local configuration of the fourth communication device, the sixth information, and the eighth information, determining and/or sending at least one of the following: a first requirement, and the fourth information supported by the first object;
or
based on at least one of the protocol description information, the second request, the fifth information supported by the first object, the local configuration of the fourth communication device, the seventh information, and the ninth information, determining and/or sending at least one of the following: a second requirement, and the fifth information supported by the first object.

36. The method according to any one of claims 32 to 35, wherein
the PDU Set-based operation or the PDU Set information-based operation comprises at least one of the following:
handling a data packet based on a data packet set granularity;
applying PDU Set information;
applying PDU Set QoS;
PDU Set QoS handling;
applying PDU Set importance;
PDU Set importance-based operation;
applying PDU Set Size;
PDU Set Size-based operation;
applying PDU Set end information;
PDU Set end information-based operation;
applying PDU Set start information;
PDU Set start information-based operation;
applying a sequence number of a data packet in a PDU Set;
operation based on a sequence number of a data packet in a PDU Set;
applying a PDU Set sequence number; and
PDU Set sequence number-based operation.

37. The method according to any one of claims 32 to 36, wherein
the PDU Set information-based operation comprises at least one of the following:
handling a data packet based on a data packet set granularity;
applying PDU Set information;
applying PDU Set importance;
PDU Set importance-based operation;
applying PDU Set Size;
PDU Set Size-based operation;
applying PDU Set end information;
PDU Set end information-based operation;
applying PDU Set start information;
PDU Set start information-based operation;
applying a sequence number of a data packet in a PDU Set;
operation based on a sequence number of a data packet in a PDU Set;
applying a PDU Set sequence number; and
PDU Set sequence number-based operation.

38. The method according to any one of claims 32 to 37, wherein
the Data Burst-based operation or Data Burst information-based operation comprises at least one of the following:
a power-saving operation performed on the terminal based on Data Burst information; and
a Data Burst end indicator-based operation.

39. An information marking method, comprising:
performing, by a fifth communication device, a fifth operation, wherein the fifth operation comprises at least one of the following:
sending at least one of the following: a first request, a second request, protocol description information, fourth information supported by a first object, and fifth information supported by the first object; wherein the fourth information is information used for determining PDU Set information, and the fifth information is information for determining a Data Burst;
wherein
the first object comprises at least one of the following: a first traffic flow, a first protocol, a first application, a first packet header, and a first QoS flow;
the first request is used to request at least one of the following:
monitoring PDU Set information corresponding to a data packet;
marking a data packet with PDU Set information that is corresponding to a PDU Set to which the data packet belongs;
marking a second packet header of a data packet with PDU Set information based on information for determining the PDU Set information in a first packet header of the data packet;
applying PDU Set information;
applying a PDU Set information-based operation; and
performing a PDU Set-based operation; and
the second request is used to request at least one of the following:
monitoring Data burst information corresponding to a data packet;
marking a data packet with Data Burst information that is corresponding to a Data Burst to which the data packet belongs;
marking a second packet header of a data packet with a Data Burst end indicator based on information for determining the Data Burst end indicator in a first packet header of the data packet;
applying Data Burst information;
applying a Data Burst information-based operation;
performing a Data Burst-based operation; and
performing a terminal power-saving operation.

40. The method according to claim 39, wherein
the PDU Set-based operation or the PDU Set information-based operation comprises at least one of the following:
handling a data packet based on a data packet set granularity;
applying PDU Set information;
applying PDU Set QoS;
PDU Set QoS handling;
applying PDU Set importance;
PDU Set importance-based operation;
applying PDU Set Size;
PDU Set Size-based operation;
applying PDU Set end information;
PDU Set end information-based operation;
applying PDU Set start information;
PDU Set start information-based operation;
applying a sequence number of a data packet in a PDU Set;
operation based on a sequence number of a data packet in a PDU Set;
applying a PDU Set sequence number; and
PDU Set sequence number-based operation.

41. The method according to claim 39, wherein
the PDU Set information-based operation comprises at least one of the following:
handling a data packet based on a data packet set granularity;
applying PDU Set information;
applying PDU Set importance;
PDU Set importance-based operation;
applying PDU Set Size;
PDU Set Size-based operation;
applying PDU Set end information;
PDU Set end information-based operation;
applying PDU Set start information;
PDU Set start information-based operation;
applying a sequence number of a data packet in a PDU Set;
operation based on a sequence number of a data packet in a PDU Set;
applying a PDU Set sequence number; and
PDU Set sequence number-based operation.

42. The method according to any one of claims 39 to 41, wherein
the Data Burst-based operation or Data Burst information-based operation comprises at least one of the following:
a power-saving operation performed on a terminal based on Data Burst information; and
a Data Burst end indicator-based operation.

43. A communication device, wherein the communication device is a first communication device, comprising:
a processing module, configured to perform a first operation; wherein
the first operation comprises at least one of the following:
sending tenth information, wherein the tenth information is used for indicating at least one of the following: the first communication device supports or does not support a PDU Set information-based operation, and the first communication device supports or does not support PDU Set information;
sending eleventh information, wherein the eleventh information is used for indicating at least one of the following: the first communication device supports or does not support a Data Burst information-based operation, and the first communication device supports or does not support Data Burst information;
a first sub-operation;
a second sub-operation;
a third sub-operation; and
a fourth sub-operation;
wherein
the first sub-operation comprises:
obtaining first information related to packet data unit set PDU Set information, wherein the first information related to PDU Set information comprises at least one of the following: information for requesting to perform a PDU Set information-related operation; and fourth information supported by a first object, wherein the fourth information is information used for determining PDU Set information; and
performing marking on a data packet with corresponding PDU Set information based on the first information related to PDU Set information;
the second sub-operation comprises:
obtaining first information related to data burst (Data Burst) information, wherein the first information related to the Data Burst information comprises at least one of the following: fifth information supported by the first object, information for requesting to perform a Data Burst information-related operation; and fifth information supported by the first object, wherein the fifth information is information for determining a Data Burst; and
based on the first information related to the Data Burst information, performing marking on a data packet with corresponding Data Burst information;
the third sub-operation comprises:
obtaining third information related to PDU Set information, wherein the third information related to PDU Set information is used for requesting at least one of the following: not marking a data packet with PDU Set information corresponding to a PDU Set to which the data packet belongs; not applying PDU Set information; not applying a PDU Set information-based operation; and not performing a PDU Set information-related operation; and
based on the third information related to PDU Set information, performing no marking on a data packet with corresponding PDU Set information, or not performing a PDU Set information-related operation; and
the fourth sub-operation comprises:
obtaining third information related to Data Burst information, wherein the third information related to Data Burst information is used for requesting at least one of the following: not marking Data Burst information corresponding to a Data Burst to which a data packet belongs; not applying Data Burst information; not applying a Data Burst information-based operation; and not performing a Data Burst information-related operation; and
based on the third information related to Data Burst information, performing no marking on a data packet with corresponding Data Burst information, or not performing a Data Burst information-related operation; wherein
the first object comprises at least one of the following: a first traffic flow, a first protocol, a first application, a first packet header, and a first QoS flow.

44. A communication device, wherein the communication device is a second communication device, comprising:
a processing module, configured to perform a second operation, wherein the second operation comprises at least one of the following:
sending sixth information, wherein the sixth information is used for indicating at least one of the following: the second communication device supports or does not support a PDU Set information-based operation, the second communication device supports or does not support PDU Set information, and the second communication device supports or does not support a PDU Set-based operation;
sending seventh information, wherein the seventh information is used for indicating at least one of the following: the second communication device supports or does not support a Data Burst information-based operation, and the second communication device supports or does not support Data Burst information;
sending eighth information;
sending ninth information;
obtaining third information, wherein the third information comprises at least one of the following: second information related to PDU Set information and second information related to Data Burst information; and
performing a second operation based on the third information, comprising at least one of the following:
accepting or rejecting the second information related to PDU Set information;
sending eighth information;
PDU Set information-based operation;
PDU Set-based operation;
accepting or rejecting the second information related to Data Burst information;
sending ninth information;
Data Burst information-based operation; and
Data Burst-based operation;
wherein
the eighth information is used for indicating one of the following: PDU Set information-based operation having been enabled for a first QoS flow, accepting a requirement of applying PDU Set information to the first QoS flow, accepting a requirement of applying a PDU Set information-based operation to the first QoS flow, PDU Set information-based operation having not been enabled for the first QoS flow, rejecting a requirement of applying PDU Set information to the first QoS flow, rejecting a requirement of applying a PDU Set information-based operation to the first QoS flow, accepting performing a PDU Set-based operation on the first QoS flow, rejecting performing a PDU Set-based operation on the first QoS flow, accepting the second information related to PDU Set information, and rejecting the second information related to PDU Set information;
the ninth information is used for indicating one of the following: Data Burst information-based operation having been enabled for the first QoS flow, accepting a requirement of applying Data Burst information to the first QoS flow, accepting a requirement of applying a Data Burst information-based operation to the first QoS flow, Data Burst information-based operation having not been enabled for the first QoS flow, rejecting a requirement of applying Data Burst information to the first QoS flow, rejecting a requirement of applying a Data Burst information-based operation to the first QoS flow, accepting performing a Data Burst-based operation on the first QoS flow, rejecting performing a Data Burst-based operation on the first QoS flow, accepting the second information related to Data Burst information, and rejecting the second information related to Data Burst information; and
the second information related to PDU Set information is used for at least one of the following:
requiring applying PDU Set information;
requiring applying a PDU Set information-based operation;
performing a PDU Set-based operation; and
indicating that a second packet header of a data packet comprises PDU Set information;
wherein
the second information related to Data Burst information is used for at least one of the following:
requiring applying Data Burst information;
requiring applying a Data Burst information-based operation;
Data Burst-based operation; and
indicating that the second packet header of the data packet comprises Data Burst information.

45. A communication device, wherein the communication device is a third communication device, comprising:
a processing module, configured to perform a third operation, wherein the third operation comprises at least one of the following:
obtaining at least one of the following: a first requirement, a second requirement, a third requirement, a fourth requirement, a local configuration of the third communication device, fourth information supported by a first object, fifth information supported by the first object, sixth information, seventh information, eighth information, ninth information, tenth information, and eleventh information;
sending at least one of the following to a fourth communication device: the sixth information, the seventh information, the eighth information, the ninth information, the tenth information, and the eleventh information;
based on at least one of the first requirement, the third requirement, the fourth information supported by the first object, the local configuration of the third communication device, the sixth information, the eighth information, and the tenth information, determining and/or sending at least one of the following: first information related to PDU Set information, second information related to PDU Set information, third information related to PDU Set information, and fourth information supported by the first object;
based on at least one of the second requirement, the fourth requirement, the fifth information supported by the first object, the local configuration of the third communication device, the seventh information, the ninth information, and the eleventh information, determining and/or sending at least one of the following: first information related to Data Burst information, second information related to Data Burst information, third information related to Data Burst information, and the fifth information supported by the first object;
sending at least one of the following to a first communication device: the first information related to PDU Set information, the third information related to PDU Set information, the first information related to Data Burst information, the third information related to Data Burst information, the fourth information supported by the first object, and the fifth information supported by the first object; and
sending at least one of the following to a second communication device: the second information related to PDU Set information, and the second information related to Data Burst information;
wherein
the fourth information is information used for determining PDU Set information;
the fifth information is information used for determining Data Burst information;
the sixth information is used for indicating at least one of the following: the second communication device supports or does not support a PDU Set information-based operation, the second communication device supports or does not support PDU Set information, and the second communication device supports or does not support a PDU Set-based operation;
the seventh information is used for indicating at least one of the following: the second communication device supports or does not support a Data Burst information-based operation, and the second communication device supports or does not support Data Burst information;
the eighth information is used for indicating one of the following: PDU Set information-based operation having been enabled for a first QoS flow, accepting a requirement of applying PDU Set information to the first QoS flow, accepting a requirement of applying a PDU Set information-based operation to the first QoS flow, PDU Set information-based operation having not been enabled for the first QoS flow, rejecting a requirement of applying PDU Set information to the first QoS flow, rejecting a requirement of applying a PDU Set information-based operation to the first QoS flow, accepting performing a PDU Set-based operation on the first QoS flow, rejecting performing a PDU Set-based operation on the first QoS flow, accepting the second information related to PDU Set information, and rejecting the second information related to PDU Set information;
the ninth information is used for indicating one of the following: Data Burst information-based operation having been enabled for the first QoS flow, accepting a requirement of applying Data Burst information to the first QoS flow, accepting a requirement of applying a Data Burst information-based operation to the first QoS flow, Data Burst information-based operation having not been enabled for the first QoS flow, rejecting a requirement of applying Data Burst information to the first QoS flow, rejecting a requirement of applying a Data Burst information-based operation to the first QoS flow, accepting performing a Data Burst-based operation on the first QoS flow, rejecting performing a Data Burst-based operation on the first QoS flow, accepting the second information related to Data Burst information, and rejecting the second information related to Data Burst information;
the tenth information is used for indicating at least one of the following: the first communication device supports or does not support a PDU Set information-based operation, the first communication device supports or does not support PDU Set information, and the first communication device supports or does not support a PDU Set-based operation;
the eleventh information is used for indicating at least one of the following: the first communication device supports or does not support a Data Burst information-based operation, the first communication device supports or does not support Data Burst information, and the first communication device supports or does not support a Data Burst-based operation; and
the first object comprises at least one of the following: a first traffic flow, a first protocol, a first application, a first packet header, and a first QoS flow;
the first requirement is used to require at least one of the following:
marking a data packet with PDU Set information that is corresponding to a PDU Set to which the data packet belongs;
marking a second packet header of a data packet with PDU Set information based on information for determining the PDU Set information in a first packet header of the data packet;
applying PDU Set information;
PDU Set-based operation; and
applying a PDU Set information-based operation;
wherein
the second requirement is used to require at least one of the following:
marking a data packet with Data Burst information that is corresponding to a Data Burst to which the data packet belongs;
marking a second packet header of a data packet with a Data Burst end indicator based on information for determining the Data Burst end indicator in a first packet header of the data packet;
marking a second packet header of a data packet with Data Burst information based on information for determining the Data Burst information in a first packet header of the data packet;
applying Data Burst information; and
applying a Data Burst information-based operation; wherein
the third requirement is used to require at least one of the following:
marking a data packet with PDU Set information that is corresponding to a PDU Set to which the data packet belongs; and
marking a second packet header of a data packet with PDU Set information based on information for determining the PDU Set information in a first packet header of the data packet; wherein
the fourth requirement is used to require at least one of the following:
marking a data packet with Data Burst information that is corresponding to a Data Burst to which the data packet belongs; and
marking a second packet header of a data packet with Data Burst information based on information for determining the Data Burst information in a first packet header of the data packet; wherein
the first information related to PDU Set information is used for requesting at least one of the following:
marking a data packet with PDU Set information that is corresponding to a PDU Set to which the data packet belongs;
marking a second packet header of a data packet with PDU Set information based on information for determining the PDU Set information in a first packet header of the data packet;
applying PDU Set information;
PDU Set-based operation; and
applying a PDU Set information-based operation; wherein
the third information related to PDU Set information is used to request at least one of the following:
not marking a data packet with PDU Set information that is corresponding to a PDU Set to which the data packet belongs;
not applying PDU Set information; and
not applying a PDU Set information-based operation;
wherein
the second information related to PDU Set information is used for at least one of the following:
requiring applying PDU Set information;
requiring applying a PDU Set information-based operation; and
indicating that a second packet header of a data packet comprises PDU Set information;
wherein
the first information related to Data Burst information is used for requesting at least one of the following:
marking a data packet with Data Burst information that is corresponding to a Data Burst to which the data packet belongs;
marking a second packet header of a data packet with a Data Burst end indicator based on information for determining the Data Burst end indicator in a first packet header of the data packet;
applying Data Burst information; and
applying a Data Burst information-based operation;
wherein
the third information related to Data Burst information is used for requesting at least one of the following:
not marking a data packet with Data Burst information that is corresponding to a Data Burst to which the data packet belongs;
not applying Data Burst information; and
not applying a Data Burst information-based operation;
wherein
the second information related to Data Burst information is used for at least one of the following:
requiring applying Data Burst information;
requiring applying a Data Burst information-based operation; and
indicating that the second packet header of the data packet comprises Data Burst information.

46. A communication device, wherein the communication device is a fourth communication device, comprising:
a processing module, configured to perform a fourth operation, wherein the fourth operation comprises at least one of the following:
obtaining at least one of the following: a first request, a second request, a local configuration of the fourth communication device, fourth information supported by a first object, fifth information supported by the first object, sixth information, seventh information, eighth information, and ninth information;
based on at least one of the first request, the fourth information supported by the first object, the local configuration of the fourth communication device, the sixth information, and the eighth information, determining and/or sending at least one of the following: a first requirement, and the fourth information supported by the first object; and
based on at least one of the second request, the fifth information supported by the first object, the local configuration of the fourth communication device, the seventh information, and the ninth information, determining and/or sending at least one of the following: a second requirement, and the fifth information supported by the first object;
wherein
the fourth information is information used for determining PDU Set information;
the fifth information is information used for determining Data Burst information;
the sixth information is used for indicating at least one of the following: a second communication device supports or does not support a PDU Set information-based operation, and the second communication device supports or does not support PDU Set information;
the seventh information is used for indicating at least one of the following: the second communication device supports or does not support a Data Burst information-based operation, and the second communication device supports or does not support Data Burst information;
the first object comprises at least one of the following: a first traffic flow, a first protocol, a first application, a first packet header, and a first QoS flow; and
the first request is used to request at least one of the following:
monitoring PDU Set information corresponding to a data packet;
marking a data packet with PDU Set information that is corresponding to a PDU Set to which the data packet belongs;
marking a second packet header of a data packet with PDU Set information based on information for determining the PDU Set information in a first packet header of the data packet;
applying PDU Set information;
applying a PDU Set information-based operation; and
performing a PDU Set-based operation;
wherein
the first requirement is used to require at least one of the following:
monitoring PDU Set information corresponding to a data packet;
marking a data packet with PDU Set information that is corresponding to a PDU Set to which the data packet belongs;
marking a second packet header of a data packet with PDU Set information based on information for determining the PDU Set information in a first packet header of the data packet;
applying PDU Set information;
applying a PDU Set information-based operation; and
performing a PDU Set-based operation; wherein
a third requirement is used to require at least one of the following:
marking a data packet with PDU Set information that is corresponding to a PDU Set to which the data packet belongs; and
marking a second packet header of a data packet with PDU Set information based on information for determining the PDU Set information in a first packet header of the data packet;
wherein
the second request is used to request at least one of the following:
monitoring Data burst information corresponding to a data packet;
marking a data packet with Data Burst information that is corresponding to a Data Burst to which the data packet belongs;
marking a second packet header of a data packet with a Data Burst end indicator based on information for determining the Data Burst end indicator in a first packet header of the data packet;
applying Data Burst information;
applying a Data Burst information-based operation;
performing a Data Burst-based operation; and
performing a terminal power-saving operation; wherein
the second requirement is used to require at least one of the following:
monitoring Data burst information corresponding to a data packet;
marking a data packet with Data Burst information that is corresponding to a Data Burst to which the data packet belongs;
marking a second packet header of a data packet with a Data Burst end indicator based on information for determining the Data Burst end indicator in a first packet header of the data packet;
marking a second packet header of a data packet with Data Burst information based on information for determining the Data Burst information in a first packet header of the data packet;
applying Data Burst information;
applying a Data Burst information-based operation;
performing a Data Burst information-based operation; and
performing a terminal power-saving operation; wherein
a fourth requirement is used to require at least one of the following:
marking a data packet with Data Burst information that is corresponding to a Data Burst to which the data packet belongs; and
marking a second packet header of a data packet with Data Burst information based on information for determining the Data Burst information in a first packet header of the data packet.

47. A communication device, wherein the communication device is a fifth communication device, comprising:
a processing module, configured to perform a fifth operation, wherein the fifth operation comprises at least one of the following:
sending at least one of the following: a first request, a second request, protocol description information, fourth information supported by a first object, and fifth information supported by the first object; wherein the fourth information is information used for determining PDU Set information, and the fifth information is information for determining a Data Burst;
wherein
the first object comprises at least one of the following: a first traffic flow, a first protocol, a first application, a first packet header, and a first QoS flow;
the first request is used to request at least one of the following:
monitoring PDU Set information corresponding to a data packet;
marking a data packet with PDU Set information that is corresponding to a PDU Set to which the data packet belongs;
marking a second packet header of a data packet with PDU Set information based on information for determining the PDU Set information in a first packet header of the data packet;
applying PDU Set information;
applying a PDU Set information-based operation; and
performing a PDU Set-based operation; and
the second request is used to request at least one of the following:
monitoring Data burst information corresponding to a data packet;
marking a data packet with Data Burst information that is corresponding to a Data Burst to which the data packet belongs;
marking a second packet header of a data packet with a Data Burst end indicator based on information for determining the Data Burst end indicator in a first packet header of the data packet;
applying Data Burst information;
applying a Data Burst information-based operation;
performing a Data Burst-based operation; and
performing a terminal power-saving operation.

48. A communication device, comprising a processor and a memory, wherein the memory stores a program or instructions capable of running on the processor, and when the program or the instructions are executed by the processor, the steps of the information marking method according to any one of claims 1 to 12 are implemented, or the steps of the information marking method according to any one of claims 13 to 23 are implemented, or the steps of the information marking method according to any one of claims 24 to 31 are implemented, or the steps of the information marking method according to any one of claims 32 to 38 are implemented, or the steps of the information marking method according to any one of claims 39 to 42 are implemented.

49. A readable storage medium, wherein a program or instructions are stored in the readable storage medium; and when the program or the instructions are executed by a processor, the steps of the information marking method according to any one of claims 1 to 12 are implemented, or the steps of the information marking method according to any one of claims 13 to 23 are implemented, or the steps of the information marking method according to any one of claims 24 to 31 are implemented, or the steps of the information marking method according to any one of claims 32 to 38 are implemented, or the steps of the information marking method according to any one of claims 39 to 42 are implemented.
